# EUROPEAN PATENT SPECIFICATION

(11) **EP 3 998 694 B1**
(45) Date of publication and mention of the grant of the patent: **20.12.2023**
(21) Application number: 20837493.4
(22) Date of filing: 19.06.2020
(51) Int. Cl.: H02K 17/16, H02K 3/487, H02K 17/12, H02K 1/16, H02K 9/06

(54) **STATOR LAMINATION HAVING SLOTS OF UNEQUAL SIZE FOR USE IN THREE-PHASE ASYNCHRONOUS MOTOR HAVING LOW HARMONIC WAVE WINDINGS HAVING UNEQUAL NUMBER OF TURNS**
STATORBLECH MIT SCHLITZEN UNGLEICHER GRÖSSE ZUR VERWENDUNG IN EINEM DREHSTROM-ASYNCHRONMOTOR MIT WICKLUNGEN MIT NIEDRIGER OBERWELLENZAHL UND UNGLEICHER WINDUNGSZAHL
TÔLE STATORIQUES AYANT DES ENCOCHES DE TAILLE INÉGALE POUR UNE UTILISATION DANS UN MOTEUR ASYNCHRONE TRIPHASÉ AYANT DES ENROULEMENTS À FAIBLE ONDE HARMONIQUE AYANT UN NOMBRE INÉGAL DE SPIRES

(30) Priority: 09.07.2019 CN 201910612448; 09.07.2019 CN 201910612482; 09.07.2019 CN 201910612469; 09.07.2019 CN 201910612481; 09.07.2019 CN 201910612476; 09.07.2019 CN 201910612449
(43) Date of publication of application: 18.05.2022
(73) Proprietor: Shanxi Electric Motor Manufacturing Co., Ltd., Taiyuan, Shanxi 030000 (CN)
(72) Inventor: ZHANG, Wenhe, Taiyuan, Shanxi 030000 (CN); MA, Liya, Taiyuan, Shanxi 030000 (CN); CHEN, Pu, Taiyuan, Shanxi 030000 (CN); JIA, Jianping, Taiyuan, Shanxi 030000 (CN); WU, Zeyong, Taiyuan, Shanxi 030000 (CN); DENG, Hongwei, Taiyuan, Shanxi 030000 (CN); ZHANG, Wenhua, Taiyuan, Shanxi 030000 (CN); JIA, Yuqing, Taiyuan, Shanxi 030000 (CN); LIU, Lanbing, Taiyuan, Shanxi 030000 (CN); WU, Dongmin, Taiyuan, Shanxi 030000 (CN); YANG, Chuangzhao, Taiyuan, Shanxi 030000 (CN); GUO, Caiye, Taiyuan, Shanxi 030000 (CN); MA, Changai,, Taiyuan, Shanxi 030000 (CN); CHENG, Penghang, Taiyuan, Shanxi 030000 (CN); LIU, Huizhen, Taiyuan, Shanxi 030000 (CN); PEI, Liangyu, Taiyuan, Shanxi 030000 (CN); ZHI, Yan, Taiyuan, Shanxi 030000 (CN); WEN, Zepeng, Taiyuan, Shanxi 030000 (CN); LI, Sisi, Taiyuan, Shanxi 030000 (CN); LI, Xiaozhong, Taiyuan, Shanxi 030000 (CN); YUE, Jin, Taiyuan, Shanxi 030000 (CN); BAI, Xiaojun, Taiyuan, Shanxi 030000 (CN); XING, Tiantian, Taiyuan, Shanxi 030000 (CN)
(74) Representative: Köllner & Partner mbB
(86) International application number: PCT/CN2020/096955
(87) International publication number: WO 2021/004251

(56) References cited:
- CN-A- 107 863 828
- CN-A- 110 289 709
- CN-A- 110 289 710
- CN-A- 110 289 711
- CN-A- 110 289 712
- CN-A- 110 445 267
- CN-A- 110 535 257
- CN-B- 103 915 962
- CN-U- 201 690 331
- CN-U- 202 524 180
- CN-U- 204 425 064
- CN-U- 207 743 774
- CN-U- 207 743 774
- CN-U- 210 985 754
- CN-U- 210 985 755
- US-A1- 2006 130 313
- US-A1- 2007 075 604

## Description

### RELATED APPLICATIONS

The present application claims all the priority benefits of the Chinese patent application Nos. 201910612448.1 entitled "A stator lamination with large and small slots", 201910612482.9 entitled "A stator lamination with 4 large and small slots per pole and phase", 201910612469.3 entitled "A stator lamination with 6 large and small slots per pole and phase", 201910612481.4 entitled "A stator lamination with 7 large and small slots per pole and phase", 201910612476.3 entitled "A stator lamination with 8 large and small slots per pole and phase", 201910612449.6 entitled "A stator lamination with 9 large and small slots per pole and phase", which were all filed on July 9, 2019 before the National Intellectual Property Administration, PRC.

### FIELD OF THE INVENTION

The present invention belongs to the technical field of three-phase asynchronous motor, and in particular relates to a stator lamination with unequal slots for use in three-phase asynchronous motor having low harmonic and unequal turns winding.

### BACKGROUND OF THE INVENTION

There are five kinds of losses in three-phase asynchronous motor, which are stator copper loss, rotor copper loss, core loss, mechanical loss and stray loss. In order to make the motor efficiency reach different levels such as high efficiency, super efficiency, ultra-high efficiency, etc., the inventor of the invention analyzes and judges each kind loss and takes corresponding measures to reduce the losses.

In the three-phase asynchronous motor having low harmonic and unequal turns winding, the stator coil adopts the form of unequal turn and low harmonic winding, which can not only reduce the actual resistance of the winding and reduce the stator copper loss, but also effectively reduce the stray loss of the motor caused by harmonics. When the number of turns of each coil is different, the same slot shape of the stator lamination will cause different slot fullness. As a result, a stator lamination with unequal slots came into being (see for example CN 207 743 774 U). However, there is a need to further refine how to make unequal slots in the same stator lamination correspond to different yoke size, in order to optimize the embedding process so as to make the slot fullness in each slot basically consistent and effectively improve the embedding quality, and to reduce motor stray loss, motor temperature rise, noise, etc.

### SUMMARY OF THE INVENTION

The invention aims to develop and improve the technical level of the slot shape design of existing stator lamination, effectively reduce the stray loss of the three-phase asynchronous motor, reduce the temperature rise and noise of the motor, and improve the motor efficiency.

In the first aspect of the invention, there is provided a stator lamination with unequal slots for use in three-phase asynchronous motor having low harmonic and unequal turns winding, in which the stator lamination includes a ring-shaped substrate, wherein:
at least six stator slot groups for placing copper wire are radially and uniformly arranged on the inner ring surface of the substrate along the circumference direction of the substrate, the number of stator slots per pole and phase in each stator slot group is three to nine, including at least one large stator slot and at least two small stator slots, the area of the small stator slot is 80% - 95% of that of the large stator slot and the center angles between the adjacent stator slots are equal;
the arrangement of the large stator slot and the small stator slot in each stator slot group is as follows: the at least one large stator slot is arranged in the middle of the stator slot group, and the two sides of the large stator slot are respectively symmetrically arranged with one or more small stator slots;
the large stator slot and the small stator slot are semi closed pear shaped slots composed of a rectangular slot, a first isosceles trapezoidal slot, a second isosceles trapezoidal slot and a semicircle slot, wherein, one end of the large stator slot and the small stator slot close to the inner ring surface of the substrate is set as the rectangular slot, the width of the rectangular slot is 2.5-4.2mm, the height of the rectangular slot is 0.9-2.0mm, the second isosceles trapezoidal slot is arranged at the end of the first isosceles trapezoidal slot far from the center of the substrate, the upper base of the first isosceles trapezoidal slot is collinear with the long side of the rectangular slot, the lower base of the first isosceles trapezoidal slot is collinear with the upper base of the second isosceles trapezoidal slot, the width of the lower base of the first isosceles trapezoidal slot is 5-10mm, the angle between the hypotenuse and the lower base of the first isosceles trapezoidal slot is 20°-30°, the width of the lower base of the second isosceles trapezoidal slot is 8-15mm, and the height of the second isosceles trapezoidal slot is 12-40mm, the semicircle slot is arranged at the lower base of the second isosceles trapezoidal slot, and the diameter of the semicircle slot is equal to the width of the lower base of the second isosceles trapezoidal slot.

Preferably, in the stator lamination with unequal slots for use in three-phase asynchronous motor having low harmonic and unequal turns winding in the first aspect of the invention, the number of stator slots per pole and phase in each stator slot group is three, including one large stator slot and two small stator slots, the one large stator slot is arranged in the middle of the stator slot group, and the two sides of the one large stator slot are respectively symmetrically arranged with one small stator slot, the one small stator slot on one side of the large stator slot and the one small stator slot on the other side of the large stator slot are symmetrically arranged with respect to the large stator slot in the middle position.

Preferably, in the stator lamination with unequal slots for use in three-phase asynchronous motor having low harmonic and unequal turns winding in the first aspect of the invention, the number of stator slots per pole and phase in each stator slot group is four, including two large stator slots and two small stator slots, the two large stator slots are arranged in the middle of the stator slot group, and the two sides of the two large stator slots are respectively symmetrically arranged with one small stator slot, the one small stator slot on one side of the two large stator slots and the one small stator slot on the other side of the two large stator slots are symmetrically arranged with respect to the center line of the two large stator slots along the circumference direction of the substrate.

Preferably, in the stator lamination with unequal slots for use in three-phase asynchronous motor having low harmonic and unequal turns winding in the first aspect of the invention, the number of stator slots per pole and phase in each stator slot group is five, and the number and arrangement of the large stator slots and the small stator slots are one or more of the following forms:
(i) the five stator slots per pole and phase in each stator slot group include one large stator slot and four small stator slots, the one large stator slot is arranged in the middle of the stator slot group, and the two sides of the large stator slot are respectively symmetrically arranged with two small stator slots, the two small stator slots on one side of the large stator slot and the two small stator slots on the other side of the large stator slot are symmetrically arranged with respect to the large stator slot in the middle position;
(ii) the five stator slots per pole and phase in each stator slot group include three large stator slot and two small stator slots, the three large stator slot are arranged in the middle of the stator slot group, and the two sides of the three large stator slots are respectively symmetrically arranged with one small stator slot, the one small stator slot on one side of the three large stator slots and the one small stator slot on the other side of the three large stator slots are symmetrically arranged with respect to the large stator slot in the middle position.

Preferably, in the stator lamination with unequal slots for use in three-phase asynchronous motor having low harmonic and unequal turns winding in the first aspect of the invention, the number of stator slots per pole and phase in each stator slot group is six, and the number and arrangement of the large stator slots and the small stator slots are one or more of the following forms:
(i) the six stator slots per pole and phase in each stator slot group include two large stator slots and four small stator slots, the two large stator slots are arranged in the middle of the stator slot group, and the two sides of the two large stator slots are respectively symmetrically arranged with two small stator slots, the two small stator slots on one side of the two large stator slots and the two small stator slots on the other side of the two large stator slots are symmetrically arranged with respect to the center line of the two large stator slots along the circumference direction of the substrate;
(ii) the six stator slots per pole and phase in each stator slot group include four large stator slots and two small stator slots, the four large stator slots are arranged in the middle of the stator slot group, and the two sides of the four large stator slots are respectively symmetrically arranged with one small stator slot, the one small stator slot on one side of the four large stator slots and the one small stator slot on the other side of the four large stator slots are symmetrically arranged with respect to the center line of the four large stator slots along the circumference direction of the substrate.

Preferably, in the stator lamination with unequal slots for use in three-phase asynchronous motor having low harmonic and unequal turns winding in the first aspect of the invention, the number of stator slots per pole and phase in each stator slot group is seven, and the number and arrangement of the large stator slots and the small stator slots are one or more of the following forms:
(i) the seven stator slots per pole and phase in each stator slot group include one large stator slot and six small stator slots, the one large stator slot is arranged in the middle of the stator slot group, and the two sides of the large stator slot are respectively symmetrically arranged with three small stator slots, the three small stator slots on one side of the large stator slot and the three small stator slots on the other side of the large stator slot are symmetrically arranged with respect to the large stator slot in the middle position;
(ii) the seven stator slots per pole and phase in each stator slot group include three large stator slots and four small stator slots, the three large stator slots are arranged in the middle of the stator slot group, and the two sides of the three large stator slots are respectively symmetrically arranged with two small stator slots, the two small stator slots on one side of the three large stator slots and the two small stator slots on the other side of the three large stator slots are symmetrically arranged with respect to the large stator slot in the middle position;
(iii) the seven stator slots per pole and phase in each stator slot group include five large stator slots and two small stator slots, the five large stator slots are arranged in the middle of the stator slot group, and the two sides of the five large stator slots are respectively symmetrically arranged with one small stator slot, the one small stator slot on one side of the five large stator slots and the one small stator slot on the other side of the five large stator slots are symmetrically arranged with respect to the large stator slot in the middle position.

Preferably, in the stator lamination with unequal slots for use in three-phase asynchronous motor having low harmonic and unequal turns winding in the first aspect of the invention, the number of stator slots per pole and phase in each stator slot group is eight, and the number and arrangement of the large stator slots and the small stator slots are one or more of the following forms:
(i) the eight stator slots per pole and phase in each stator slot group include two large stator slots and six small stator slots, the two large stator slots are arranged in the middle of the stator slot group, and the two sides of the two large stator slots are respectively symmetrically arranged with three small stator slots, the three small stator slots on one side of the two large stator slots and the three small stator slots on the other side of the two large stator slots are symmetrically arranged with respect to the center line of the two large stator slots along the circumference direction of the substrate;
(ii) the eight stator slots per pole and phase in each stator slot group include four large stator slots and four small stator slots, the four large stator slots are arranged in the middle of the stator slot group, and the two sides of the four large stator slots are respectively symmetrically arranged with two small stator slots, the two small stator slots on one side of the four large stator slots and the two small stator slots on the other side of the four large stator slots are symmetrically arranged with respect to the center line of the four large stator slots along the circumference direction of the substrate;
(iii) the eight stator slots per pole and phase in each stator slot group include six large stator slots and two small stator slots, the six large stator slots are arranged in the middle of the stator slot group, and the two sides of the six large stator slots are respectively symmetrically arranged with one small stator slot, the one small stator slot on one side of the six large stator slots and the one small stator slot on the other side of the six large stator slots are symmetrically arranged with respect to the center line of the six large stator slots along the circumference direction of the substrate.

Preferably, in the stator lamination with unequal slots for use in three-phase asynchronous motor having low harmonic and unequal turns winding in the first aspect of the invention, the number of stator slots per pole and phase in each stator slot group is nine, and the number and arrangement of the large stator slots and the small stator slots are one or more of the following forms:
(i) the nine stator slots per pole and phase in each stator slot group include one large stator slot and eight small stator slots, the one large stator slot is arranged in the middle of the stator slot group, and the two sides of the large stator slot are respectively symmetrically arranged with four small stator slots, the four small stator slots on one side of the large stator slot and the four small stator slots on the other side of the large stator slot are symmetrically arranged with respect to the large stator slot in the middle position;
(ii) the nine stator slots per pole and phase in each stator slot group include three large stator slots and six small stator slots, the three large stator slots are arranged in the middle of the stator slot group, and the two sides of the three large stator slots are respectively symmetrically arranged with three small stator slots, the three small stator slots on one side of the three large stator slots and the three small stator slots on the other side of the three large stator slots are symmetrically arranged with respect to the large stator slot in the middle position;
(iii) the nine stator slots per pole and phase in each stator slot group include five large stator slots and four small stator slots, the five large stator slots are arranged in the middle of the stator slot group, and the two sides of the five large stator slots are respectively symmetrically arranged with two small stator slots, the two small stator slots on one side of the five large stator slots and the two small stator slots on the other side of the five large stator slots are symmetrically arranged with respect to the large stator slot in the middle position;
(iv) the nine stator slots per pole and phase in each stator slot group include seven large stator slots and two small stator slots, the seven large stator slots are arranged in the middle of the stator slot group, and the two sides of the seven large stator slots are respectively symmetrically arranged with one small stator slot, the one small stator slot on one side of the seven large stator slots and the one small stator slot on the other side of the seven large stator slots are symmetrically arranged with respect to the large stator slot in the middle position.

In the second aspect of the invention, there is provided a stator lamination with unequal slots for use in three-phase asynchronous motor having low harmonic and unequal turns winding, in which the stator lamination includes a ring-shaped substrate, wherein:
at least six stator slot groups for placing copper wire are radially and uniformly arranged on the inner ring surface of the substrate along the circumference direction of the substrate, the number of stator slots per pole and phase in each stator slot group is five to nine, including at least one large stator slot, at least two middle stator slots and at least two small stator slots, the area of the small stator slot is 80% - 95% of that of the large stator slot, the area of the middle stator slot is between that of the small stator slot and the large stator slot, and the center angles between the adjacent stator slots are equal;
the arrangement of the large stator slot, the middle stator slot and the small stator slot in each stator slot group is as follows: the at least one large stator slot is arranged in the middle of the stator slot group, the two sides of the large stator slot are respectively symmetrically arranged with one or more small stator slots, and between the large stator slot and the small stator slot are respectively symmetrically arranged with one or more middle stator slots;
the large stator slot, the middle stator slot and the small stator slot are semi closed pear shaped slots composed of a rectangular slot, a first isosceles trapezoidal slot, a second isosceles trapezoidal slot and a semicircle slot, wherein, one end of the large stator slot, the middle stator slot and the small stator slot close to the inner ring surface of the substrate is set as the rectangular slot, the width of the rectangular slot is 2.5-4.2mm, the height of the rectangular slot is 0.9-2.0mm, the second isosceles trapezoidal slot is arranged at the end of the first isosceles trapezoidal slot far from the center of the substrate, the upper base of the first isosceles trapezoidal slot is collinear with the long side of the rectangular slot, the lower base of the first isosceles trapezoidal slot is collinear with the upper base of the second isosceles trapezoidal slot, the width of the lower base of the first isosceles trapezoidal slot is 5-10mm, the angle between the hypotenuse and the lower base of the first isosceles trapezoidal slot is 20°-30°, the width of the lower base of the second isosceles trapezoidal slot is 8-15mm, and the height of the second isosceles trapezoidal slot is 12-40mm, the semicircle slot is arranged at the lower base of the second isosceles trapezoidal slot, and the diameter of the semicircle slot is equal to the width of the lower base of the second isosceles trapezoidal slot.

Preferably, in the stator lamination with unequal slots for use in three-phase asynchronous motor having low harmonic and unequal turns winding in the second aspect of the invention, the number of stator slots per pole and phase in each stator slot group is five, including one large stator slot, two middle stator slots and two small stator slots, the one large stator slot is arranged in the middle of the stator slot group, the two sides of the large stator slot are respectively symmetrically arranged with one small stator slot, and between the large stator slot and the small stator slot are respectively symmetrically arranged with one middle stator slot, the one small stator slot on one side of the large stator slot and the one small stator slot on the other side of the large stator slot are symmetrically arranged with respect to the large stator slot in the middle position, and the one middle stator slot on one side of the large stator slot and the one middle stator slot on the other side of the large stator slot are symmetrically arranged with respect to the large stator slot in the middle position.

Preferably, in the stator lamination with unequal slots for use in three-phase asynchronous motor having low harmonic and unequal turns winding in the second aspect of the invention, the number of stator slots per pole and phase in each stator slot group is six, including two large stator slots, two middle stator slots and two small stator slots, the two large stator slots are arranged in the middle of the stator slot group, the two sides of the two large stator slots are respectively symmetrically arranged with one small stator slot, and between the large stator slot and the small stator slot are respectively symmetrically arranged with one middle stator slot, the one small stator slot on one side of the two large stator slots and the one small stator slot on the other side of the two large stator slots are symmetrically arranged with respect to the center line of the two large stator slots along the circumference direction of the substrate, and the one middle stator slot on one side of the two large stator slots and the one middle stator slot on the other side of the two large stator slots are symmetrically arranged with respect to the center line of the two large stator slots along the circumference direction of the substrate.

Preferably, in the stator lamination with unequal slots for use in three-phase asynchronous motor having low harmonic and unequal turns winding in the second aspect of the invention, the number of stator slots per pole and phase in each stator slot group is seven, and the number and arrangement of the large stator slots, the middle stator slot and the small stator slots are one or more of the following forms:
(i) the seven stator slots per pole and phase in each stator slot group include one large stator slot, two middle stator slots and four small stator slots, the one large stator slot is arranged in the middle of the stator slot group, the two sides of the large stator slot are respectively symmetrically arranged with two small stator slots, and between the large stator slot and the small stator slot are respectively symmetrically arranged with one middle stator slot, the two small stator slots on one side of the large stator slot and the two small stator slots on the other side of the large stator slot are symmetrically arranged with respect to the large stator slot in the middle position, and the one middle stator slot on one side of the large stator slot and the one middle stator slot on the other side of the large stator slot are symmetrically arranged with respect to the large stator slot in the middle position;
(ii) the seven stator slots per pole and phase in each stator slot group include three large stator slots, two middle stator slots and two small stator slots, the three large stator slots are arranged in the middle of the stator slot group, the two sides of the three large stator slots are respectively symmetrically arranged with one small stator slot, and between the large stator slot and the small stator slot are respectively symmetrically arranged with one middle stator slot, the one small stator slot on one side of the three large stator slots and the one small stator slot on the other side of the three large stator slots are symmetrically arranged with respect to the large stator slot in the middle position, and the one middle stator slot on one side of the three large stator slots and the one middle stator slot on the other side of the three large stator slots are symmetrically arranged with respect to the large stator slot in the middle position;
(iii) the seven stator slots per pole and phase in each stator slot group include one large stator slot, four middle stator slots and two small stator slots, the one large stator slot is arranged in the middle of the stator slot group, the two sides of the large stator slot are respectively symmetrically arranged with one small stator slot, and between the large stator slot and the small stator slot are respectively symmetrically arranged with two middle stator slots, the one small stator slot on one side of the large stator slot and the one small stator slot on the other side of the large stator slot are symmetrically arranged with respect to the large stator slot in the middle position, and the two middle stator slots on one side of the large stator slot and the two middle stator slots on the other side of the large stator slot are symmetrically arranged with respect to the large stator slot in the middle position.

Preferably, in the stator lamination with unequal slots for use in three-phase asynchronous motor having low harmonic and unequal turns winding in the second aspect of the invention, the number of stator slots per pole and phase in each stator slot group is eight, and the number and arrangement of the large stator slots, the middle stator slot and the small stator slots are one or more of the following forms:
(i) the eight stator slots per pole and phase in each stator slot group include four large stator slots, two middle stator slots and two small stator slots, the four large stator slots are arranged in the middle of the stator slot group, the two sides of the four large stator slots are respectively symmetrically arranged with one small stator slot, and between the large stator slot and the small stator slot are respectively symmetrically arranged with one middle stator slot, the one small stator slot on one side of the four large stator slots and the one small stator slot on the other side of the four large stator slots are symmetrically arranged with respect to the center line of the four large stator slots along the circumference direction of the substrate, and the one middle stator slot on one side of the four large stator slots and the one middle stator slot on the other side of the four large stator slots are symmetrically arranged with respect to the center line of the four large stator slots along the circumference direction of the substrate;
(ii) the eight stator slots per pole and phase in each stator slot group include two large stator slots, four middle stator slots and two small stator slots, the two large stator slots are arranged in the middle of the stator slot group, the two sides of the two large stator slots are respectively symmetrically arranged with one small stator slot, and between the large stator slot and the small stator slot are respectively symmetrically arranged with two middle stator slots, the one small stator slot on one side of the two large stator slots and the one small stator slot on the other side of the two large stator slots are symmetrically arranged with respect to the center line of the two large stator slots along the circumference direction of the substrate, and the two middle stator slots on one side of the two large stator slots and the two middle stator slots on the other side of the two large stator slots are symmetrically arranged with respect to the center line of the two large stator slots along the circumference direction of the substrate.

Preferably, in the stator lamination with unequal slots for use in three-phase asynchronous motor having low harmonic and unequal turns winding in the second aspect of the invention, the number of stator slots per pole and phase in each stator slot group is nine, and the number and arrangement of the large stator slots, the middle stator slot and the small stator slots are one or more of the following forms:
(i) the nine stator slots per pole and phase in each stator slot group include one large stator slot, two middle stator slots and six small stator slots, the one large stator slot is arranged in the middle of the stator slot group, the two sides of the large stator slot are respectively symmetrically arranged with three small stator slots, and between the large stator slot and the small stator slot are respectively symmetrically arranged with one middle stator slot, the three small stator slots on one side of the large stator slot and the three small stator slots on the other side of the large stator slot are symmetrically arranged with respect to the large stator slot in the middle position, and the one middle stator slot on one side of the large stator slot and the one middle stator slot on the other side of the large stator slot are symmetrically arranged with respect to the large stator slot in the middle position;
(ii) the nine stator slots per pole and phase in each stator slot group include three large stator slots, two middle stator slots and four small stator slots, the three large stator slots are arranged in the middle of the stator slot group, the two sides of the three large stator slots are respectively symmetrically arranged with two small stator slots, and between the large stator slot and the small stator slot are respectively symmetrically arranged with one middle stator slot, the two small stator slots on one side of the three large stator slots and the two small stator slots on the other side of the three large stator slots are symmetrically arranged with respect to the large stator slot in the middle position, and the one middle stator slot on one side of the three large stator slots and the one middle stator slot on the other side of the three large stator slots are symmetrically arranged with respect to the large stator slot in the middle position;
(iii) the nine stator slots per pole and phase in each stator slot group include five large stator slots, two middle stator slots and two small stator slots, the five large stator slots are arranged in the middle of the stator slot group, the two sides of the five large stator slots are respectively symmetrically arranged with one small stator slot, and between the large stator slot and the small stator slot are respectively symmetrically arranged with one middle stator slot, the one small stator slot on one side of the five large stator slots and the one small stator slot on the other side of the five large stator slots are symmetrically arranged with respect to the large stator slot in the middle position, and the one middle stator slot on one side of the five large stator slots and the one middle stator slot on the other side of the five large stator slots are symmetrically arranged with respect to the large stator slot in the middle position;
(iv) the nine stator slots per pole and phase in each stator slot group include one large stator slot, four middle stator slots and four small stator slots, the one large stator slot is arranged in the middle of the stator slot group, the two sides of the large stator slot are respectively symmetrically arranged with two small stator slots, and between the large stator slot and the small stator slot are respectively symmetrically arranged with two middle stator slots, the two small stator slots on one side of the large stator slot and the two small stator slots on the other side of the large stator slot are symmetrically arranged with respect to the large stator slot in the middle position, and the two middle stator slots on one side of the large stator slot and the two middle stator slots on the other side of the large stator slot are symmetrically arranged with respect to the large stator slot in the middle position;
(v) the nine stator slots per pole and phase in each stator slot group include three large stator slots, four middle stator slots and two small stator slots, the three large stator slots are arranged in the middle of the stator slot group, the two sides of the three large stator slots are respectively symmetrically arranged with one small stator slot, and between the large stator slot and the small stator slot are respectively symmetrically arranged with two middle stator slots, the one small stator slot on one side of the three large stator slots and the one small stator slot on the other side of the three large stator slots are symmetrically arranged with respect to the large stator slot in the middle position, and the two middle stator slots on one side of the three large stator slots and the two middle stator slots on the other side of the three large stator slots are symmetrically arranged with respect to the large stator slot in the middle position;
(vi) the nine stator slots per pole and phase in each stator slot group include one large stator slot, six middle stator slots and two small stator slots, the one large stator slot is arranged in the middle of the stator slot group, the two sides of the large stator slot are respectively symmetrically arranged with one small stator slot, and between the large stator slot and the small stator slot are respectively symmetrically arranged with three middle stator slots, the one small stator slot on one side of the large stator slot and the one small stator slot on the other side of the large stator slot are symmetrically arranged with respect to the large stator slot in the middle position, and the three middle stator slots on one side of the large stator slot and the three middle stator slots on the other side of the large stator slot are symmetrically arranged with respect to the large stator slot in the middle position.

Preferably, in the stator lamination with unequal slots for use in three-phase asynchronous motor having low harmonic and unequal turns winding both in the first and second aspect of the invention, 8-16 buckle grooves are uniformly arranged on the outer ring surface of the substrate along the circumference direction of the substrate to install the buckle, the lower base of the buckle groove is set as a straight line, the upper base of the buckle groove is naturally opened along the circumference direction of the substrate, the width of the buckle groove is 14-25mm, the height of the buckle groove is 3-5 mm, the angle between the hypotenuse and the base of the buckle groove is 15°-25°, and a processing groove is set at the bottom of any one of the buckle groove.

Compared with the prior art, the beneficial effect of the invention is: in the stator lamination with unequal slots for use in three-phase asynchronous motor having low harmonic and unequal turns winding, the number of stator slots per pole and phase in each stator slot group may be three, four, five, six, seven, eight or nine, this can greatly improve the embedding process and quality of the unequal turns winding and therefore the invention can greatly improve the utilization rate of stator slot, improve the distribution mechanism of yoke magnetic density of stator lamination, reduce the stray loss of motor, improve the starting performance of motor, reduce the temperature rise of motor, improve the efficiency of motor, and save the overall cost of motor. According to the actual test, the copper saving in the motor applied the stator lamination with unequal slots of the present invention is 0.1-0.25kg/kW, and the efficiency of the motor reaches the efficiency value of IE5 standard specified in IEC60034-30-1:2014 "energy efficiency classification of single speed and three-phase cage induction motor" issued by IEC (International Electro Technical Commission).

### BRIEF DESCRIPTION OF THE DRAWINGS

In order to explain the embodiments of the invention or the technical solutions in the prior art more clearly, the following will give a brief introduction to the drawings needed in the embodiments or the prior art description. It is obvious that the drawings in the following description are only some embodiments of the invention, and for those skilled in the art, they can also give other drawings based on the drawings without creative works. In the drawings:
Fig. 1 is a structural diagram of a stator lamination with unequal slots for use in three-phase asynchronous motor having low harmonic and unequal turns winding in embodiment 1 of the invention.
Fig. 2 is a schematic diagram of the slot shape comparison after partial amplification and superposition of part I and part II in Fig. 1, in which the double dot line is the slot shape contour line of small stator slot and the solid line is the slot shape contour line of large stator slot.
Fig. 3 is a partial enlarged structural diagram of Part III in Fig. 1, showing the buckle groove and the processing groove.
Fig. 4 is a structural diagram of a stator lamination with unequal slots for use in three-phase asynchronous motor having low harmonic and unequal turns winding in embodiment 2 of the invention.
Fig. 5 is a schematic diagram of the slot shape comparison after partial amplification and superposition of part I and part II in Fig. 4, in which the double dot line is the slot shape contour line of small stator slot and the solid line is the slot shape contour line of large stator slot.
Fig. 6 is a partial enlarged structural diagram of Part III in Fig. 4, showing the buckle groove and the processing groove.
Fig. 7 is a structural diagram of a stator lamination with unequal slots for use in three-phase asynchronous motor having low harmonic and unequal turns winding in embodiment 3 of the invention.
Fig. 8 is a schematic diagram of the slot shape comparison after partial amplification and superposition of part I and part II in Fig. 7, in which the double dot line is the slot shape contour line of small stator slot and the solid line is the slot shape contour line of large stator slot.
Fig. 9 is a partial enlarged structural diagram of Part III in Fig. 7, showing the buckle groove and the processing groove.
Fig. 10 is a structural diagram of a stator lamination with unequal slots for use in three-phase asynchronous motor having low harmonic and unequal turns winding in embodiment 4 of the invention.
Fig. 11 is a structural diagram of a stator lamination with unequal slots for use in three-phase asynchronous motor having low harmonic and unequal turns winding in embodiment 5 of the invention.
Fig. 12 is a schematic diagram of the slot shape comparison structure after the partial amplification and superposition of part I, part II and part III in Fig. 11, in which the double dot line is the slot shape contour line of small stator slot, the dotted line is the slot shape contour line of middle stator slot, and the solid line is the slot shape contour line of large stator slot.
Fig. 13 is a structural diagram of a stator lamination with unequal slots for use in three-phase asynchronous motor having low harmonic and unequal turns winding in embodiment 6 of the invention.
Fig. 14 is a schematic diagram of the slot shape comparison after partial amplification and superposition of part I and part II in Fig. 13, in which the double dot line is the slot shape contour line of small stator slot and the solid line is the slot shape contour line of large stator slot.
Fig. 15 is a partial enlarged structural diagram of Part III in Fig. 13, showing the buckle groove and the processing groove.
Fig. 16 is a structural diagram of a stator lamination with unequal slots for use in three-phase asynchronous motor having low harmonic and unequal turns winding in embodiment 7 of the invention.
Fig. 17 is a structural diagram of a stator lamination with unequal slots for use in three-phase asynchronous motor having low harmonic and unequal turns winding in embodiment 8 of the invention.
Fig. 18 is a schematic diagram of the slot shape comparison structure after the partial amplification and superposition of part I, part II and part III in Fig. 17, in which the double dot line is the slot shape contour line of small stator slot, the dotted line is the slot shape contour line of middle stator slot, and the solid line is the slot shape contour line of large stator slot.
Fig. 19 is a structural diagram of a stator lamination with unequal slots for use in three-phase asynchronous motor having low harmonic and unequal turns winding in embodiment 9 of the invention.
Fig. 20 is a schematic diagram of the slot shape comparison after partial amplification and superposition of part I and part II in Fig. 19, in which the double dot line is the slot shape contour line of small stator slot and the solid line is the slot shape contour line of large stator slot.
Fig. 21 is a partial enlarged structural diagram of Part III in Fig. 19, showing the buckle groove and the processing groove.
Fig. 22 is a structural diagram of a stator lamination with unequal slots for use in three-phase asynchronous motor having low harmonic and unequal turns winding in embodiment 10 of the invention.
Fig. 23 is a structural diagram of a stator lamination with unequal slots for use in three-phase asynchronous motor having low harmonic and unequal turns winding in embodiment 11 of the invention.
Fig. 24 is a structural diagram of a stator lamination with unequal slots for use in three-phase asynchronous motor having low harmonic and unequal turns winding in embodiment 12 of the invention.
Fig. 25 is a schematic diagram of the slot shape comparison structure after the partial amplification and superposition of part I, part II and part III in Fig. 24, in which the double dot line is the slot shape contour line of small stator slot, the dotted line is the slot shape contour line of middle stator slot, and the solid line is the slot shape contour line of large stator slot.
Fig. 26 is a structural diagram of a stator lamination with unequal slots for use in three-phase asynchronous motor having low harmonic and unequal turns winding in embodiment 13 of the invention.
Fig. 27 is a structural diagram of a stator lamination with unequal slots for use in three-phase asynchronous motor having low harmonic and unequal turns winding in embodiment 14 of the invention.
Fig. 28 is a structural diagram of a stator lamination with unequal slots for use in three-phase asynchronous motor having low harmonic and unequal turns winding in embodiment 15 of the invention.
Fig. 29 is a schematic diagram of the slot shape comparison after partial amplification and superposition of part I and part II in Fig. 28, in which the double dot line is the slot shape contour line of small stator slot and the solid line is the slot shape contour line of large stator slot.
Fig. 30 is a partial enlarged structural diagram of Part III in Fig. 28, showing the buckle groove and the processing groove.
Fig. 31 is a structural diagram of a stator lamination with unequal slots for use in three-phase asynchronous motor having low harmonic and unequal turns winding in embodiment 16 of the invention.
Fig. 32 is a structural diagram of a stator lamination with unequal slots for use in three-phase asynchronous motor having low harmonic and unequal turns winding in embodiment 17 of the invention.
Fig. 33 is a structural diagram of a stator lamination with unequal slots for use in three-phase asynchronous motor having low harmonic and unequal turns winding in embodiment 18 of the invention.
Fig. 34 is a schematic diagram of the slot shape comparison structure after the partial amplification and superposition of part I, part II and part III in Fig. 33, in which the double dot line is the slot shape contour line of small stator slot, the dotted line is the slot shape contour line of middle stator slot, and the solid line is the slot shape contour line of large stator slot.
Fig. 35 is a structural diagram of a stator lamination with unequal slots for use in three-phase asynchronous motor having low harmonic and unequal turns winding in embodiment 19 of the invention.
Fig. 36 is a structural diagram of a stator lamination with unequal slots for use in three-phase asynchronous motor having low harmonic and unequal turns winding in embodiment 20 of the invention.
Fig. 37 is a schematic diagram of the slot shape comparison after partial amplification and superposition of part I and part II in Fig. 36, in which the double dot line is the slot shape contour line of small stator slot and the solid line is the slot shape contour line of large stator slot.
Fig. 38 is a partial enlarged structural diagram of Part III in Fig. 36, showing the buckle groove and the processing groove.
Fig. 39 is a structural diagram of a stator lamination with unequal slots for use in three-phase asynchronous motor having low harmonic and unequal turns winding in embodiment 21 of the invention.
Fig. 40 is a structural diagram of a stator lamination with unequal slots for use in three-phase asynchronous motor having low harmonic and unequal turns winding in embodiment 22 of the invention.
Fig. 41 is a structural diagram of a stator lamination with unequal slots for use in three-phase asynchronous motor having low harmonic and unequal turns winding in embodiment 23 of the invention.
Fig. 42 is a structural diagram of a stator lamination with unequal slots for use in three-phase asynchronous motor having low harmonic and unequal turns winding in embodiment 24 of the invention.
Fig. 43 is a schematic diagram of the slot shape comparison structure after the partial amplification and superposition of part I, part II and part III in Fig. 42, in which the double dot line is the slot shape contour line of small stator slot, the dotted line is the slot shape contour line of middle stator slot, and the solid line is the slot shape contour line of large stator slot.
Fig. 44 is a structural diagram of a stator lamination with unequal slots for use in three-phase asynchronous motor having low harmonic and unequal turns winding in embodiment 25 of the invention.
Fig. 45 is a structural diagram of a stator lamination with unequal slots for use in three-phase asynchronous motor having low harmonic and unequal turns winding in embodiment 26 of the invention.
Fig. 46 is a structural diagram of a stator lamination with unequal slots for use in three-phase asynchronous motor having low harmonic and unequal turns winding in embodiment 27 of the invention.
Fig. 47 is a structural diagram of a stator lamination with unequal slots for use in three-phase asynchronous motor having low harmonic and unequal turns winding in embodiment 28 of the invention.
Fig. 48 is a structural diagram of a stator lamination with unequal slots for use in three-phase asynchronous motor having low harmonic and unequal turns winding in embodiment 29 of the invention.

Description of Symbols in the drawings:
1-substrate, 2-stator slot group, 21-rectangular slot, 22-first isosceles trapezoidal slot, 23-second isosceles trapezoidal slot, 24-semicircle slot, 25-small stator slot, 26-large stator slot, 27-middle stator slot, 3-buckle groove, 4-processing groove.

### DETAILED DESCRIPTION OF THE EMBODIMENTS

In order to make the object, technical solution and advantages of the invention clearer, the technical solution of the invention will be described completely in combination with the embodiments of the invention and the corresponding drawings. Obviously, the described embodiments are only part of the embodiments of the invention, not all of them. Based on the embodiments of the invention, all other embodiments obtained by those skilled in the art without creative works belong to the protection scope of the invention.

The stator lamination with unequal slots for use in three-phase asynchronous motor having low harmonic and unequal turns winding has two main modes of implementation under the same concept of invention: (1) each stator slot group on the stator lamination with unequal slots includes a plurality of large stator slots and small stator slots; (2) each stator slot group on the stator lamination with unequal slots includes a plurality of large stator slots, middle stator slots and small stator slots. The stator core can be made by laminating a plurality of stator laminations with unequal slots of the invention. All the large stator slots, the middle stator slots and the small stator slots can respectively form a large slot of stator winding, a middle slot of stator winding and a small slot of stator winding. The low harmonic unequal turns winding coil made of copper wire is embedded in the large slot of stator winding, the middle slot of stator winding and the small slot of stator winding so as to form the stator winding. The stator core and the stator winding can form the stator of the three-phase asynchronous motor having low harmonic and unequal turns winding. The stator lamination with unequal slots for use in three-phase asynchronous motor having low harmonic and unequal turns winding is described thereafter in detail in combination with the embodiments.

### Embodiment 1

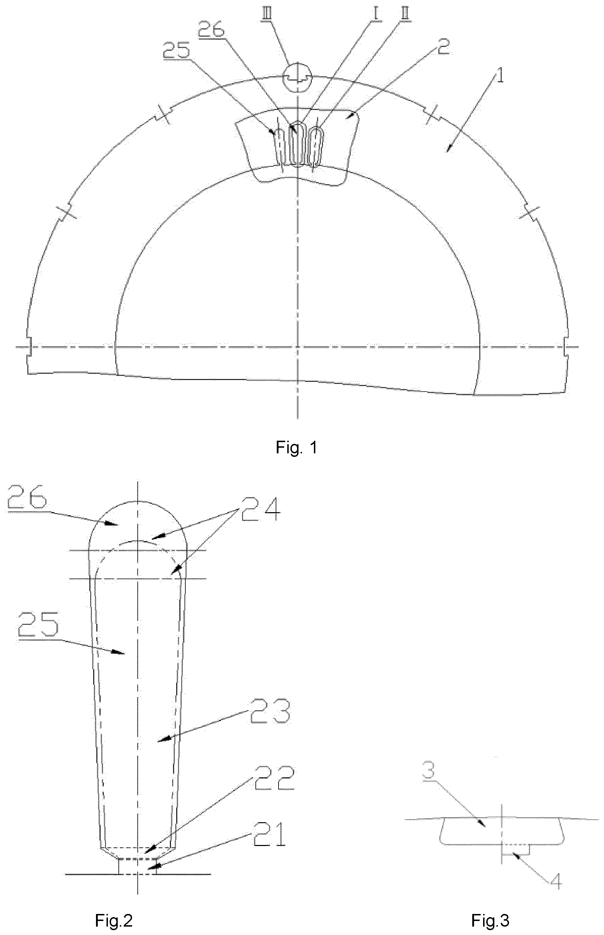

As shown in Fig. 1, the stator lamination with unequal slots for use in three-phase asynchronous motor having low harmonic and unequal turns winding of embodiment 1 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is three, including one large stator slot 26 and two small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with one small stator slot 25. That is, the one small stator slot 25 on one side of the large stator slot 26 and the one small stator slot 25 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 1, the large stator slot 26 and the small stator slot 25 in each stator slot group 2 are arranged in the form of "small - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slot 26 and small stator slot 25 along the circumference direction of the substrate 1 is equal.

As shown in Figure 2, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 1 and Fig. 3, 8-16 buckle grooves 3 are uniformly arranged on the outer ring surface of the substrate 1 along the circumference direction of the substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4mm and the height the processing groove 4 is 1.5-4mm.

For the stator lamination with unequal slots for use in three-phase asynchronous motor having low harmonic and unequal turns winding of embodiment 1, the total number of large stator slots 26 and small stator slots 25 in each stator slot group 2 is 9 × n, that is, 3 (phase) × 3 (number of slots per pole and phase) × n, where n is the number of poles of the motor.

According to the test data of the three-phase asynchronous motor applied the stator lamination with unequal slots of embodiment 1, the copper saving is measured to be 0.1-0.25kg/kW, and the efficiency of the motor reaches the efficiency value of IE5 standard.

### Embodiment 2

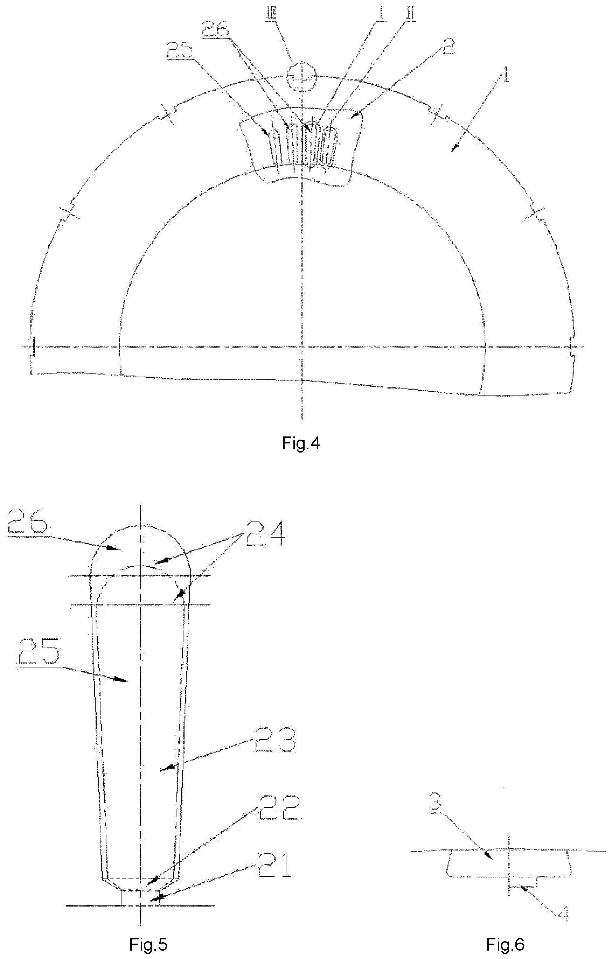

As shown in Fig. 4, the stator lamination with unequal slots for use in three-phase asynchronous motor having low harmonic and unequal turns winding of embodiment 2 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is four, including two large stator slots 26 and two small stator slots 25. The arrangement of the large stator slot 26 and the small stator slot 25 in the stator slot group 2 is as follows: the two large stator slots 26 are arranged in the middle of the stator slot group 2, and the two sides of the two large stator slots 26 are respectively symmetrically arranged with one small stator slot 25. That is, the one small stator slot 25 on one side of the two large stator slots 26 and the one small stator slot 25 on the other side of the two large stator slots 26 are symmetrically arranged with respect to the center line of the two large stator slots 26 along the circumference direction of the substrate 1. Therefore, in the stator lamination with unequal slots for use in three-phase asynchronous motor having low harmonic and unequal turns winding of embodiment 2, the large stator slot 26 and the small stator slot 25 in each stator slot group 2 are arranged in the form of "small - large - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, and the distance between the adjacent large stator slot 26 and small stator slot 25, along the circumference direction of the substrate 1 is equal.

As shown in Figure 5, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 4 and Fig. 6, 8-16 buckle grooves 3 are uniformly arranged on the outer ring surface of the substrate 1 along the circumference direction of the substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4mm and the height the processing groove 4 is 1.5-4mm.

For the stator lamination with unequal slots for use in three-phase asynchronous motor having low harmonic and unequal turns winding of embodiment 2, the total number of large stator slots 26 and small stator slots 25 in each stator slot group 2 is 12 × n, that is, 3 (phase) × 4 (number of slots per pole and phase) × n, where n is the number of poles of the motor.

According to the test data of the three-phase asynchronous motor applied the stator lamination with unequal slots of embodiment 2, the copper saving is measured to be 0.1-0.25kg/kW, and the efficiency of the motor reaches the efficiency value of IE5 standard.

### Embodiment 3

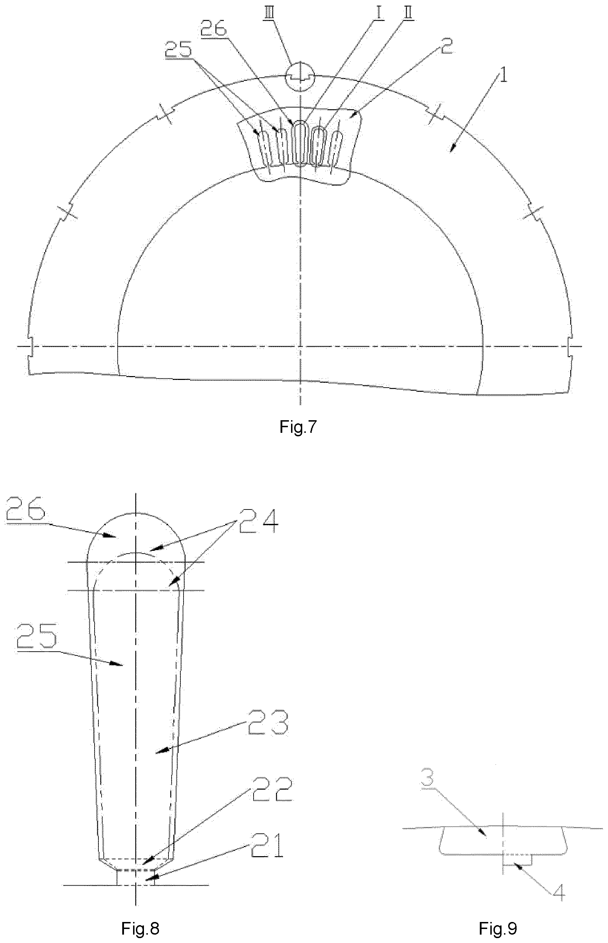

As shown in Fig. 7, the stator lamination with unequal slots for use in three-phase asynchronous motor having low harmonic and unequal turns winding of embodiment 3 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is five, including one large stator slot 26 and four small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with two small stator slots 25. That is, the two small stator slots 25 on one side of the large stator slot 26 and the two small stator slots 25 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 3, the large stator slot 26 and the small stator slot 25 in each stator slot group 2 are arranged in the form of "small - small - large - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent small stator slots 25, and the distance between the adjacent large stator slot 26 and small stator slot 25, along the circumference direction of the substrate 1 is equal.

As shown in Figure 8, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 7 and Fig. 9, 8-16 buckle grooves 3 are uniformly arranged on the outer ring surface of the substrate 1 along the circumference direction of the substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4mm and the height the processing groove 4 is 1.5-4mm.

For the stator lamination with unequal slots for use in three-phase asynchronous motor having low harmonic and unequal turns winding of embodiment 3, the total number of large stator slots 26 and small stator slots 25 in each stator slot group 2 is 15 × n, that is, 3 (phase) × 5 (number of slots per pole and phase) × n, where n is the number of poles of the motor.

According to the test data of the three-phase asynchronous motor applied the stator lamination with unequal slots of embodiment 3, the copper saving is measured to be 0.1-0.25kg/kW, and the efficiency of the motor reaches the efficiency value of IE5 standard.

### Embodiment 4

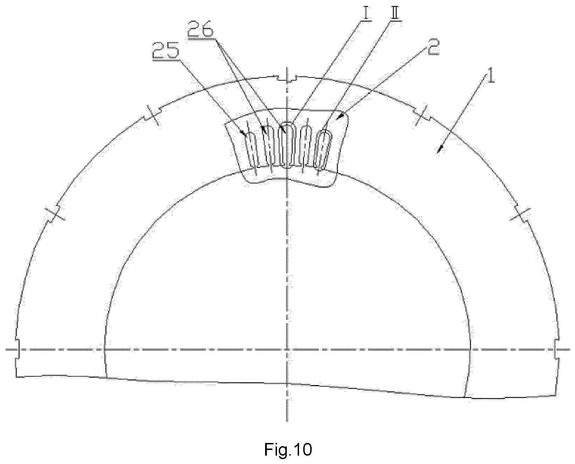

As shown in Fig. 10, the stator lamination with unequal slots for use in three-phase asynchronous motor having low harmonic and unequal turns winding of embodiment 4 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is five, including three large stator slots 26 and two small stator slots 25. The arrangement of the large stator slot 26 and the small stator slot 25 in the stator slot group 2 is as follows: the three large stator slots 26 are arranged in the middle of the stator slot group 2, and the two sides of the three large stator slots 26 are respectively symmetrically arranged with one small stator slot 25. That is, the one small stator slot 25 on one side of the three large stator slots 26 and the one small stator slot 25 on the other side of the three large stator slots 26 are symmetrically arranged with respect to the large stator slot 26 in the middle position. Therefore, in the stator lamination with unequal slots for use in three-phase asynchronous motor having low harmonic and unequal turns winding of embodiment 4, the large stator slot 26 and the small stator slot 25 in each stator slot group 2 are arranged in the form of "small - large - large - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 4, the basic slot shape of large stator slot 26 and small stator slot 25, the setting of buckle groove 3 and processing groove 4, will not be described in detail here because they are the same as those of embodiment 3.

For the stator lamination with unequal slots for use in three-phase asynchronous motor having low harmonic and unequal turns winding of embodiment 4, similar to embodiment 3, the total number of large stator slots 26 and small stator slots 25 in each stator slot group 2 is 15 × n, that is, 3 (phase) × 5 (number of slots per pole and phase) × n, where n is the number of poles of the motor.

According to the test data of the three-phase asynchronous motor applied the stator lamination with unequal slots of embodiment 4, the copper saving is measured to be 0.1-0.25kg/kW, and the efficiency of the motor reaches the efficiency value of IE5 standard.

### Embodiment 5

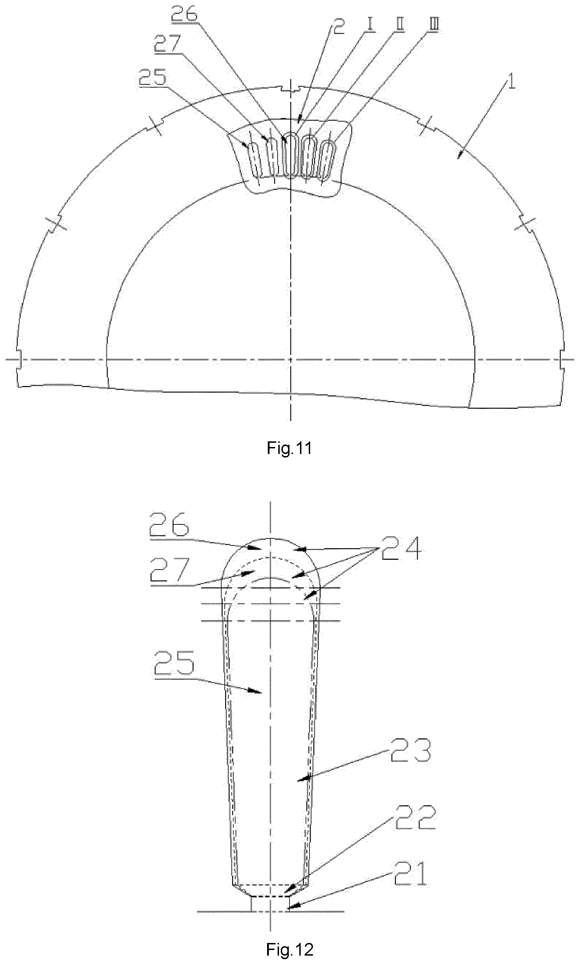

As shown in Fig. 11, the stator lamination with unequal slots for use in three-phase asynchronous motor having low harmonic and unequal turns winding of embodiment 5 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is five, including one large stator slot 26, two middle stator slots 27 and two small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with one small stator slot 25, and between the large stator slot 26 and the small stator slot 25 are respectively symmetrically arranged with one middle stator slot 27. That is, the one small stator slot 25 on one side of the large stator slot 26 and the one small stator slot 25 on the other side of the large stator slot 26 are symmetrically arranged with respect to the large stator slot 26 in the middle position, and the one middle stator slot 27 on one side of the large stator slot 26 and the one middle stator slot 27 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 5, the large stator slot 26, the middle stator slot 27 and the small stator slot 25 in each stator slot group 2 are arranged in the form of "small - middle - large - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slot 26 and middle stator slot 27, and the distance between the adjacent middle stator slot 27 and small stator slot 25, along the circumference direction of the substrate 1 is equal.

As shown in Figure 12, the basic slot shape of the large stator slot 26, the middle stator slot 27 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26, the middle stator slot 27 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

In the stator lamination with unequal slots for use in three-phase asynchronous motor having low harmonic and unequal turns winding of embodiment 5, the setting of buckle groove 3 and processing groove 4 will not be described in detail here because they are the same as those of embodiment 3.

For the stator lamination with unequal slots for use in three-phase asynchronous motor having low harmonic and unequal turns winding of embodiment 5, similar to embodiment 3, the total number of large stator slots 26, middle stator slot 27 and small stator slots 25 in each stator slot group 2 is 15 × n, that is, 3 (phase) × 5 (number of slots per pole and phase) × n, where n is the number of poles of the motor.

According to the test data of the three-phase asynchronous motor applied the stator lamination with unequal slots of embodiment 5, the copper saving is measured to be 0.1-0.25kg/kW, and the efficiency of the motor reaches the efficiency value of IE5 standard.

### Embodiment 6

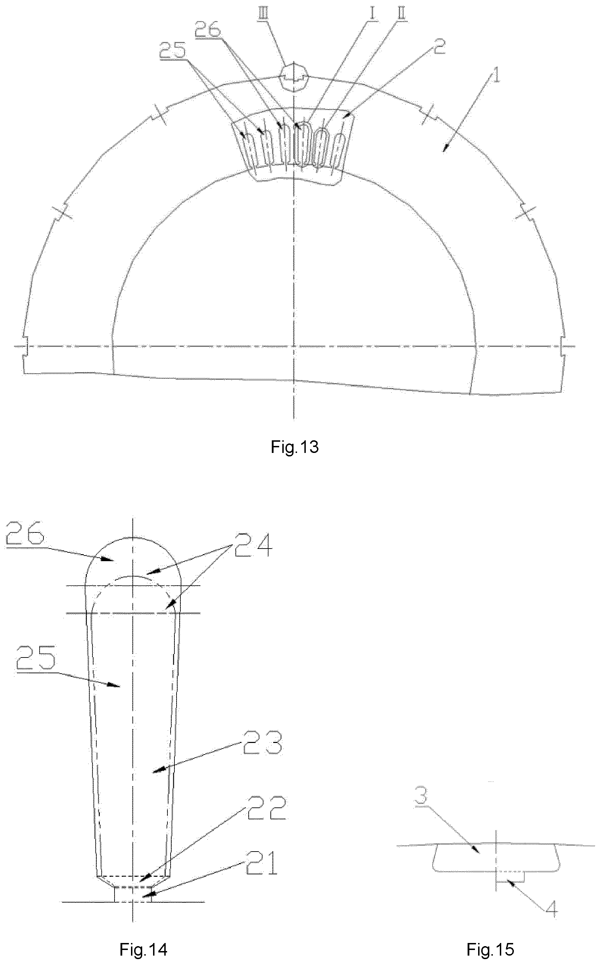

As shown in Fig. 13, the stator lamination with unequal slots for use in three-phase asynchronous motor having low harmonic and unequal turns winding of embodiment 6 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is six, including two large stator slot 26 and four small stator slots 25. The arrangement of the large stator slot 26 and the small stator slot 25 in the stator slot group 2 is as follows: the two large stator slots 26 are arranged in the middle of the stator slot group 2, and the two sides of the two large stator slots 26 are respectively symmetrically arranged with two small stator slots 25. That is, the two small stator slots 25 on one side of the two large stator slots 26 and the two small stator slots 25 on the other side of the two large stator slots 26 are symmetrically arranged with respect to the center line of the two large stator slots 26 along the circumference direction of the substrate 1. Therefore, in the stator lamination with unequal slots for use in three-phase asynchronous motor having low harmonic and unequal turns winding of embodiment 6, the large stator slot 26 and the small stator slot 25 in each stator slot group 2 are arranged in the form of "small - small - large - large - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the substrate 1 is equal.

As shown in Figure 14, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 13 and Fig. 15, 8-16 buckle grooves 3 are uniformly arranged on the outer ring surface of the substrate 1 along the circumference direction of the substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4mm and the height the processing groove 4 is 1.5-4mm.

For the stator lamination with unequal slots for use in three-phase asynchronous motor having low harmonic and unequal turns winding of embodiment 6, the total number of large stator slots 26 and small stator slots 25 in each stator slot group 2 is 18 × n, that is, 3 (phase) × 6 (number of slots per pole and phase) × n, where n is the number of poles of the motor.

According to the test data of the three-phase asynchronous motor applied the stator lamination with unequal slots of embodiment 6, the copper saving is measured to be 0.1-0.25kg/kW, and the efficiency of the motor reaches the efficiency value of IE5 standard.

### Embodiment 7

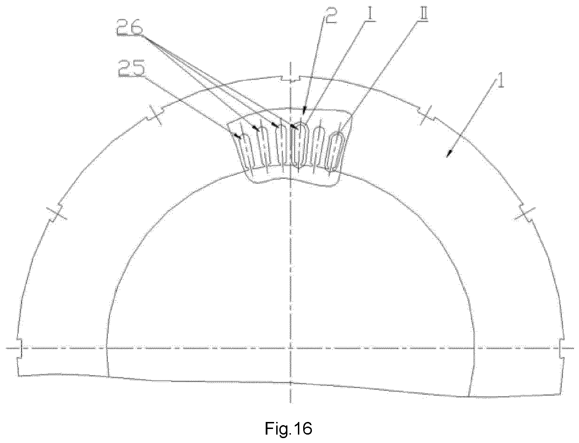

As shown in Fig. 16, the stator lamination with unequal slots for use in three-phase asynchronous motor having low harmonic and unequal turns winding of embodiment 7 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is six, including four large stator slot 26 and two small stator slots 25. The arrangement of the large stator slot 26 and the small stator slot 25 in the stator slot group 2 is as follows: the four large stator slots 26 are arranged in the middle of the stator slot group 2, and the two sides of the four large stator slots 26 are respectively symmetrically arranged with one small stator slot 25. That is, the one small stator slot 25 on one side of the four large stator slots 26 and the one small stator slots 25 on the other side of the four large stator slots 26 are symmetrically arranged with respect to the center line of the four large stator slots 26 along the circumference direction of the substrate 1. Therefore, in the stator lamination with unequal slots for use in three-phase asynchronous motor having low harmonic and unequal turns winding of embodiment 7, the large stator slot 26 and the small stator slot 25 in each stator slot group 2 are arranged in the form of "small - large - large - large - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 7, the basic slot shape of large stator slot 26 and small stator slot 25, the setting of buckle groove 3 and processing groove 4, will not be described in detail here because they are the same as those of embodiment 6.

For the stator lamination with unequal slots for use in three-phase asynchronous motor having low harmonic and unequal turns winding of embodiment 7, similar to embodiment 6, the total number of large stator slots 26 and small stator slots 25 in each stator slot group 2 is 18 × n, that is, 3 (phase) × 6 (number of slots per pole and phase) × n, where n is the number of poles of the motor.

According to the test data of the three-phase asynchronous motor applied the stator lamination with unequal slots of embodiment 7, the copper saving is measured to be 0.1-0.25kg/kW, and the efficiency of the motor reaches the efficiency value of IE5 standard.

### Embodiment 8

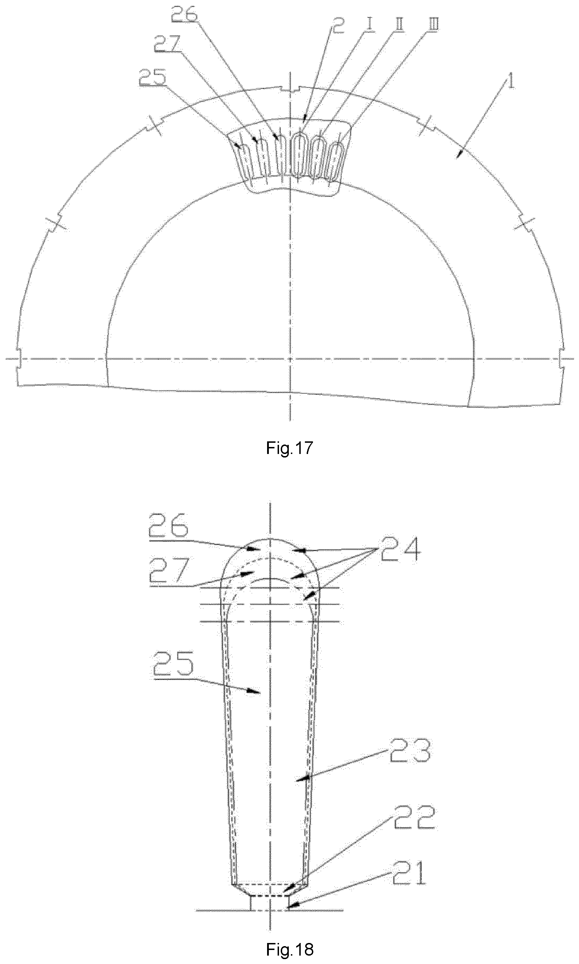

As shown in Fig. 17, the stator lamination with unequal slots for use in three-phase asynchronous motor having low harmonic and unequal turns winding of embodiment 8 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is six, including two large stator slots 26, two middle stator slots 27 and two small stator slots 25. The arrangement of the large stator slot 26, the middle stator slot 27 and the small stator slot 25 in the stator slot group 2 is as follows: the two large stator slots 26 are arranged in the middle of the stator slot group 2, the two sides of the two large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the two large stator slots 26 and the one small stator slot 25 on the other side of the two large stator slots 26 are symmetrically arranged with respect to the center line of the two large stator slots 26 along the circumference direction of the substrate 1, and the one middle stator slot 27 on one side of the two large stator slots 26 and the one middle stator slot 27 on the other side of the two large stator slots 26 are symmetrically arranged with respect to the center line of the two large stator slots 26 along the circumference direction of the substrate 1. Therefore, in the stator lamination with unequal slots for use in three-phase asynchronous motor having low harmonic and unequal turns winding of embodiment 8, the large stator slot 26, the middle stator slot 27 and the small stator slot 25 in each stator slot group 2 are arranged in the form of "small - middle - large - large - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the substrate 1 is equal.

As shown in Figure 18, the basic slot shape of the large stator slot 26, the middle stator slot 27 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26, the middle stator slot 27 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

In the stator lamination with unequal slots for use in three-phase asynchronous motor having low harmonic and unequal turns winding of embodiment 8, the setting of buckle groove 3 and processing groove 4 will not be described in detail here because they are the same as those of embodiment 6.

For the stator lamination with unequal slots for use in three-phase asynchronous motor having low harmonic and unequal turns winding of embodiment 8, similar to embodiment 6, the total number of large stator slots 26, middle stator slot 27 and small stator slots 25 in each stator slot group 2 is 18 × n, that is, 3 (phase) × 6 (number of slots per pole and phase) × n, where n is the number of poles of the motor.

According to the test data of the three-phase asynchronous motor applied the stator lamination with unequal slots of embodiment 8, the copper saving is measured to be 0.1-0.25kg/kW, and the efficiency of the motor reaches the efficiency value of IE5 standard.

### Embodiment 9

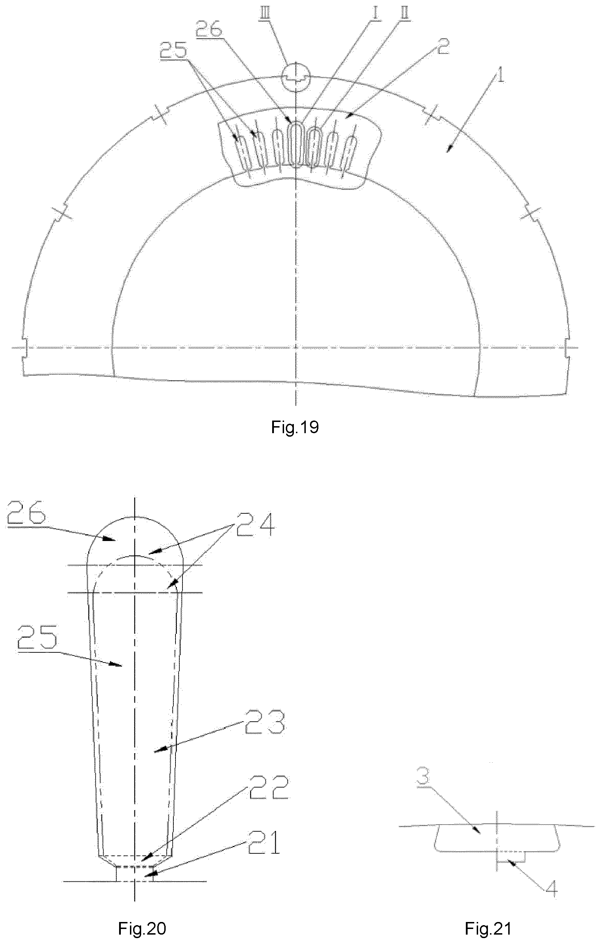

As shown in Fig. 19, the stator lamination with unequal slots for use in three-phase asynchronous motor having low harmonic and unequal turns winding of embodiment 9 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is seven, including one large stator slot 26 and six small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with three small stator slots 25. That is, the three small stator slots 25 on one side of the large stator slot 26 and the three small stator slots 25 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 9, the large stator slot 26 and the small stator slot 25 in each stator slot group 2 are arranged in the form of "small - small - small - large - small - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent small stator slots 25, and the distance between the adjacent large stator slot 26 and small stator slot 25, along the circumference direction of the substrate 1 is equal.

As shown in Figure 20, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 19 and Fig. 21, 8-16 buckle grooves 3 are uniformly arranged on the outer ring surface of the substrate 1 along the circumference direction of the substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4mm and the height the processing groove 4 is 1.5-4mm.

For the stator lamination with unequal slots for use in three-phase asynchronous motor having low harmonic and unequal turns winding of embodiment 9, the total number of large stator slots 26 and small stator slots 25 in each stator slot group 2 is 21 × n, that is, 3 (phase) × 7 (number of slots per pole and phase) × n, where n is the number of poles of the motor.

According to the test data of the three-phase asynchronous motor applied the stator lamination with unequal slots of embodiment 9, the copper saving is measured to be 0.1-0.25kg/kW, and the efficiency of the motor reaches the efficiency value of IE5 standard.

### Embodiment 10

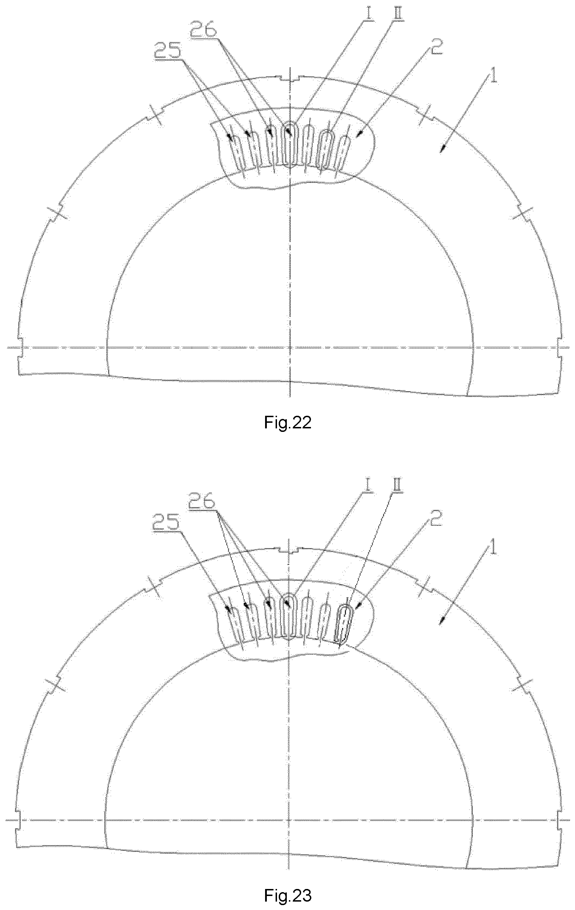

As shown in Fig. 22, the stator lamination with unequal slots for use in three-phase asynchronous motor having low harmonic and unequal turns winding of embodiment 10 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is seven, including three large stator slots 26 and four small stator slots 25. The arrangement of the large stator slot 26 and the small stator slot 25 in the stator slot group 2 is as follows: the three large stator slots 26 are arranged in the middle of the stator slot group 2, and the two sides of the three large stator slots 26 are respectively symmetrically arranged with two small stator slots 25. That is, the two small stator slots 25 on one side of the three large stator slots 26 and the two small stator slots 25 on the other side of the three large stator slots 26 are symmetrically arranged with respect to the large stator slot 26 in the middle position. Therefore, in the stator lamination with unequal slots for use in three-phase asynchronous motor having low harmonic and unequal turns winding of embodiment 10, the large stator slot 26 and the small stator slot 25 in each stator slot group 2 are arranged in the form of "small - small - large - large - large - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 10, the basic slot shape of large stator slot 26 and small stator slot 25, the setting of buckle groove 3 and processing groove 4, will not be described in detail here because they are the same as those of embodiment 9.

For the stator lamination with unequal slots for use in three-phase asynchronous motor having low harmonic and unequal turns winding of embodiment 10, similar to embodiment 9, the total number of large stator slots 26 and small stator slots 25 in each stator slot group 2 is 21 × n, that is, 3 (phase) × 7 (number of slots per pole and phase) × n, where n is the number of poles of the motor.

According to the test data of the three-phase asynchronous motor applied the stator lamination with unequal slots of embodiment 10, the copper saving is measured to be 0.1-0.25kg/kW, and the efficiency of the motor reaches the efficiency value of IE5 standard.

### Embodiment 11

As shown in Fig. 23, the stator lamination with unequal slots for use in three-phase asynchronous motor having low harmonic and unequal turns winding of embodiment 11 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is seven, including five large stator slots 26 and two small stator slots 25. The arrangement of the large stator slot 26 and the small stator slot 25 in the stator slot group 2 is as follows: the five large stator slots 26 are arranged in the middle of the stator slot group 2, and the two sides of the five large stator slots 26 are respectively symmetrically arranged with one small stator slot 25. That is, the one small stator slot 25 on one side of the five large stator slots 26 and the one small stator slot 25 on the other side of the five large stator slots 26 are symmetrically arranged with respect to the large stator slot 26 in the middle position. Therefore, in the stator lamination with unequal slots for use in three-phase asynchronous motor having low harmonic and unequal turns winding of embodiment 11, the large stator slot 26 and the small stator slot 25 in each stator slot group 2 are arranged in the form of "small - large - large - large - large - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 11, the basic slot shape of large stator slot 26 and small stator slot 25, the setting of buckle groove 3 and processing groove 4, will not be described in detail here because they are the same as those of embodiment 9.

For the stator lamination with unequal slots for use in three-phase asynchronous motor having low harmonic and unequal turns winding of embodiment 11, similar to embodiment 9, the total number of large stator slots 26 and small stator slots 25 in each stator slot group 2 is 21 × n, that is, 3 (phase) × 7 (number of slots per pole and phase) × n, where n is the number of poles of the motor.

According to the test data of the three-phase asynchronous motor applied the stator lamination with unequal slots of embodiment 11, the copper saving is measured to be 0.1-0.25kg/kW, and the efficiency of the motor reaches the efficiency value of IE5 standard.

### Embodiment 12

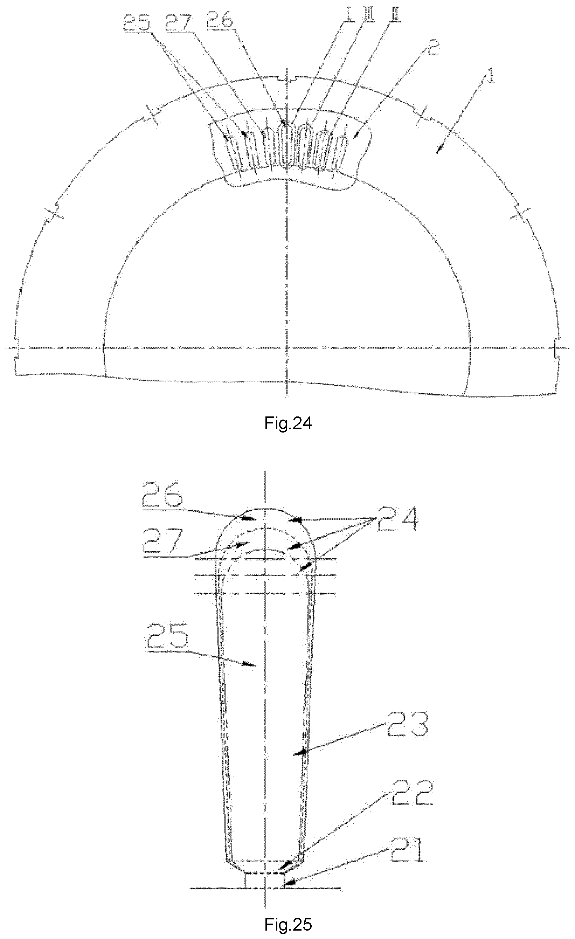

As shown in Fig. 24, the stator lamination with unequal slots for use in three-phase asynchronous motor having low harmonic and unequal turns winding of embodiment 12 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is seven, including one large stator slot 26, two middle stator slots 27 and four small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with two small stator slot 25, and between the large stator slot 26 and the small stator slot 25 are respectively symmetrically arranged with one middle stator slot 27. That is, the two small stator slots 25 on one side of the large stator slot 26 and the two small stator slots 25 on the other side of the large stator slot 26 are symmetrically arranged with respect to the large stator slot 26 in the middle position, and the one middle stator slot 27 on one side of the large stator slot 26 and the one middle stator slot 27 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 12, the large stator slot 26, the middle stator slot 27 and the small stator slot 25 in each stator slot group 2 are arranged in the form of "small - small - middle - large - middle - small - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent small stator slots 25, the distance between the adjacent large stator slot 26 and middle stator slot 27, and the distance between the adjacent middle stator slot 27 and small stator slot 25, along the circumference direction of the substrate 1 is equal.

As shown in Figure 25, the basic slot shape of the large stator slot 26, the middle stator slot 27 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26, the middle stator slot 27 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

In the stator lamination with unequal slots for use in three-phase asynchronous motor having low harmonic and unequal turns winding of embodiment 12, the setting of buckle groove 3 and processing groove 4 will not be described in detail here because they are the same as those of embodiment 9.

For the stator lamination with unequal slots for use in three-phase asynchronous motor having low harmonic and unequal turns winding of embodiment 12, similar to embodiment 9, the total number of large stator slots 26, middle stator slot 27 and small stator slots 25 in each stator slot group 2 is 21 × n, that is, 3 (phase) × 7 (number of slots per pole and phase) × n, where n is the number of poles of the motor.

According to the test data of the three-phase asynchronous motor applied the stator lamination with unequal slots of embodiment 12, the copper saving is measured to be 0.1-0.25kg/kW, and the efficiency of the motor reaches the efficiency value of IE5 standard.

### Embodiment 13

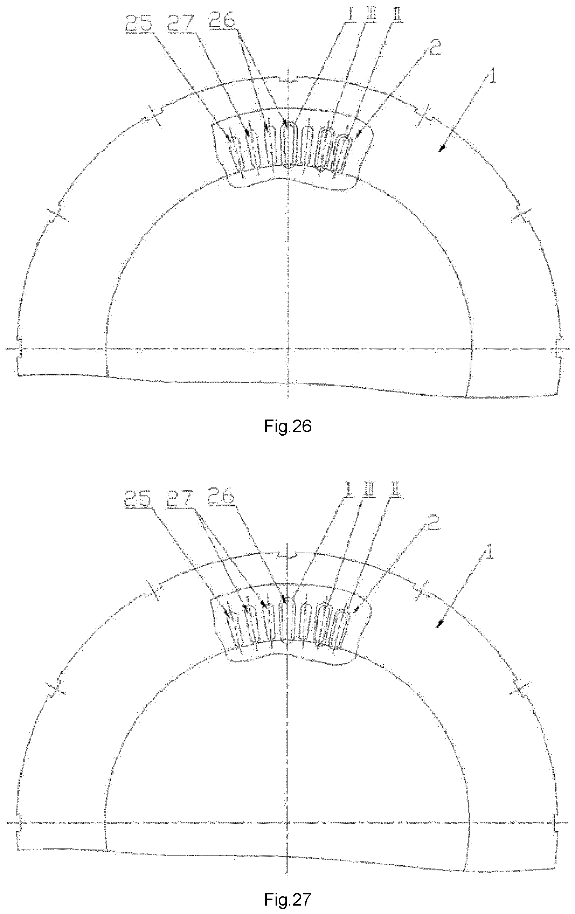

As shown in Fig. 26, the stator lamination with unequal slots for use in three-phase asynchronous motor having low harmonic and unequal turns winding of embodiment 13 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is seven, including three large stator slots 26, two middle stator slots 27 and two small stator slots 25. The arrangement of the large stator slot 26, the middle stator slot 27 and the small stator slot 25 in the stator slot group 2 is as follows: the three large stator slots 26 are arranged in the middle of the stator slot group 2, the two sides of the three large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the three large stator slots 26 and the one small stator slot 25 on the other side of the three large stator slots 26 are symmetrically arranged with respect to the large stator slot 26 in the middle position, and the one middle stator slot 27 on one side of the three large stator slots 26 and the one middle stator slot 27 on the other side of the three large stator slots 26 are symmetrically arranged with respect to the large stator slot 26 in the middle position. Therefore, in the stator lamination with unequal slots for use in three-phase asynchronous motor having low harmonic and unequal turns winding of embodiment 13, the large stator slot 26, the middle stator slot 27 and the small stator slot 25 in each stator slot group 2 are arranged in the form of "small - middle - large - large - large - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 13, the basic slot shape of large stator slot 26, middle stator slot 27 and small stator slot 25, the setting of buckle groove 3 and processing groove 4, will not be described in detail here because they are the same as those of embodiment 12.

For the stator lamination with unequal slots for use in three-phase asynchronous motor having low harmonic and unequal turns winding of embodiment 13, similar to embodiment 12, the total number of large stator slots 26, middle stator slot 27 and small stator slots 25 in each stator slot group 2 is 21 × n, that is, 3 (phase) × 7 (number of slots per pole and phase) × n, where n is the number of poles of the motor.

According to the test data of the three-phase asynchronous motor applied the stator lamination with unequal slots of embodiment 13, the copper saving is measured to be 0.1-0.25kg/kW, and the efficiency of the motor reaches the efficiency value of IE5 standard.

### Embodiment 14

As shown in Fig. 27, the stator lamination with unequal slots for use in three-phase asynchronous motor having low harmonic and unequal turns winding of embodiment 14 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is seven, including one large stator slot 26, four middle stator slots 27 and two small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with one small stator slot 25, and between the large stator slot 26 and the small stator slot 25 are respectively symmetrically arranged with two middle stator slots 27. That is, the one small stator slot 25 on one side of the large stator slot 26 and the one small stator slot 25 on the other side of the large stator slot 26 are symmetrically arranged with respect to the large stator slot 26 in the middle position, and the two middle stator slots 27 on one side of the large stator slot 26 and the two middle stator slots 27 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 14, the large stator slot 26, the middle stator slot 27 and the small stator slot 25 in each stator slot group 2 are arranged in the form of "small - middle - middle - large - middle - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent middle stator slots 27, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 14, the basic slot shape of large stator slot 26, middle stator slot 27 and small stator slot 25, the setting of buckle groove 3 and processing groove 4, will not be described in detail here because they are the same as those of embodiment 12.

For the stator lamination with unequal slots for use in three-phase asynchronous motor having low harmonic and unequal turns winding of embodiment 14, similar to embodiment 12, the total number of large stator slots 26, middle stator slot 27 and small stator slots 25 in each stator slot group 2 is 21 × n, that is, 3 (phase) × 7 (number of slots per pole and phase) × n, where n is the number of poles of the motor.

According to the test data of the three-phase asynchronous motor applied the stator lamination with unequal slots of embodiment 14, the copper saving is measured to be 0.1-0.25kg/kW, and the efficiency of the motor reaches the efficiency value of IE5 standard.

### Embodiment 15

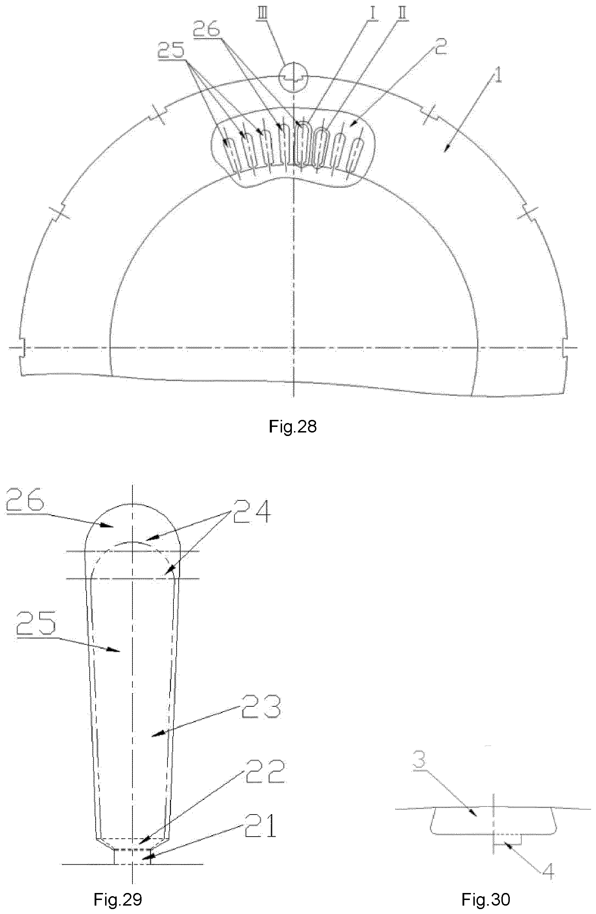

As shown in Fig. 28, the stator lamination with unequal slots for use in three-phase asynchronous motor having low harmonic and unequal turns winding of embodiment 15 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is eight, including two large stator slot 26 and six small stator slots 25. The arrangement of the large stator slot 26 and the small stator slot 25 in the stator slot group 2 is as follows: the two large stator slots 26 are arranged in the middle of the stator slot group 2, and the two sides of the two large stator slots 26 are respectively symmetrically arranged with three small stator slots 25. That is, the three small stator slots 25 on one side of the two large stator slots 26 and the three small stator slots 25 on the other side of the two large stator slots 26 are symmetrically arranged with respect to the center line of the two large stator slots 26 along the circumference direction of the substrate 1. Therefore, in the stator lamination with unequal slots for use in three-phase asynchronous motor having low harmonic and unequal turns winding of embodiment 15, the large stator slot 26 and the small stator slot 25 in each stator slot group 2 are arranged in the form of "small - small - small - large - large - small - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the substrate 1 is equal.

As shown in Figure 29, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 28 and Fig. 30, 8-16 buckle grooves 3 are uniformly arranged on the outer ring surface of the substrate 1 along the circumference direction of the substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4mm and the height the processing groove 4 is 1.5-4mm.

For the stator lamination with unequal slots for use in three-phase asynchronous motor having low harmonic and unequal turns winding of embodiment 15, the total number of large stator slots 26 and small stator slots 25 in each stator slot group 2 is 24 × n, that is, 3 (phase) × 8 (number of slots per pole and phase) × n, where n is the number of poles of the motor.

According to the test data of the three-phase asynchronous motor applied the stator lamination with unequal slots of embodiment 15, the copper saving is measured to be 0.1-0.25kg/kW, and the efficiency of the motor reaches the efficiency value of IE5 standard.

### Embodiment 16

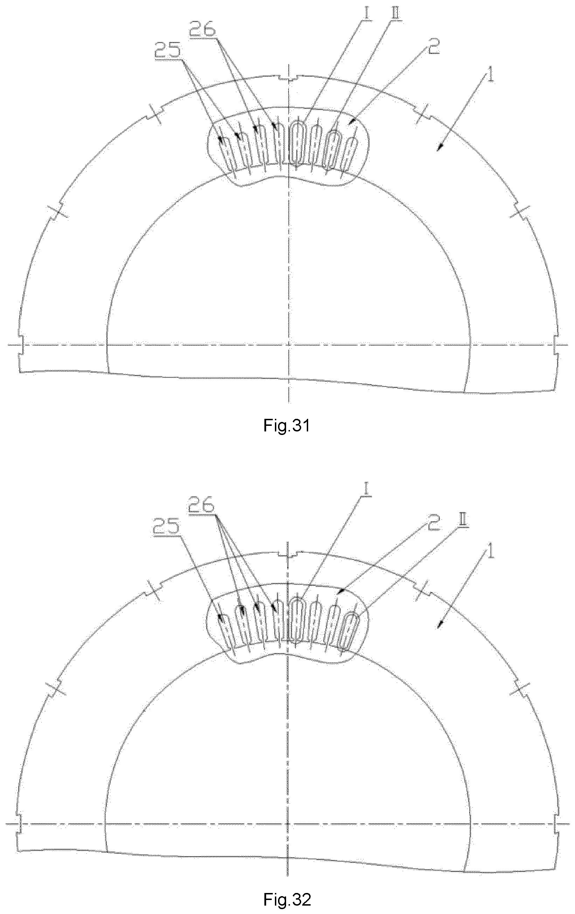

As shown in Fig. 31, the stator lamination with unequal slots for use in three-phase asynchronous motor having low harmonic and unequal turns winding of embodiment 16 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is eight, including four large stator slots 26 and four small stator slots 25. The arrangement of the large stator slot 26 and the small stator slot 25 in the stator slot group 2 is as follows: the four large stator slots 26 are arranged in the middle of the stator slot group 2, and the two sides of the four large stator slots 26 are respectively symmetrically arranged with two small stator slots 25. That is, the two small stator slots 25 on one side of the four large stator slots 26 and the two small stator slots 25 on the other side of the four large stator slots 26 are symmetrically arranged with respect to the center line of the four large stator slots 26 along the circumference direction of the substrate 1. Therefore, in the stator lamination with unequal slots for use in three-phase asynchronous motor having low harmonic and unequal turns winding of embodiment 16, the large stator slot 26 and the small stator slot 25 in each stator slot group 2 are arranged in the form of "small - small - large - large - large - large - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 16, the basic slot shape of large stator slot 26 and small stator slot 25, the setting of buckle groove 3 and processing groove 4, will not be described in detail here because they are the same as those of embodiment 15.

For the stator lamination with unequal slots for use in three-phase asynchronous motor having low harmonic and unequal turns winding of embodiment 16, similar to embodiment 15, the total number of large stator slots 26 and small stator slots 25 in each stator slot group 2 is 24 × n, that is, 3 (phase) × 8 (number of slots per pole and phase) × n, where n is the number of poles of the motor.

According to the test data of the three-phase asynchronous motor applied the stator lamination with unequal slots of embodiment 16, the copper saving is measured to be 0.1-0.25kg/kW, and the efficiency of the motor reaches the efficiency value of IE5 standard.

### Embodiment 17

As shown in Fig. 32, the stator lamination with unequal slots for use in three-phase asynchronous motor having low harmonic and unequal turns winding of embodiment 17 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is eight, including six large stator slot 26 and two small stator slots 25. The arrangement of the large stator slot 26 and the small stator slot 25 in the stator slot group 2 is as follows: the six large stator slots 26 are arranged in the middle of the stator slot group 2, and the two sides of the six large stator slots 26 are respectively symmetrically arranged with one small stator slot 25. That is, the one small stator slot 25 on one side of the six large stator slots 26 and the one small stator slot 25 on the other side of the six large stator slots 26 are symmetrically arranged with respect to the center line of the six large stator slots 26 along the circumference direction of the substrate 1. Therefore, in the stator lamination with unequal slots for use in three-phase asynchronous motor having low harmonic and unequal turns winding of embodiment 17, the large stator slot 26 and the small stator slot 25 in each stator slot group 2 are arranged in the form of "small - large - large - large - large - large - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 17, the basic slot shape of large stator slot 26 and small stator slot 25, the setting of buckle groove 3 and processing groove 4, will not be described in detail here because they are the same as those of embodiment 15.

For the stator lamination with unequal slots for use in three-phase asynchronous motor having low harmonic and unequal turns winding of embodiment 17, similar to embodiment 15, the total number of large stator slots 26 and small stator slots 25 in each stator slot group 2 is 24 × n, that is, 3 (phase) × 8 (number of slots per pole and phase) × n, where n is the number of poles of the motor.

According to the test data of the three-phase asynchronous motor applied the stator lamination with unequal slots of embodiment 17, the copper saving is measured to be 0.1-0.25kg/kW, and the efficiency of the motor reaches the efficiency value of IE5 standard.

### Embodiment 18

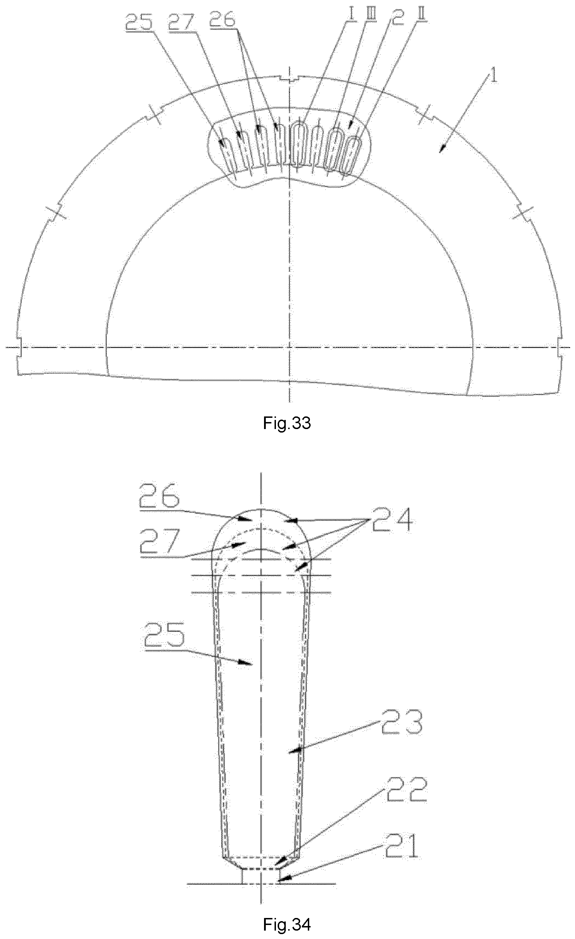

As shown in Fig. 33, the stator lamination with unequal slots for use in three-phase asynchronous motor having low harmonic and unequal turns winding of embodiment 18 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is eight, including four large stator slots 26, two middle stator slots 27 and two small stator slots 25. The arrangement of the large stator slot 26, the middle stator slot 27 and the small stator slot 25 in the stator slot group 2 is as follows: the four large stator slots 26 are arranged in the middle of the stator slot group 2, the two sides of the four large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the four large stator slots 26 and the one small stator slot 25 on the other side of the four large stator slots 26 are symmetrically arranged with respect to the center line of the four large stator slots 26 along the circumference direction of the substrate 1, and the one middle stator slot 27 on one side of the four large stator slots 26 and the one middle stator slot 27 on the other side of the four large stator slots 26 are symmetrically arranged with respect to the center line of the four large stator slots 26 along the circumference direction of the substrate 1. Therefore, in the stator lamination with unequal slots for use in three-phase asynchronous motor having low harmonic and unequal turns winding of embodiment 18, the large stator slot 26, the middle stator slot 27 and the small stator slot 25 in each stator slot group 2 are arranged in the form of "small - middle - large - large - large - large - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the substrate 1 is equal.

As shown in Figure 34, the basic slot shape of the large stator slot 26, the middle stator slot 27 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26, the middle stator slot 27 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

In the stator lamination with unequal slots for use in three-phase asynchronous motor having low harmonic and unequal turns winding of embodiment 18, the setting of buckle groove 3 and processing groove 4 will not be described in detail here because they are the same as those of embodiment 15.

For the stator lamination with unequal slots for use in three-phase asynchronous motor having low harmonic and unequal turns winding of embodiment 18, similar to embodiment 15, the total number of large stator slots 26, middle stator slot 27 and small stator slots 25 in each stator slot group 2 is 24 × n, that is, 3 (phase) × 8 (number of slots per pole and phase) × n, where n is the number of poles of the motor.

According to the test data of the three-phase asynchronous motor applied the stator lamination with unequal slots of embodiment 18, the copper saving is measured to be 0.1-0.25kg/kW, and the efficiency of the motor reaches the efficiency value of IE5 standard.

### Embodiment 19

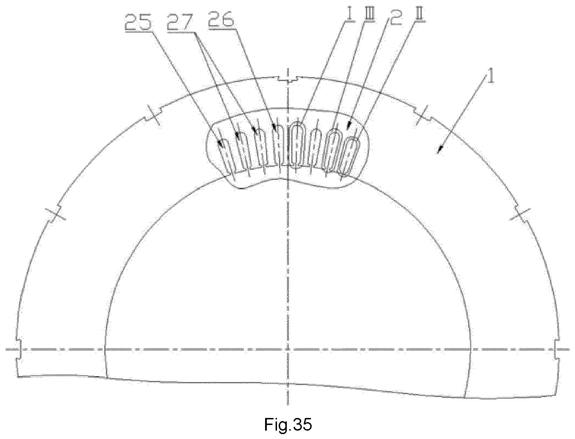

As shown in Fig. 35, the stator lamination with unequal slots for use in three-phase asynchronous motor having low harmonic and unequal turns winding of embodiment 19 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is eight, including two large stator slots 26, four middle stator slots 27 and two small stator slots 25. The arrangement of the large stator slot 26, the middle stator slot 27 and the small stator slot 25 in the stator slot group 2 is as follows: the two large stator slots 26 are arranged in the middle of the stator slot group 2, the two sides of the two large stator slots 26 are respectively symmetrically arranged with one small stator slot 25, and between the large stator slot 26 and the small stator slot 25 are respectively symmetrically arranged with two middle stator slots 27. That is, the one small stator slot 25 on one side of the two large stator slots 26 and the one small stator slot 25 on the other side of the two large stator slots 26 are symmetrically arranged with respect to the center line of the two large stator slots 26 along the circumference direction of the substrate 1, and the two middle stator slots 27 on one side of the two large stator slots 26 and the two middle stator slots 27 on the other side of the two large stator slots 26 are symmetrically arranged with respect to the center line of the two large stator slots 26 along the circumference direction of the substrate 1. Therefore, in the stator lamination with unequal slots for use in three-phase asynchronous motor having low harmonic and unequal turns winding of embodiment 19, the large stator slot 26, the middle stator slot 27 and the small stator slot 25 in each stator slot group 2 are arranged in the form of "small - middle - middle - large - large - middle - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slots 26, the distance between the adjacent middle stator slots 27, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 19, the basic slot shape of large stator slot 26, middle stator slot 27 and small stator slot 25, the setting of buckle groove 3 and processing groove 4, will not be described in detail here because they are the same as those of embodiment 18.

For the stator lamination with unequal slots for use in three-phase asynchronous motor having low harmonic and unequal turns winding of embodiment 19, similar to embodiment 18, the total number of large stator slots 26, middle stator slot 27 and small stator slots 25 in each stator slot group 2 is 24 × n, that is, 3 (phase) × 8 (number of slots per pole and phase) × n, where n is the number of poles of the motor.

According to the test data of the three-phase asynchronous motor applied the stator lamination with unequal slots of embodiment 19, the copper saving is measured to be 0.1-0.25kg/kW, and the efficiency of the motor reaches the efficiency value of IE5 standard.

### Embodiment 20

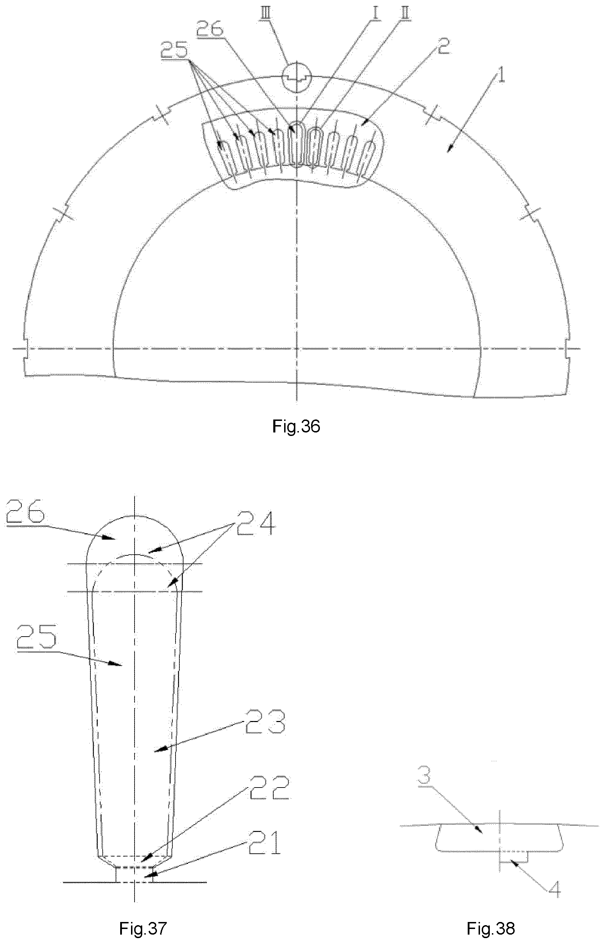

As shown in Fig. 36, the stator lamination with unequal slots for use in three-phase asynchronous motor having low harmonic and unequal turns winding of embodiment 20 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including one large stator slot 26 and eight small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with four small stator slots 25. That is, the four small stator slots 25 on one side of the large stator slot 26 and the four small stator slots 25 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 20, the large stator slot 26 and the small stator slot 25 in each stator slot group 2 are arranged in the form of "small - small - small - small - large - small - small - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent small stator slots 25, and the distance between the adjacent large stator slot 26 and small stator slot 25, along the circumference direction of the substrate 1 is equal.

As shown in Figure 37, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 36 and Fig. 38, 8-16 buckle grooves 3 are uniformly arranged on the outer ring surface of the substrate 1 along the circumference direction of the substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4mm and the height the processing groove 4 is 1.5-4mm.

For the stator lamination with unequal slots for use in three-phase asynchronous motor having low harmonic and unequal turns winding of embodiment 20, the total number of large stator slots 26 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 20, the copper saving is measured to be 0.1-0.25kg/kW, and the efficiency of the motor reaches the efficiency value of IE5 standard.

### Embodiment 21

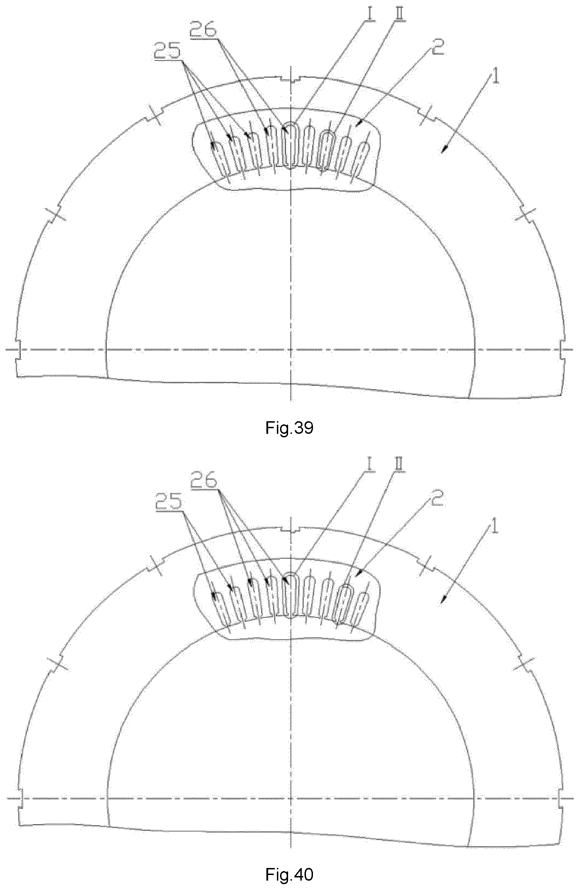

As shown in Fig. 39, the stator lamination with unequal slots for use in three-phase asynchronous motor having low harmonic and unequal turns winding of embodiment 21 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including three large stator slots 26 and six small stator slots 25. The arrangement of the large stator slot 26 and the small stator slot 25 in the stator slot group 2 is as follows: the three large stator slots 26 are arranged in the middle of the stator slot group 2, and the two sides of the three large stator slots 26 are respectively symmetrically arranged with three small stator slots 25. That is, the three small stator slots 25 on one side of the three large stator slots 26 and the three small stator slots 25 on the other side of the three large stator slots 26 are symmetrically arranged with respect to the large stator slot 26 in the middle position. Therefore, in the stator lamination with unequal slots for use in three-phase asynchronous motor having low harmonic and unequal turns winding of embodiment 21, the large stator slot 26 and the small stator slot 25 in each stator slot group 2 are arranged in the form of "small - small - small - large - large - large - small - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 21, the basic slot shape of large stator slot 26 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 21, similar to embodiment 20, the total number of large stator slots 26 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 21, the copper saving is measured to be 0.1-0.25kg/kW, and the efficiency of the motor reaches the efficiency value of IE5 standard.

### Embodiment 22

As shown in Fig. 40, the stator lamination with unequal slots for use in three-phase asynchronous motor having low harmonic and unequal turns winding of embodiment 22 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including five large stator slots 26 and four small stator slots 25. The arrangement of the large stator slot 26 and the small stator slot 25 in the stator slot group 2 is as follows: the five large stator slots 26 are arranged in the middle of the stator slot group 2, and the two sides of the five large stator slots 26 are respectively symmetrically arranged with two small stator slots 25. That is, the two small stator slots 25 on one side of the five large stator slots 26 and the two small stator slots 25 on the other side of the five large stator slots 26 are symmetrically arranged with respect to the large stator slot 26 in the middle position. Therefore, in the stator lamination with unequal slots for use in three-phase asynchronous motor having low harmonic and unequal turns winding of embodiment 22, the large stator slot 26 and the small stator slot 25 in each stator slot group 2 are arranged in the form of "small - small - large - large - large - large - large - small - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 22, the basic slot shape of large stator slot 26 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 22, similar to embodiment 20, the total number of large stator slots 26 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 22, the copper saving is measured to be 0.1-0.25kg/kW, and the efficiency of the motor reaches the efficiency value of IE5 standard.

### Embodiment 23

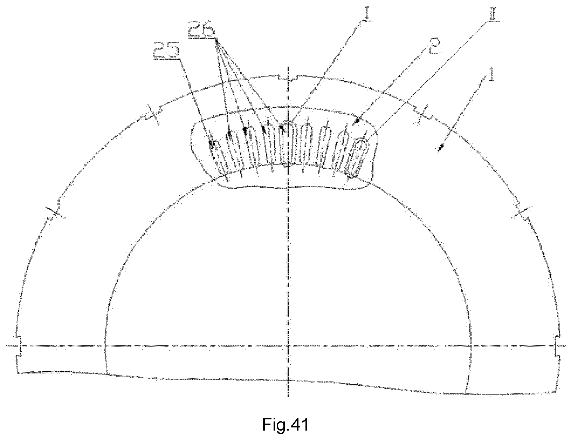

As shown in Fig. 41, the stator lamination with unequal slots for use in three-phase asynchronous motor having low harmonic and unequal turns winding of embodiment 23 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including seven large stator slots 26 and two small stator slots 25. The arrangement of the large stator slot 26 and the small stator slot 25 in the stator slot group 2 is as follows: the seven large stator slots 26 are arranged in the middle of the stator slot group 2, and the two sides of the seven large stator slots 26 are respectively symmetrically arranged with one small stator slot 25. That is, the one small stator slot 25 on one side of the seven large stator slots 26 and the one small stator slot 25 on the other side of the seven large stator slots 26 are symmetrically arranged with respect to the large stator slot 26 in the middle position. Therefore, in the stator lamination with unequal slots for use in three-phase asynchronous motor having low harmonic and unequal turns winding of embodiment 23, the large stator slot 26 and the small stator slot 25 in each stator slot group 2 are arranged in the form of "small - large - large - large - large - large - large - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slots 26, and the distance between the adjacent large stator slot 26 and small stator slot 25, along the circumference direction of the substrate 1 is equal.

In the stator lamination with unequal slots for use in three-phase asynchronous motor having low harmonic and unequal turns winding of embodiment 23, the basic slot shape of large stator slot 26 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 23, similar to embodiment 20, the total number of large stator slots 26 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 23, the copper saving is measured to be 0.1-0.25kg/kW, and the efficiency of the motor reaches the efficiency value of IE5 standard.

### Embodiment 24

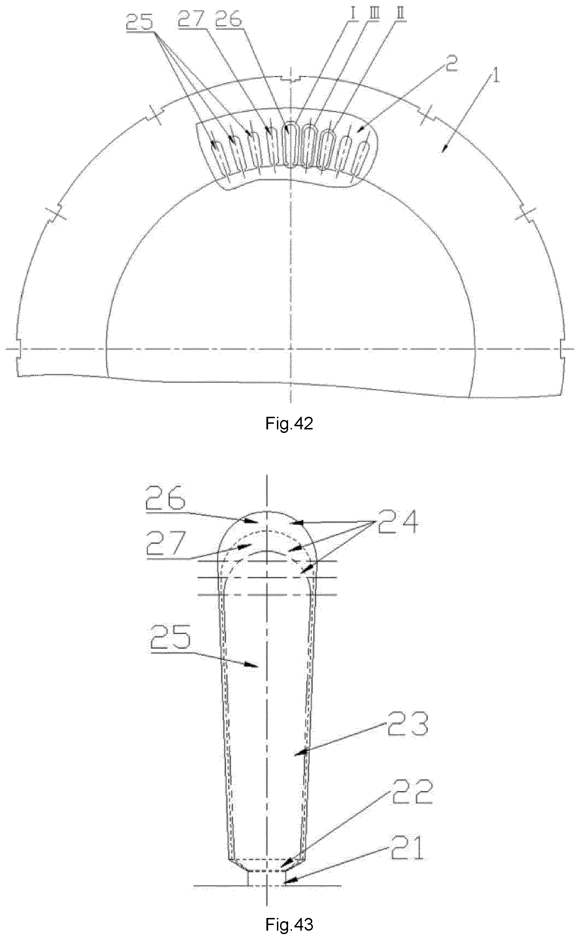

As shown in Fig. 42, the stator lamination with unequal slots for use in three-phase asynchronous motor having low harmonic and unequal turns winding of embodiment 24 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including one large stator slot 26, two middle stator slots 27 and six small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with three small stator slots 25, and between the large stator slot 26 and the small stator slot 25 are respectively symmetrically arranged with one middle stator slot 27. That is, the three small stator slots 25 on one side of the large stator slot 26 and the three small stator slots 25 on the other side of the large stator slot 26 are symmetrically arranged with respect to the large stator slot 26 in the middle position, and the one middle stator slot 27 on one side of the large stator slot 26 and the one middle stator slot 27 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 24, the large stator slot 26, the middle stator slot 27 and the small stator slot 25 in each stator slot group 2 are arranged in the form of "small - small - small - middle - large - middle - small - small - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent small stator slots 25, the distance between the adjacent large stator slot 26 and middle stator slot 27, and the distance between the adjacent middle stator slot 27 and small stator slot 25, along the circumference direction of the substrate 1 is equal.

As shown in Figure 43, the basic slot shape of the large stator slot 26, the middle stator slot 27 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26, the middle stator slot 27 and the small stator slot 25 close to the inner ring surface of the substrate 1 is set as the rectangular slot 21, the width of the rectangular slot 21 is 2.5-4.2mm, the height of the rectangular slot 21 is 0.9-2.0mm; the second isosceles trapezoidal slot 23 is arranged at the end of the first isosceles trapezoidal slot 22 far from the center of the substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 is 5-10 mm, the angle between the hypotenuse and the lower base of the first isosceles trapezoidal slot 22 is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

In the stator lamination with unequal slots for use in three-phase asynchronous motor having low harmonic and unequal turns winding of embodiment 24, the setting of buckle groove 3 and processing groove 4 will not be described in detail here because they are the same as those of embodiment 20.

For the stator lamination with unequal slots for use in three-phase asynchronous motor having low harmonic and unequal turns winding of embodiment 24, similar to embodiment 20, the total number of large stator slots 26, middle stator slot 27 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 24, the copper saving is measured to be 0.1-0.25kg/kW, and the efficiency of the motor reaches the efficiency value of IE5 standard.

### Embodiment 25

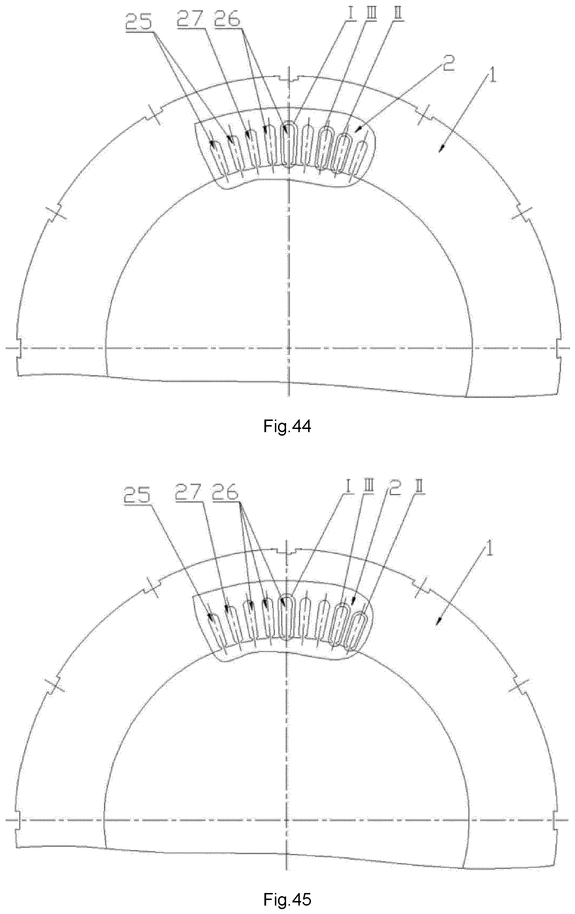

As shown in Fig. 44, the stator lamination with unequal slots for use in three-phase asynchronous motor having low harmonic and unequal turns winding of embodiment 25 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including three large stator slots 26, two middle stator slots 27 and four small stator slots 25. The arrangement of the large stator slot 26, the middle stator slot 27 and the small stator slot 25 in the stator slot group 2 is as follows: the three large stator slots 26 are arranged in the middle of the stator slot group 2, the two sides of the three large stator slots 26 are respectively symmetrically arranged with two small stator slots 25, and between the large stator slot 26 and the small stator slot 25 are respectively symmetrically arranged with one middle stator slot 27. That is, the two small stator slots 25 on one side of the three large stator slots 26 and the two small stator slots 25 on the other side of the three large stator slots 26 are symmetrically arranged with respect to the large stator slot 26 in the middle position, and the one middle stator slot 27 on one side of the three large stator slots 26 and the one middle stator slot 27 on the other side of the three large stator slots 26 are symmetrically arranged with respect to the large stator slot 26 in the middle position. Therefore, in the stator lamination with unequal slots for use in three-phase asynchronous motor having low harmonic and unequal turns winding of embodiment 25, the large stator slot 26, the middle stator slot 27 and the small stator slot 25 in each stator slot group 2 are arranged in the form of "small - small - middle - large - large - large - middle - small - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slots 26, the distance between the adjacent small stator slots 25, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 25, the basic slot shape of large stator slot 26, middle stator slot 27 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 25, similar to embodiment 20, the total number of large stator slots 26, middle stator slot 27 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 25, the copper saving is measured to be 0.1-0.25kg/kW, and the efficiency of the motor reaches the efficiency value of IE5 standard.

### Embodiment 26

As shown in Fig. 45, the stator lamination with unequal slots for use in three-phase asynchronous motor having low harmonic and unequal turns winding of embodiment 26 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including five large stator slots 26, two middle stator slots 27 and two small stator slots 25. The arrangement of the large stator slot 26, the middle stator slot 27 and the small stator slot 25 in the stator slot group 2 is as follows: the five large stator slots 26 are arranged in the middle of the stator slot group 2, the two sides of the five large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the five large stator slots 26 and the one small stator slot 25 on the other side of the five large stator slots 26 are symmetrically arranged with respect to the large stator slot 26 in the middle position, and the one middle stator slot 27 on one side of the five large stator slots 26 and the one middle stator slot 27 on the other side of the five large stator slots 26 are symmetrically arranged with respect to the large stator slot 26 in the middle position. Therefore, in the stator lamination with unequal slots for use in three-phase asynchronous motor having low harmonic and unequal turns winding of embodiment 26, the large stator slot 26, the middle stator slot 27 and the small stator slot 25 in each stator slot group 2 are arranged in the form of "small - middle - large - large - large - large - large - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 26, the basic slot shape of large stator slot 26, middle stator slot 27 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 26, similar to embodiment 20, the total number of large stator slots 26, middle stator slot 27 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 26, the copper saving is measured to be 0.1-0.25kg/kW, and the efficiency of the motor reaches the efficiency value of IE5 standard.

### Embodiment 27

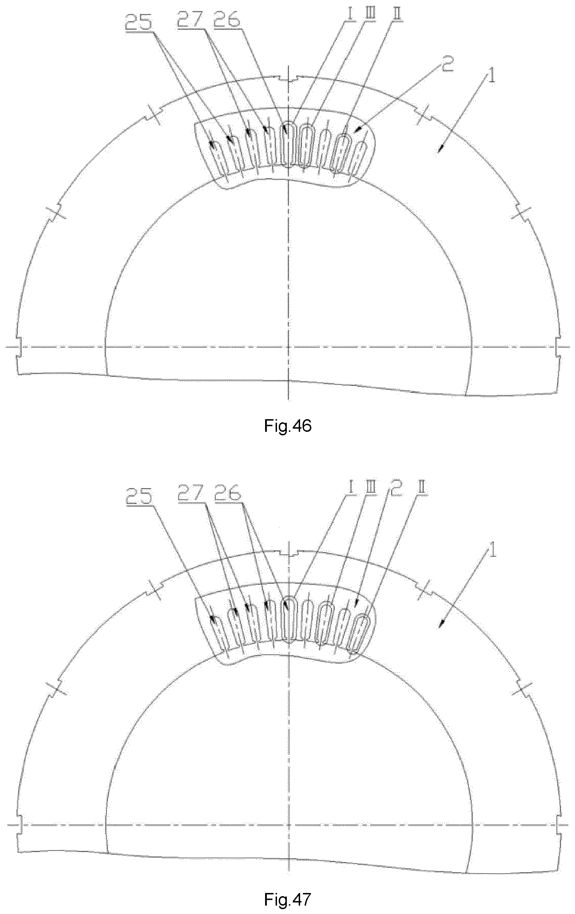

As shown in Fig. 46, the stator lamination with unequal slots for use in three-phase asynchronous motor having low harmonic and unequal turns winding of embodiment 27 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including one large stator slot 26, four middle stator slots 27 and four small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the one large stator slot 26 are respectively symmetrically arranged with two small stator slots 25, and between the large stator slot 26 and the small stator slot 25 are respectively symmetrically arranged with two middle stator slots 27. That is, the two small stator slots 25 on one side of the large stator slot 26 and the two small stator slots 25 on the other side of the large stator slot 26 are symmetrically arranged with respect to the large stator slot 26 in the middle position, and the two middle stator slots 27 on one side of the large stator slot 26 and the two middle stator slots 27 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 27, the large stator slot 26, the middle stator slot 27 and the small stator slot 25 in each stator slot group 2 are arranged in the form of "small - small - middle - middle - large - middle - middle - small - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent middle stator slots 27, the distance between the adjacent small stator slots 25, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 27, the basic slot shape of large stator slot 26, middle stator slot 27 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 27, similar to embodiment 20, the total number of large stator slots 26, middle stator slot 27 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 27, the copper saving is measured to be 0.1-0.25kg/kW, and the efficiency of the motor reaches the efficiency value of IE5 standard.

### Embodiment 28

As shown in Fig. 47, the stator lamination with unequal slots for use in three-phase asynchronous motor having low harmonic and unequal turns winding of embodiment 28 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including three large stator slots 26, four middle stator slots 27 and two small stator slots 25. The arrangement of the large stator slot 26, the middle stator slot 27 and the small stator slot 25 in the stator slot group 2 is as follows: the three large stator slots 26 are arranged in the middle of the stator slot group 2, the two sides of the three large stator slots 26 are respectively symmetrically arranged with one small stator slot 25, and between the large stator slot 26 and the small stator slot 25 are respectively symmetrically arranged with two middle stator slots 27. That is, the one small stator slot 25 on one side of the three large stator slots 26 and the one small stator slot 25 on the other side of the three large stator slots 26 are symmetrically arranged with respect to the large stator slot 26 in the middle position, and the two middle stator slots 27 on one side of the three large stator slots 26 and the two middle stator slots 27 on the other side of the three large stator slots 26 are symmetrically arranged with respect to the large stator slot 26 in the middle position. Therefore, in the stator lamination with unequal slots for use in three-phase asynchronous motor having low harmonic and unequal turns winding of embodiment 28, the large stator slot 26, the middle stator slot 27 and the small stator slot 25 in each stator slot group 2 are arranged in the form of "small - middle - middle - large - large - large - middle - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slots 26, the distance between the adjacent middle stator slots 27, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 28, the basic slot shape of large stator slot 26, middle stator slot 27 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 28, similar to embodiment 20, the total number of large stator slots 26, middle stator slot 27 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 28, the copper saving is measured to be 0.1-0.25kg/kW, and the efficiency of the motor reaches the efficiency value of IE5 standard.

### Embodiment 29

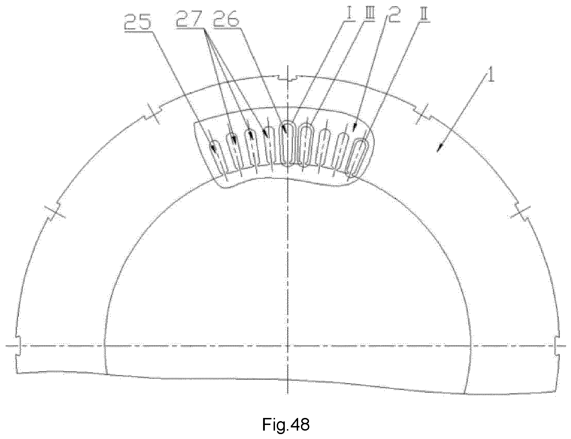

As shown in Fig. 48, the stator lamination with unequal slots for use in three-phase asynchronous motor having low harmonic and unequal turns winding of embodiment 29 includes a ring-shaped substrate 1, and at least six stator slot groups 2 for placing copper wire which are radially uniformly arranged on the inner ring surface of the substrate 1 along the circumference direction of the substrate 1. The number of stator slots per pole and phase in each stator slot group 2 is nine, including one large stator slot 26, six middle stator slots 27 and two small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the one large stator slot 26 are respectively symmetrically arranged with one small stator slot 25, and between the large stator slot 26 and the small stator slot 25 are respectively symmetrically arranged with three middle stator slots 27. That is, the one small stator slot 25 on one side of the large stator slot 26 and the one small stator slot 25 on the other side of the large stator slot 26 are symmetrically arranged with respect to the large stator slot 26 in the middle position, and the three middle stator slots 27 on one side of the large stator slot 26 and the three middle stator slots 27 on the other side of the large stator slot 26 are symmetrically arranged with respect to the large stator slot 26 in the middle position. Therefore, in the stator lamination with unequal slots for use in three-phase asynchronous motor having low harmonic and unequal turns winding of embodiment 29, the large stator slot 26, the middle stator slot 27 and the small stator slot 25 in each stator slot group 2 are arranged in the form of "small - middle - middle - middle - large - middle - middle - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent middle stator slots 27, the distance between the adjacent large stator slot 26 and middle stator slot 27, and the distance between the adjacent middle stator slot 27 and small stator slot 25, along the circumference direction of the substrate 1 is equal.

In the stator lamination with unequal slots for use in three-phase asynchronous motor having low harmonic and unequal turns winding of embodiment 29, the basic slot shape of large stator slot 26, middle stator slot 27 and small stator slot 25, the setting of buckle groove 3 and processing groove 4, will not be described in detail here because they are the same as those of embodiment 20.

For the stator lamination with unequal slots for use in three-phase asynchronous motor having low harmonic and unequal turns winding of embodiment 29, similar to embodiment 20, the total number of large stator slots 26, middle stator slot 27 and small stator slots 25 in each stator slot group 2 is 27 × n, that is, 3 (phase) × 9 (number of slots per pole and phase) × n, where n is the number of poles of the motor.

According to the test data of the three-phase asynchronous motor applied the stator lamination with unequal slots of embodiment 29, the copper saving is measured to be 0.1-0.25kg/kW, and the efficiency of the motor reaches the efficiency value of IE5 standard.

It should be noted that in the context of this application, the two parallel sides of the isosceles trapezoid are called "base", among which the longer base is called "lower base" and the shorter base is called "upper base".

It should be noted that in the context of this application, the terms such as "first" and "second" are only used to distinguish one component or operation from another, and do not necessarily require or imply any such actual relationship or order between these components or operations. Moreover, the terms "include", "comprise" or any other variation thereof are intended to cover non-exclusive inclusion, so that a process, method, article or device including a series of elements includes not only those elements, but also other elements not explicitly listed, or elements inherent in such process, method, article or device. In addition, unless otherwise specified, "front", "back", "left", "right", "up", "down", "inside" and "outside" in the context of this application are all referred to the placement state shown in the figure.

It is to be understood that the foregoing description relates to exemplary embodiments of the present invention and that modifications may be made without departing from the scope of the present application as set forth in the claims.

## Claims

1. A stator lamination with unequal slots for use in three-phase asynchronous motor having low harmonic and unequal turns winding, including a ring-shaped substrate (1), wherein
at least six stator slot groups (2) for placing copper wire are radially and uniformly arranged on the inner ring surface of the substrate (1) along the circumference direction of the substrate (1), the number of stator slots per pole and phase in each stator slot group (2) is three to nine, including at least one large stator slot (26) and at least two small stator slots (25), the area of the small stator slot (25) is 80% - 95% of that of the large stator slot (26) and the center angles between the adjacent stator slots are equal;
the arrangement of the large stator slot (26) and the small stator slot (25) in each stator slot group (2) is as follows: the at least one large stator slot (26) is arranged in the middle of the stator slot group (2), and the two sides of the large stator slot (26) are respectively symmetrically arranged with one or more small stator slots (25);
the large stator slot (26) and the small stator slot (25) are semi closed pear shaped slots composed of a rectangular slot
(2), **characterized in that**
a first isosceles trapezoidal slot (22), a second isosceles trapezoidal slot (23) and a semicircle slot (24), wherein, one end of the large stator slot (26) and the small stator slot (25) close to the inner ring surface of the substrate (1) is set as the rectangular slot (21), the width of the rectangular slot (21) is 2.5-4.2mm, the height of the rectangular slot (21) is 0.9-2.0mm, the second isosceles trapezoidal slot (23) is arranged at the end of the first isosceles trapezoidal slot (22) far from the center of the substrate (1), the upper base of the first isosceles trapezoidal slot (22) is collinear with the long side of the rectangular slot (21), the lower base of the first isosceles trapezoidal slot (22) is collinear with the upper base of the second isosceles trapezoidal slot (23), the width of the lower base of the first isosceles trapezoidal slot (22) is 5-10mm, the angle between the hypotenuse and the lower base of the first isosceles trapezoidal slot (22) is 20°-30°, the width of the lower base of the second isosceles trapezoidal slot (23) is 8-15mm, and the height of the second isosceles trapezoidal slot (23) is 12-40mm, the semicircle slot (24) is arranged at the lower base of the second isosceles trapezoidal slot (23), and the diameter of the semicircle slot (24) is equal to the width of the lower base of the second isosceles trapezoidal slot (23).

2. The stator lamination with unequal slots for use in three-phase asynchronous motor having low harmonic and unequal turns winding according to claim 1, **characterized in that** the number of stator slots per pole and phase in each stator slot group (2) is three, including one large stator slot (26) and two small stator slots (25), the one large stator slot (26) is arranged in the middle of the stator slot group (2), and the two sides of the one large stator slot (26) are respectively symmetrically arranged with one small stator slot (25), the one small stator slot (25) on one side of the large stator slot (26) and the one small stator slot (25) on the other side of the large stator slot (26) are symmetrically arranged with respect to the large stator slot (26) in the middle position.

3. The stator lamination with unequal slots for use in three-phase asynchronous motor having low harmonic and unequal turns winding according to claim 1, **characterized in that** the number of stator slots per pole and phase in each stator slot group (2) is four, including two large stator slots (26) and two small stator slots (25), the two large stator slots (26) are arranged in the middle of the stator slot group (2), and the two sides of the two large stator slots (26) are respectively symmetrically arranged with one small stator slot (25), the one small stator slot (25) on one side of the two large stator slots (26) and the one small stator slot (25) on the other side of the two large stator slots (26) are symmetrically arranged with respect to the center line of the two large stator slots (26) along the circumference direction of the substrate (1).

4. The stator lamination with unequal slots for use in three-phase asynchronous motor having low harmonic and unequal turns winding according to claim 1, **characterized in that** the number of stator slots per pole and phase in each stator slot group (2) is five, and the number and arrangement of the large stator slots (26) and the small stator slots (25) are one or more of the following forms:
(i) the five stator slots per pole and phase in each stator slot group (2) include one large stator slot (26) and four small stator slots (25), the one large stator slot (26) is arranged in the middle of the stator slot group (2), and the two sides of the large stator slot (26) are respectively symmetrically arranged with two small stator slots (25), the two small stator slots (25) on one side of the large stator slot (26) and the two small stator slots (25) on the other side of the large stator slot (26) are symmetrically arranged with respect to the large stator slot (26) in the middle position;
(ii) the five stator slots per pole and phase in each stator slot group (2) include three large stator slot (26) and two small stator slots (25), the three large stator slot (26) are arranged in the middle of the stator slot group (2), and the two sides of the three large stator slots (26) are respectively symmetrically arranged with one small stator slot (25), the one small stator slot (25) on one side of the three large stator slots (26) and the one small stator slot (25) on the other side of the three large stator slots (26) are symmetrically arranged with respect to the large stator slot (26) in the middle position.

5. The stator lamination with unequal slots for use in three-phase asynchronous motor having low harmonic and unequal turns winding according to claim 1, **characterized in that** the number of stator slots per pole and phase in each stator slot group (2) is six, and the number and arrangement of the large stator slots (26) and the small stator slots (25) are one or more of the following forms:
(i) the six stator slots per pole and phase in each stator slot group (2) include two large stator slots (26) and four small stator slots (25), the two large stator slots (26) are arranged in the middle of the stator slot group (2), and the two sides of the two large stator slots (26) are respectively symmetrically arranged with two small stator slots (25), the two small stator slots (25) on one side of the two large stator slots (26) and the two small stator slots (25) on the other side of the two large stator slots (26) are symmetrically arranged with respect to the center line of the two large stator slots (26) along the circumference direction of the substrate (1);
(ii) the six stator slots per pole and phase in each stator slot group (2) include four large stator slots (26) and two small stator slots (25), the four large stator slots (26) are arranged in the middle of the stator slot group (2), and the two sides of the four large stator slots (26) are respectively symmetrically arranged with one small stator slot (25), the one small stator slot (25) on one side of the four large stator slots (26) and the one small stator slot (25) on the other side of the four large stator slots (26) are symmetrically arranged with respect to the center line of the four large stator slots (26) along the circumference direction of the substrate (1).

6. The stator lamination with unequal slots for use in three-phase asynchronous motor having low harmonic and unequal turns winding according to claim 1, **characterized in that** the number of stator slots per pole and phase in each stator slot group (2) is seven, and the number and arrangement of the large stator slots (26) and the small stator slots (25) are one or more of the following forms:
(i) the seven stator slots per pole and phase in each stator slot group (2) include one large stator slot (26) and six small stator slots (25), the one large stator slot (26) is arranged in the middle of the stator slot group (2), and the two sides of the large stator slot (26) are respectively symmetrically arranged with three small stator slots (25), the three small stator slots (25) on one side of the large stator slot (26) and the three small stator slots (25) on the other side of the large stator slot (26) are symmetrically arranged with respect to the large stator slot (26) in the middle position;
(ii) the seven stator slots per pole and phase in each stator slot group (2) include three large stator slots (26) and four small stator slots (25), the three large stator slots (26) are arranged in the middle of the stator slot group (2), and the two sides of the three large stator slots (26) are respectively symmetrically arranged with two small stator slots (25), the two small stator slots (25) on one side of the three large stator slots (26) and the two small stator slots (25) on the other side of the three large stator slots (26) are symmetrically arranged with respect to the large stator slot (26) in the middle position;
(iii) the seven stator slots per pole and phase in each stator slot group (2) include five large stator slots (26) and two small stator slots (25), the five large stator slots (26) are arranged in the middle of the stator slot group (2), and the two sides of the five large stator slots (26) are respectively symmetrically arranged with one small stator slot (25), the one small stator slot (25) on one side of the five large stator slots (26) and the one small stator slot (25) on the other side of the five large stator slots (26) are symmetrically arranged with respect to the large stator slot (26) in the middle position.

7. The stator lamination with unequal slots for use in three-phase asynchronous motor having low harmonic and unequal turns winding according to claim 1, **characterized in that** the number of stator slots per pole and phase in each stator slot group (2) is eight, and the number and arrangement of the large stator slots (26) and the small stator slots (25) are one or more of the following forms:
(i) the eight stator slots per pole and phase in each stator slot group (2) include two large stator slots (26) and six small stator slots (25), the two large stator slots (26) are arranged in the middle of the stator slot group (2), and the two sides of the two large stator slots (26) are respectively symmetrically arranged with three small stator slots (25), the three small stator slots (25) on one side of the two large stator slots (26) and the three small stator slots (25) on the other side of the two large stator slots (26) are symmetrically arranged with respect to the center line of the two large stator slots (26) along the circumference direction of the substrate (1);
(ii) the eight stator slots per pole and phase in each stator slot group (2) include four large stator slots (26) and four small stator slots (25), the four large stator slots (26) are arranged in the middle of the stator slot group (2), and the two sides of the four large stator slots (26) are respectively symmetrically arranged with two small stator slots (25), the two small stator slots (25) on one side of the four large stator slots (26) and the two small stator slots (25) on the other side of the four large stator slots (26) are symmetrically arranged with respect to the center line of the four large stator slots (26) along the circumference direction of the substrate (1);
(iii) the eight stator slots per pole and phase in each stator slot group (2) include six large stator slots (26) and two small stator slots (25), the six large stator slots (26) are arranged in the middle of the stator slot group (2), and the two sides of the six large stator slots (26) are respectively symmetrically arranged with one small stator slot (25), the one small stator slot (25) on one side of the six large stator slots (26) and the one small stator slot (25) on the other side of the six large stator slots (26) are symmetrically arranged with respect to the center line of the six large stator slots (26) along the circumference direction of the substrate (1).

8. The stator lamination with unequal slots for use in three-phase asynchronous motor having low harmonic and unequal turns winding according to claim 1, **characterized in that** the number of stator slots per pole and phase in each stator slot group (2) is nine, and the number and arrangement of the large stator slots (26) and the small stator slots (25) are one or more of the following forms:
(i) the nine stator slots per pole and phase in each stator slot group (2) include one large stator slot (26) and eight small stator slots (25), the one large stator slot (26) is arranged in the middle of the stator slot group (2), and the two sides of the large stator slot (26) are respectively symmetrically arranged with four small stator slots (25), the four small stator slots (25) on one side of the large stator slot (26) and the four small stator slots (25) on the other side of the large stator slot (26) are symmetrically arranged with respect to the large stator slot (26) in the middle position;
(ii) the nine stator slots per pole and phase in each stator slot group (2) include three large stator slots (26) and six small stator slots (25), the three large stator slots (26) are arranged in the middle of the stator slot group (2), and the two sides of the three large stator slots (26) are respectively symmetrically arranged with three small stator slots (25), the three small stator slots (25) on one side of the three large stator slots (26) and the three small stator slots (25) on the other side of the three large stator slots (26) are symmetrically arranged with respect to the large stator slot (26) in the middle position;
(iii) the nine stator slots per pole and phase in each stator slot group (2) include five large stator slots (26) and four small stator slots (25), the five large stator slots (26) are arranged in the middle of the stator slot group (2), and the two sides of the five large stator slots (26) are respectively symmetrically arranged with two small stator slots (25), the two small stator slots (25) on one side of the five large stator slots (26) and the two small stator slots (25) on the other side of the five large stator slots (26) are symmetrically arranged with respect to the large stator slot (26) in the middle position;
(iv) the nine stator slots per pole and phase in each stator slot group (2) include seven large stator slots (26) and two small stator slots (25), the seven large stator slots (26) are arranged in the middle of the stator slot group (2), and the two sides of the seven large stator slots (26) are respectively symmetrically arranged with one small stator slot (25), the one small stator slot (25) on one side of the seven large stator slots (26) and the one small stator slot (25) on the other side of the seven large stator slots (26) are symmetrically arranged with respect to the large stator slot (26) in the middle position.

9. A stator lamination with unequal slots for use in three-phase asynchronous motor having low harmonic and unequal turns winding, including a ring-shaped substrate (1), wherein
at least six stator slot groups (2) for placing copper wire are radially and uniformly arranged on the inner ring surface of the substrate (1) along the circumference direction of the substrate (1), the number of stator slots per pole and phase in each stator slot group (2) is five to nine, including at least one large stator slot (26), at least two middle stator slots (27) and at least two small stator slots (25), the area of the small stator slot (25) is 80% - 95% of that of the large stator slot (26), the area of the middle stator slot (27) is between that of the small stator slot (25) and the large stator slot (26), and the center angles between the adjacent stator slots are equal;
the arrangement of the large stator slot (26), the middle stator slot (27) and the small stator slot (25) in each stator slot group (2) is as follows: the at least one large stator slot (26) is arranged in the middle of the stator slot group (2), the two sides of the large stator slot (26) are respectively symmetrically arranged with one or more small stator slots (25), and between the large stator slot (26) and the small stator slot (25) are respectively symmetrically arranged with one or more middle stator slots (27);
the large stator slot (26), the middle stator slot (27) and the small stator slot (25) are semi closed pear shaped slots composed of a rectangular slot (21), **characterized in that**
a first isosceles trapezoidal slot (22), a second isosceles trapezoidal slot (23) and a semicircle slot (24), wherein, one end of the large stator slot (26), the middle stator slot (27) and the small stator slot (25) close to the inner ring surface of the substrate (1) is set as the rectangular slot (21), the width of the rectangular slot (21) is 2.5-4.2mm, the height of the rectangular slot (21) is 0.9-2.0mm, the second isosceles trapezoidal slot (23) is arranged at the end of the first isosceles trapezoidal slot (22) far from the center of the substrate (1), the upper base of the first isosceles trapezoidal slot (22) is collinear with the long side of the rectangular slot (21), the lower base of the first isosceles trapezoidal slot (22) is collinear with the upper base of the second isosceles trapezoidal slot (23), the width of the lower base of the first isosceles trapezoidal slot (22) is 5-10mm, the angle between the hypotenuse and the lower base of the first isosceles trapezoidal slot (22) is 20°-30°, the width of the lower base of the second isosceles trapezoidal slot (23) is 8-15mm, and the height of the second isosceles trapezoidal slot (23) is 12-40mm, the semicircle slot (24) is arranged at the lower base of the second isosceles trapezoidal slot (23), and the diameter of the semicircle slot (24) is equal to the width of the lower base of the second isosceles trapezoidal slot (23).

10. The stator lamination with unequal slots for use in three-phase asynchronous motor having low harmonic and unequal turns winding according to claim 9, **characterized in that** the number of stator slots per pole and phase in each stator slot group (2) is five, including one large stator slot (26), two middle stator slots (27) and two small stator slots (25), the one large stator slot (26) is arranged in the middle of the stator slot group (2), the two sides of the large stator slot (26) are respectively symmetrically arranged with one small stator slot (25), and between the large stator slot (26) and the small stator slot (25) are respectively symmetrically arranged with one middle stator slot (27), the one small stator slot (25) on one side of the large stator slot (26) and the one small stator slot (25) on the other side of the large stator slot (26) are symmetrically arranged with respect to the large stator slot (26) in the middle position, and the one middle stator slot (27) on one side of the large stator slot (26) and the one middle stator slot (27) on the other side of the large stator slot (26) are symmetrically arranged with respect to the large stator slot (26) in the middle position.

11. The stator lamination with unequal slots for use in three-phase asynchronous motor having low harmonic and unequal turns winding according to claim 9, **characterized in that** the number of stator slots per pole and phase in each stator slot group (2) is six, including two large stator slots (26), two middle stator slots (27) and two small stator slots (25), the two large stator slots (26) are arranged in the middle of the stator slot group (2), the two sides of the two large stator slots (26) are respectively symmetrically arranged with one small stator slot (25), and between the large stator slot (26) and the small stator slot (25) are respectively symmetrically arranged with one middle stator slot (27), the one small stator slot (25) on one side of the two large stator slots (26) and the one small stator slot (25) on the other side of the two large stator slots (26) are symmetrically arranged with respect to the center line of the two large stator slots (26) along the circumference direction of the substrate (1), and the one middle stator slot (27) on one side of the two large stator slots (26) and the one middle stator slot (27) on the other side of the two large stator slots (26) are symmetrically arranged with respect to the center line of the two large stator slots (26) along the circumference direction of the substrate (1).

12. The stator lamination with unequal slots for use in three-phase asynchronous motor having low harmonic and unequal turns winding according to claim 9, **characterized in that** the number of stator slots per pole and phase in each stator slot group (2) is seven, and the number and arrangement of the large stator slots (26), the middle stator slot (27) and the small stator slots (25) are one or more of the following forms:
(i) the seven stator slots per pole and phase in each stator slot group (2) include one large stator slot (26), two middle stator slots (27) and four small stator slots (25), the one large stator slot (26) is arranged in the middle of the stator slot group (2), the two sides of the large stator slot (26) are respectively symmetrically arranged with two small stator slots (25), and between the large stator slot (26) and the small stator slot (25) are respectively symmetrically arranged with one middle stator slot (27), the two small stator slots (25) on one side of the large stator slot (26) and the two small stator slots (25) on the other side of the large stator slot (26) are symmetrically arranged with respect to the large stator slot (26) in the middle position, and the one middle stator slot (27) on one side of the large stator slot (26) and the one middle stator slot (27) on the other side of the large stator slot (26) are symmetrically arranged with respect to the large stator slot (26) in the middle position;
(ii) the seven stator slots per pole and phase in each stator slot group (2) include three large stator slots (26), two middle stator slots (27) and two small stator slots (25), the three large stator slots (26) are arranged in the middle of the stator slot group (2), the two sides of the three large stator slots (26) are respectively symmetrically arranged with one small stator slot (25), and between the large stator slot (26) and the small stator slot (25) are respectively symmetrically arranged with one middle stator slot (27), the one small stator slot (25) on one side of the three large stator slots (26) and the one small stator slot (25) on the other side of the three large stator slots (26) are symmetrically arranged with respect to the large stator slot (26) in the middle position, and the one middle stator slot (27) on one side of the three large stator slots (26) and the one middle stator slot (27) on the other side of the three large stator slots (26) are symmetrically arranged with respect to the large stator slot (26) in the middle position;
(iii) the seven stator slots per pole and phase in each stator slot group (2) include one large stator slot (26), four middle stator slots (27) and two small stator slots (25), the one large stator slot (26) is arranged in the middle of the stator slot group (2), the two sides of the large stator slot (26) are respectively symmetrically arranged with one small stator slot (25), and between the large stator slot (26) and the small stator slot (25) are respectively symmetrically arranged with two middle stator slots (27), the one small stator slot (25) on one side of the large stator slot (26) and the one small stator slot (25) on the other side of the large stator slot (26) are symmetrically arranged with respect to the large stator slot (26) in the middle position, and the two middle stator slots (27) on one side of the large stator slot (26) and the two middle stator slots (27) on the other side of the large stator slot (26) are symmetrically arranged with respect to the large stator slot (26) in the middle position.

13. The stator lamination with unequal slots for use in three-phase asynchronous motor having low harmonic and unequal turns winding according to claim 9, **characterized in that** the number of stator slots per pole and phase in each stator slot group (2) is eight, and the number and arrangement of the large stator slots (26), the middle stator slot (27) and the small stator slots (25) are one or more of the following forms:
(i) the eight stator slots per pole and phase in each stator slot group (2) include four large stator slots (26), two middle stator slots (27) and two small stator slots (25), the four large stator slots (26) are arranged in the middle of the stator slot group (2), the two sides of the four large stator slots (26) are respectively symmetrically arranged with one small stator slot (25), and between the large stator slot (26) and the small stator slot (25) are respectively symmetrically arranged with one middle stator slot (27), the one small stator slot (25) on one side of the four large stator slots (26) and the one small stator slot (25) on the other side of the four large stator slots (26) are symmetrically arranged with respect to the center line of the four large stator slots (26) along the circumference direction of the substrate (1), and the one middle stator slot (27) on one side of the four large stator slots (26) and the one middle stator slot (27) on the other side of the four large stator slots (26) are symmetrically arranged with respect to the center line of the four large stator slots (26) along the circumference direction of the substrate (1);
(ii) the eight stator slots per pole and phase in each stator slot group (2) include two large stator slots (26), four middle stator slots (27) and two small stator slots (25), the two large stator slots (26) are arranged in the middle of the stator slot group (2), the two sides of the two large stator slots (26) are respectively symmetrically arranged with one small stator slot (25), and between the large stator slot (26) and the small stator slot (25) are respectively symmetrically arranged with two middle stator slots (27), the one small stator slot (25) on one side of the two large stator slots (26) and the one small stator slot (25) on the other side of the two large stator slots (26) are symmetrically arranged with respect to the center line of the two large stator slots (26) along the circumference direction of the substrate (1), and the two middle stator slots (27) on one side of the two large stator slots (26) and the two middle stator slots (27) on the other side of the two large stator slots (26) are symmetrically arranged with respect to the center line of the two large stator slots (26) along the circumference direction of the substrate (1).

14. The stator lamination with unequal slots for use in three-phase asynchronous motor having low harmonic and unequal turns winding according to claim 9, **characterized in that** the number of stator slots per pole and phase in each stator slot group (2) is nine, and the number and arrangement of the large stator slots (26), the middle stator slot (27) and the small stator slots (25) are one or more of the following forms:
(i) the nine stator slots per pole and phase in each stator slot group (2) include one large stator slot (26), two middle stator slots (27) and six small stator slots (25), the one large stator slot (26) is arranged in the middle of the stator slot group (2), the two sides of the large stator slot (26) are respectively symmetrically arranged with three small stator slots (25), and between the large stator slot (26) and the small stator slot (25) are respectively symmetrically arranged with one middle stator slot (27), the three small stator slots (25) on one side of the large stator slot (26) and the three small stator slots (25) on the other side of the large stator slot (26) are symmetrically arranged with respect to the large stator slot (26) in the middle position, and the one middle stator slot (27) on one side of the large stator slot (26) and the one middle stator slot (27) on the other side of the large stator slot (26) are symmetrically arranged with respect to the large stator slot (26) in the middle position;
(ii) the nine stator slots per pole and phase in each stator slot group (2) include three large stator slots (26), two middle stator slots (27) and four small stator slots (25), the three large stator slots (26) are arranged in the middle of the stator slot group (2), the two sides of the three large stator slots (26) are respectively symmetrically arranged with two small stator slots (25), and between the large stator slot (26) and the small stator slot (25) are respectively symmetrically arranged with one middle stator slot (27), the two small stator slots (25) on one side of the three large stator slots (26) and the two small stator slots (25) on the other side of the three large stator slots (26) are symmetrically arranged with respect to the large stator slot (26) in the middle position, and the one middle stator slot (27) on one side of the three large stator slots (26) and the one middle stator slot (27) on the other side of the three large stator slots (26) are symmetrically arranged with respect to the large stator slot (26) in the middle position;
(iii) the nine stator slots per pole and phase in each stator slot group (2) include five large stator slots (26), two middle stator slots (27) and two small stator slots (25), the five large stator slots (26) are arranged in the middle of the stator slot group (2), the two sides of the five large stator slots (26) are respectively symmetrically arranged with one small stator slot (25), and between the large stator slot (26) and the small stator slot (25) are respectively symmetrically arranged with one middle stator slot (27), the one small stator slot (25) on one side of the five large stator slots (26) and the one small stator slot (25) on the other side of the five large stator slots (26) are symmetrically arranged with respect to the large stator slot (26) in the middle position, and the one middle stator slot (27) on one side of the five large stator slots (26) and the one middle stator slot (27) on the other side of the five large stator slots (26) are symmetrically arranged with respect to the large stator slot (26) in the middle position;
(iv) the nine stator slots per pole and phase in each stator slot group (2) include one large stator slot (26), four middle stator slots (27) and four small stator slots (25), the one large stator slot (26) is arranged in the middle of the stator slot group (2), the two sides of the large stator slot (26) are respectively symmetrically arranged with two small stator slots (25), and between the large stator slot (26) and the small stator slot (25) are respectively symmetrically arranged with two middle stator slots (27), the two small stator slots (25) on one side of the large stator slot (26) and the two small stator slots (25) on the other side of the large stator slot (26) are symmetrically arranged with respect to the large stator slot (26) in the middle position, and the two middle stator slots (27) on one side of the large stator slot (26) and the two middle stator slots (27) on the other side of the large stator slot (26) are symmetrically arranged with respect to the large stator slot (26) in the middle position;
(v) the nine stator slots per pole and phase in each stator slot group (2) include three large stator slots (26), four middle stator slots (27) and two small stator slots (25), the three large stator slots (26) are arranged in the middle of the stator slot group (2), the two sides of the three large stator slots (26) are respectively symmetrically arranged with one small stator slot (25), and between the large stator slot (26) and the small stator slot (25) are respectively symmetrically arranged with two middle stator slots (27), the one small stator slot (25) on one side of the three large stator slots (26) and the one small stator slot (25) on the other side of the three large stator slots (26) are symmetrically arranged with respect to the large stator slot (26) in the middle position, and the two middle stator slots (27) on one side of the three large stator slots (26) and the two middle stator slots (27) on the other side of the three large stator slots (26) are symmetrically arranged with respect to the large stator slot (26) in the middle position;
(vi) the nine stator slots per pole and phase in each stator slot group (2) include one large stator slot (26), six middle stator slots (27) and two small stator slots (25), the one large stator slot (26) is arranged in the middle of the stator slot group (2), the two sides of the large stator slot (26) are respectively symmetrically arranged with one small stator slot (25), and between the large stator slot (26) and the small stator slot (25) are respectively symmetrically arranged with three middle stator slots (27), the one small stator slot (25) on one side of the large stator slot (26) and the one small stator slot (25) on the other side of the large stator slot (26) are symmetrically arranged with respect to the large stator slot (26) in the middle position, and the three middle stator slots (27) on one side of the large stator slot (26) and the three middle stator slots (27) on the other side of the large stator slot (26) are symmetrically arranged with respect to the large stator slot (26) in the middle position.

15. The stator lamination with unequal slots for use in three-phase asynchronous motor having low harmonic and unequal turns winding according to any one of claims 1 to 14, **characterized in that** 8-16 buckle grooves (3) are uniformly arranged on the outer ring surface of the substrate (1) along the circumference direction of the substrate (1) to install the buckle, the lower base of the buckle groove (3) is set as a straight line, the upper base of the buckle groove (3) is naturally opened along the circumference direction of the substrate (1), the width of the buckle groove (3) is 14-25mm, the height of the buckle groove (3) is 3-5mm, the angle between the hypotenuse and the base of the buckle groove (3) is 15°-25°, and a processing groove (4) is set at the bottom of any one of the buckle groove (3).

## Patentansprüche

1. Statorblech mit ungleichen Schlitzen zur Verwendung in einem Dreiphasen-Asynchronmotor mit einer Wicklung mit niedrigen Oberwellen und ungleichen Windungen, mit einem ringförmigen Substrat (1), wobei:
mindestens sechs Statornutgruppen (2) zum Anbringen von Kupferdraht radial und gleichmäßig auf der inneren Ringfläche des Substrats (1) entlang der Umfangsrichtung des Substrats (1) angeordnet sind, die Anzahl der Statornuten pro Pol und Phase in jeder Statornutgruppe (2) drei bis neun beträgt, wobei mindestens eine große Statornut (26) und mindestens zwei kleinen Statornuten (25) vorhanden sind, wobei die Fläche der kleinen Statornut (25) 80% - 95% derjenigen der großen Statornut (26) beträgt und die Mittenwinkel zwischen den benachbarten Statornuten gleich sind;
die Anordnung der großen Statornut (26) und der kleinen Statornut (25) in jeder Statornutgruppe (2) wie folgt ist: die mindestens eine große Statornut (26) ist in der Mitte der Statornutgruppe (2) angeordnet, und die beiden Seiten der großen Statornut (26) sind jeweils symmetrisch mit einer oder mehreren kleinen Statornuten (25) angeordnet;
die große Statornut (26) und die kleine Statornut (25) halb geschlossene birnenförmige Nuten sind, die aus einer rechteckigen Nut (21) bestehen, **dadurch gekennzeichnet, dass** eine erste gleichschenklige trapezförmige Nut (22), eine zweite gleichschenklige trapezförmige Nut (23) und eine halbkreisförmige Nut (24) vorgesehen sind, wobei ein Ende der großen Statornut (26) und der kleinen Statornut (25) nahe der inneren Ringfläche des Substrats (1) als die rechteckige Nut (21) festgelegt ist, die Breite der rechteckigen Nut (21) 2.5-4.2mm ist, die Höhe der rechteckigen Nut (21) 0.9-2.0mm ist, die zweite gleichschenklige trapezförmige Nut (23) am Ende der ersten gleichschenkligen trapezförmigen Nut (22) weit von der Mitte des Substrats (1) angeordnet ist, die obere Basis der ersten gleichschenkligen trapezförmigen Nut (22) kollinear mit der langen Seite der rechteckigen Nut (21) ist, die untere Basis der ersten gleichschenkligen trapezförmigen Nut (22) kollinear mit der oberen Basis der zweiten gleichschenkligen trapezförmigen Nut (23) ist, die Breite der unteren Basis der ersten gleichschenkligen trapezförmigen Nut (22) 5-10 mm beträgt, der Winkel zwischen der Hypotenuse und der unteren Basis der ersten gleichschenkligen trapezförmigen Nut (22) 20°-30° beträgt, die Breite der unteren Basis der zweiten gleichschenkligen trapezförmigen Nut (23) 8-15 mm beträgt und die Höhe der zweiten gleichschenkligen trapezförmigen Nut (23) 12-40 mm beträgt, die halbkreisförmige Nut (24) an der unteren Basis der zweiten gleichschenkligen trapezförmigen Nut (23) angeordnet ist, und der Durchmesser der halbkreisförmigen Nut (24) gleich der Breite der unteren Basis der zweiten gleichschenkligen trapezförmigen Nut (23) ist.

2. Statorblech mit ungleichen Nuten zur Verwendung in einem Drehstrom-Asynchronmotor mit einer Wicklung mit niedrigen Oberschwingungen und ungleichen Windungen nach Anspruch 1, **dadurch gekennzeichnet, dass** die Anzahl der Statornuten pro Pol und Phase in jeder Statornutgruppe (2) drei beträgt, einschließlich einer großen Statornut (26) und zwei kleinen Statornuten (25), wobei die eine große Statornut (26) in der Mitte der Statornutgruppe (2) angeordnet ist, und die beiden Seiten der einen großen Statornut (26) jeweils symmetrisch mit einer kleinen Statornut (25) angeordnet sind, wobei die eine kleine Statornut (25) auf einer Seite der großen Statornut (26) und die eine kleine Statornut (25) auf der anderen Seite der großen Statornut (26) symmetrisch in Bezug auf die große Statornut (26) in der mittleren Position angeordnet sind.

3. Statorblech mit ungleichen Nuten zur Verwendung in einem Drehstrom-Asynchronmotor mit einer Wicklung mit niedrigen Oberschwingungen und ungleichen Windungen nach Anspruch 1, **dadurch gekennzeichnet, dass** die Anzahl der Statornuten pro Pol und Phase in jeder Statornutgruppe (2) vier beträgt, einschließlich zwei großer Statornuten (26) und zwei kleiner Statornuten (25), wobei die zwei großen Statornuten (26) in der Mitte der Statornutgruppe (2) angeordnet sind, und die beiden Seiten der beiden großen Statornuten (26) jeweils symmetrisch mit einer kleinen Statornut (25) angeordnet sind, wobei die eine kleine Statornut (25) auf einer Seite der beiden großen Statornuten (26) und die eine kleine Statornut (25) auf der anderen Seite der beiden großen Statornuten (26) symmetrisch in Bezug auf die Mittellinie der beiden großen Statornuten (26) entlang der Umfangsrichtung des Substrats (1) angeordnet sind.

4. Statorblech mit ungleichen Nuten zur Verwendung in einem Drehstrom-Asynchronmotor mit einer Wicklung mit niedrigen Oberschwingungen und ungleichen Windungen nach Anspruch 1, **dadurch gekennzeichnet, dass** die Anzahl der Statornuten pro Pol und Phase in jeder Statornutgruppe (2) fünf beträgt und die Anzahl und Anordnung der großen Statornuten (26) und der kleinen Statornuten (25) eine oder mehrere der folgenden Formen aufweist:
(i) die fünf Statornuten pro Pol und Phase in jeder Statornutgruppe (2) eine große Statornut (26) und vier kleine Statornuten (25) umfassen, die eine große Statornut (26) in der Mitte der Statornutgruppe (2) angeordnet ist, und die beiden Seiten der großen Statornut (26) jeweils symmetrisch mit zwei kleinen Statornuten (25) angeordnet sind, die beiden kleinen Statornuten (25) auf einer Seite der großen Statornut (26) und die beiden kleinen Statornuten (25) auf der anderen Seite der großen Statornut (26) symmetrisch in Bezug auf die große Statornut (26) in der mittleren Position angeordnet sind;
(ii) die fünf Statornuten pro Pol und Phase in jeder Statornutgruppe (2) drei große Statornuten (26) und zwei kleine Statornuten (25) umfassen, die drei großen Statornuten (26) in der Mitte der Statornutgruppe (2) angeordnet sind und die beiden Seiten der drei großen Statornuten (26) jeweils symmetrisch mit einer kleinen Statornut (25) angeordnet sind, die eine kleine Statornut (25) auf einer Seite der drei großen Statornuten (26) und die eine kleine Statornut (25) auf der anderen Seite der drei großen Statornuten (26) symmetrisch in Bezug auf die große Statornut (26) in der mittleren Position angeordnet sind.

5. Statorblech mit ungleichen Nuten zur Verwendung in einem Drehstrom-Asynchronmotor mit einer Wicklung mit niedrigen Oberschwingungen und ungleichen Windungen nach Anspruch 1, **dadurch gekennzeichnet, dass** die Anzahl der Statornuten pro Pol und Phase in jeder Statornutgruppe (2) sechs beträgt und die Anzahl und Anordnung der großen Statornuten (26) und der kleinen Statornuten (25) eine oder mehrere der folgenden Formen aufweist:
(i) die sechs Statornuten pro Pol und Phase in jeder Statornutgruppe (2) zwei große Statornuten (26) und vier kleine Statornuten (25) umfassen, die beiden großen Statornuten (26) in der Mitte der Statornutgruppe (2) angeordnet sind und die beiden Seiten der beiden großen Statornuten (26) jeweils symmetrisch mit zwei kleinen Statornuten (25) angeordnet sind, die zwei kleinen Statornuten (25) auf einer Seite der zwei großen Statornuten (26) und die zwei kleinen Statornuten (25) auf der anderen Seite der zwei großen Statornuten (26) symmetrisch in Bezug auf die Mittellinie der zwei großen Statornuten (26) entlang der Umfangsrichtung des Substrats (1) angeordnet sind;
(ii) die sechs Statornuten pro Pol und Phase in jeder Statornutgruppe (2) vier große Statornuten (26) und zwei kleine Statornuten (25) umfassen, die vier großen Statornuten (26) in der Mitte der Statornutgruppe (2) angeordnet sind, und die beiden Seiten der vier großen Statornuten (26) jeweils symmetrisch mit einer kleinen Statornut (25) angeordnet sind, die eine kleine Statornut (25) auf einer Seite der vier großen Statornuten (26) und die eine kleine Statornut (25) auf der anderen Seite der vier großen Statornuten (26) symmetrisch in Bezug auf die Mittellinie der vier großen Statornuten (26) entlang der Umfangsrichtung des Substrats (1) angeordnet sind.

6. Statorblech mit ungleichen Nuten zur Verwendung in einem Drehstrom-Asynchronmotor mit einer Wicklung mit niedrigen Oberschwingungen und ungleichen Windungen nach Anspruch 1, **dadurch gekennzeichnet, dass** die Anzahl der Statornuten pro Pol und Phase in jeder Statornutgruppe (2) sieben beträgt und die Anzahl und Anordnung der großen Statornuten (26) und der kleinen Statornuten (25) eine oder mehrere der folgenden Formen aufweist:
(i) die sieben Statornuten pro Pol und Phase in jeder Statornutgruppe (2) eine große Statornut (26) und sechs kleine Statornuten (25) umfassen, die eine große Statornut (26) in der Mitte der Statornutgruppe (2) angeordnet ist, und die beiden Seiten der großen Statornut (26) jeweils symmetrisch mit drei kleinen Statornuten (25) angeordnet sind, die drei kleinen Statornuten (25) auf einer Seite der großen Statornute (26) und die drei kleinen Statornuten (25) auf der anderen Seite der großen Statornut (26) symmetrisch in Bezug auf die große Statornut (26) in der mittleren Position angeordnet sind;
(ii) die sieben Statornuten pro Pol und Phase in jeder Statornutgruppe (2) drei große Statornuten (26) und vier kleine Statornuten (25) umfassen, die drei großen Statornuten (26) in der Mitte der Statornutgruppe (2) angeordnet sind und die beiden Seiten der drei großen Statornuten (26) jeweils symmetrisch mit zwei kleinen Statornuten (25) angeordnet sind, die zwei kleinen Statornuten (25) auf einer Seite der drei großen Statornuten (26) und die zwei kleinen Statornuten (25) auf der anderen Seite der drei großen Statornuten (26) symmetrisch in Bezug auf die große Statornut (26) in der mittleren Position angeordnet sind;
(iii) die sieben Statornuten pro Pol und Phase in jeder Statornutgruppe (2) fünf große Statornuten (26) und zwei kleine Statornuten (25) umfassen, die fünf großen Statornuten (26) in der Mitte der Statornutgruppe (2) angeordnet sind, und die beiden Seiten der fünf großen Statornuten (26) jeweils symmetrisch mit einer kleinen Statornut (25) angeordnet sind, die eine kleine Statornut (25) auf einer Seite der fünf großen Statornuten (26) und die eine kleine Statornut (25) auf der anderen Seite der fünf großen Statornuten (26) symmetrisch in Bezug auf die große Statornut (26) in der mittleren Position angeordnet sind.

7. Statorblech mit ungleichen Nuten zur Verwendung in einem Drehstrom-Asynchronmotor mit einer Wicklung mit niedrigen Oberschwingungen und ungleichen Windungen nach Anspruch 1, **dadurch gekennzeichnet, dass** die Anzahl der Statornuten pro Pol und Phase in jeder Statornutgruppe (2) acht beträgt und die Anzahl und Anordnung der großen Statornuten (26) und der kleinen Statornuten (25) eine oder mehrere der folgenden Formen aufweist:
(i) die acht Statornuten pro Pol und Phase in jeder Statornutgruppe (2) zwei große Statornuten (26) und sechs kleine Statornuten (25) umfassen, die beiden großen Statornuten (26) in der Mitte der Statornutgruppe (2) angeordnet sind und die beiden Seiten der beiden großen Statornuten (26) jeweils symmetrisch mit drei kleinen Statornuten (25) angeordnet sind, die drei kleinen Statornuten (25) auf einer Seite der zwei großen Statornuten (26) und die drei kleinen Statornuten (25) auf der anderen Seite der zwei großen Statornuten (26) symmetrisch in Bezug auf die Mittellinie der zwei großen Statornuten (26) entlang der Umfangsrichtung des Substrats (1) angeordnet sind;
(ii) die acht Statornuten pro Pol und Phase in jeder Statornutgruppe (2) vier große Statornuten (26) und vier kleine Statornuten (25) umfassen, die vier großen Statornuten (26) in der Mitte der Statornutgruppe (2) angeordnet sind und die beiden Seiten der vier großen Statornuten (26) jeweils symmetrisch mit zwei kleinen Statornuten (25) angeordnet sind, die zwei kleinen Statornuten (25) auf einer Seite der vier großen Statornuten (26) und die zwei kleinen Statornuten (25) auf der anderen Seite der vier großen Statornuten (26) symmetrisch in Bezug auf die Mittellinie der vier großen Statornuten (26) entlang der Umfangsrichtung des Substrats (1) angeordnet sind;
(iii) die acht Statornuten pro Pol und Phase in jeder Statornutgruppe (2) sechs große Statornuten (26) und zwei kleine Statornuten (25) umfassen, die sechs großen Statornuten (26) in der Mitte der Statornutgruppe (2) angeordnet sind, und die beiden Seiten der sechs großen Statornuten (26) jeweils symmetrisch mit einer kleinen Statornut (25) angeordnet sind, die eine kleine Statornut (25) auf einer Seite der sechs großen Statornuten (26) und die eine kleine Statornut (25) auf der anderen Seite der sechs großen Statornuten (26) symmetrisch in Bezug auf die Mittellinie der sechs großen Statornuten (26) entlang der Umfangsrichtung des Substrats (1) angeordnet sind.

8. Statorblech mit ungleichen Nuten zur Verwendung in einem Drehstrom-Asynchronmotor mit einer Wicklung mit niedrigen Oberschwingungen und ungleichen Windungen nach Anspruch 1, **dadurch gekennzeichnet, dass** die Anzahl der Statornuten pro Pol und Phase in jeder Statornutgruppe (2) neun ist und die Anzahl und Anordnung der großen Statornuten (26) und der kleinen Statornuten (25) eine oder mehrere der folgenden Formen sind:
(i) die neun Statornuten pro Pol und Phase in jeder Statornutgruppe (2) eine große Statornut (26) und acht kleine Statornuten (25) umfassen, eine große Statornut (26) in der Mitte der Statornutgruppe (2) angeordnet ist, und die beiden Seiten der großen Statornute (26) jeweils symmetrisch mit vier kleinen Statornuten (25) angeordnet sind, die vier kleinen Statornuten (25) auf einer Seite der großen Statornut (26) und die vier kleinen Statornuten (25) auf der anderen Seite der großen Statornut (26) symmetrisch in Bezug auf die große Statornut (26) in der mittleren Position angeordnet sind;
(ii) die neun Statornuten pro Pol und Phase in jeder Statornutgruppe (2) drei große Statornuten (26) und sechs kleine Statornuten (25) umfassen, die drei großen Statornuten (26) in der Mitte der Statornutgruppe (2) angeordnet sind und die beiden Seiten der drei großen Statornuten (26) jeweils symmetrisch mit drei kleinen Statornuten (25) angeordnet sind, die drei kleinen Statornuten (25) auf einer Seite der drei großen Statornuten (26) und die drei kleinen Statornuten (25) auf der anderen Seite der drei großen Statornuten (26) symmetrisch in Bezug auf die große Statornut (26) in der mittleren Position angeordnet sind;
(iii) die neun Statornuten pro Pol und Phase in jeder Statornutgruppe (2) fünf große Statornuten (26) und vier kleine Statornuten (25) umfassen, die fünf großen Statornuten (26) in der Mitte der Statornutgruppe (2) angeordnet sind, und die beiden Seiten der fünf großen Statornuten (26) jeweils symmetrisch mit zwei kleinen Statornuten (25) angeordnet sind, die zwei kleinen Statornuten (25) auf einer Seite der fünf großen Statornuten (26) und die zwei kleinen Statornuten (25) auf der anderen Seite der fünf großen Statornuten (26) symmetrisch in Bezug auf die große Statornut (26) in der mittleren Position angeordnet sind;
(iv) die neun Statornuten pro Pol und Phase in jeder Statornutgruppe (2) sieben große Statornuten (26) und zwei kleine Statornuten (25) umfassen, die sieben großen Statornuten (26) in der Mitte der Statornutgruppe (2) angeordnet sind und die beiden Seiten der sieben großen Statornuten (26) jeweils symmetrisch mit einer kleinen Statornut (25) angeordnet sind, die eine kleine Statornut (25) auf einer Seite der sieben großen Statornuten (26) und die eine kleine Statornut (25) auf der anderen Seite der sieben großen Statornuten (26) symmetrisch in Bezug auf die große Statornut (26) in der mittleren Position angeordnet sind.

9. Statorblech mit ungleichen Nuten zur Verwendung in einem Dreiphasen-Asynchronmotor mit einer Wicklung mit niedrigen Oberwellen und ungleichen Windungen, mit einem ringförmigen Substrat (1), wobei:
mindestens sechs Statornutgruppen (2) zum Anbringen von Kupferdraht sind radial und gleichmäßig auf der inneren Ringfläche des Substrats (1) entlang der Umfangsrichtung des Substrats (1) angeordnet, die Anzahl der Statornuten pro Pol und Phase in jeder Statornutgruppe (2) fünf bis neun beträgt, darunter mindestens eine großer Statornut (26), mindestens zwei mittlere Statornuten (27) und mindestens zwei kleine Statornuten (25), wobei die Fläche der kleinen Statornuten (25) 80% - 95% derjenigen der großen Statornut (26) beträgt, die Fläche der mittleren Statornuten (27) zwischen derjenigen der kleinen Statornuten (25) und der großen Statornut (26) liegt und die Mittenwinkel zwischen den benachbarten Statornuten gleich sind;
die Anordnung der großen Statornut (26), der mittleren Statornut (27) und der kleinen Statornut (25) in jeder Statornutgruppe (2) wie folgt ist: die mindestens eine große Statornut (26) ist in der Mitte der Statornutgruppe (2) angeordnet, die beiden Seiten der großen Statornut (26) sind jeweils symmetrisch zu einer oder mehreren kleinen Statornuten (25) angeordnet, und zwischen der großen Statornut (26) und der kleinen Statornut (25) sind jeweils symmetrisch zu einer oder mehreren mittleren Statornuten (27) angeordnet;
die große Statornut (26), die mittlere Statonut (27) und die kleine Statornut (25) halb geschlossene birnenförmige Nuten sind, die aus einer rechteckigen Nut (21) zusammengesetzt sind, **dadurch gekennzeichnet, dass** eine erste gleichschenklige trapezförmige Nut (22), eine zweite gleichschenklige trapezförmige Nut (23) und eine halbkreisförmige Nut (24) vorgesehen sind, wobei ein Ende der großen Statornut (26), der mittleren Statornut (27) und der kleinen Statornut (25) nahe der inneren Ringfläche des Substrats (1) als die rechteckige Nut (21) festgelegt ist, die Breite der rechteckigen Nut (21) 2.5-4.2mm, die Höhe des rechteckigen Nut (21) 0.9-2.0mm ist, die zweite gleichschenklige trapezförmige Nut (23) am Ende der ersten gleichschenkligen trapezförmigen Nut (22) weit von der Mitte des Substrats (1) angeordnet ist, die obere Basis des ersten gleichschenkligen trapezförmigen Nut (22) kollinear mit der langen Seite der rechteckigen Nut (21) ist, die untere Basis der ersten gleichschenkligen trapezförmigen Nut (22) kollinear mit der oberen Basis der zweiten gleichschenkligen trapezförmigen Nut (23) ist, die Breite der unteren Basis der ersten gleichschenkligen trapezförmigen Nut (22) 5-10 mm beträgt, der Winkel zwischen der Hypotenuse und der unteren Basis der ersten gleichschenkligen trapezförmigen Nut (22) 20°-30° beträgt, die Breite der unteren Basis der zweiten gleichschenkligen trapezförmigen Nut (23) 8-15 mm beträgt und die Höhe der zweiten gleichschenkligen trapezförmigen Nut (23) 12-40 mm beträgt, die halbkreisförmige Nut (24) an der unteren Basis der zweiten gleichschenkligen trapezförmigen Nut (23) angeordnet ist, und der Durchmesser der halbkreisförmigen Nut (24) gleich der Breite der unteren Basis der zweiten gleichschenkligen trapezförmigen Nut (23) ist.

10. Statorblech mit ungleichen Nuten zur Verwendung in einem Drehstrom-Asynchronmotor mit niedriger Oberschwingung und ungleicher Wicklung nach Anspruch 9, **dadurch gekennzeichnet, dass** die Anzahl der Statornuten pro Pol und Phase in jeder Statornutgruppe (2) fünf beträgt, einschließlich einer großen Statornut (26), zwei mittlere Statornuten (27) und zwei kleine Statornuten (25), wobei die eine große Statornut (26) in der Mitte der Statornutgruppe (2) angeordnet ist, die beiden Seiten der großen Statornut (26) jeweils symmetrisch zu einer kleinen Statornut (25) angeordnet sind, und zwischen der großen Statornut (26) und der kleinen Statornut (25) jeweils symmetrisch eine mittlere Statornut (27) angeordnet ist, die eine kleine Statornut (25) auf einer Seite der großen Statornut (26) und die eine kleine Statornut (25) auf der anderen Seite der großen Statornut (26) symmetrisch in Bezug auf die große Statornut (26) in der mittleren Position angeordnet sind, und die eine mittlere Statornut (27) auf einer Seite der großen Statornut (26) und die eine mittlere Statornut (27) auf der anderen Seite der großen Statornut (26) symmetrisch in Bezug auf die große Statornut (26) in der mittleren Position angeordnet sind.

11. Statorblech mit ungleichen Nuten zur Verwendung in einem Drehstrom-Asynchronmotor mit niedriger Oberschwingung und ungleicher Windungszahl gemäß Anspruch 9, **dadurch gekennzeichnet, dass** die Anzahl der Statornuten pro Pol und Phase in jeder Statornutgruppe (2) sechs beträgt, einschließlich zwei großer Statornuten (26), zwei mittlerer Statornuten (27) und zwei kleiner Statornuten (25), die beiden großen Statornuten (26) in der Mitte der Statornutgruppe (2) angeordnet sind, die beiden Seiten der beiden großen Statornuten (26) jeweils symmetrisch zu einer kleinen Statornut (25) angeordnet sind, und zwischen der großen Statornut (26) und der kleinen Statornut (25) jeweils symmetrisch zu einer mittleren Statornut (27) angeordnet sind, die eine kleine Statornut (25) auf einer Seite der zwei großen Statornuten (26) und die eine kleine Statornut (25) auf der anderen Seite der zwei großen Statornuten (26) symmetrisch in Bezug auf die Mittellinie der zwei großen Statornuten (26) entlang der Umfangsrichtung des Substrats (1) angeordnet sind, und die eine mittlere Statornut (27) auf einer Seite der beiden großen Statornuten (26) und die eine mittlere Statornut (27) auf der anderen Seite der beiden großen Statornuten (26) symmetrisch in Bezug auf die Mittellinie der beiden großen Statornuten (26) entlang der Umfangsrichtung des Substrats (1) angeordnet sind.

12. Statorblech mit ungleichen Nuten zur Verwendung in einem Drehstrom-Asynchronmotor mit niedriger Oberschwingung und ungleicher Windungswicklung nach Anspruch 9, **dadurch gekennzeichnet, dass** die Anzahl der Statornuten pro Pol und Phase in jeder Statornutgruppe (2) sieben beträgt und die Anzahl und Anordnung der großen Statornuten (26), der mittleren Statornute (27) und der kleinen Statornuten (25) eine oder mehrere der folgenden Formen sind:
(i) die sieben Statornuten pro Pol und Phase in jeder Statornutgruppe (2) eine große Statornut (26), zwei mittlere Statornuten (27) und vier kleine Statornuten (25) umfassen, wobei die eine große Statornut (26) in der Mitte der Statornutgruppe (2) angeordnet ist, die beiden Seiten der großen Statornut (26) jeweils symmetrisch zu zwei kleinen Statornuten (25) angeordnet sind und zwischen der großen Statornut (26) und der kleinen Statornut (25) jeweils symmetrisch eine mittlere Statornut (27) angeordnet ist, die beiden kleinen Statornuten (25) auf einer Seite der großen Statornut (26) und die beiden kleinen Statornuten (25) auf der anderen Seite der großen Statornut (26) symmetrisch in Bezug auf die große Statornut (26) in der mittleren Position angeordnet sind, und die eine mittlere Statornut (27) auf einer Seite der großen Statornut (26) und die eine mittlere Statornut (27) auf der anderen Seite der großen Statornut (26) symmetrisch in Bezug auf der großen Statornut (26) in der mittleren Position angeordnet sind;
(ii) die sieben Statornuten pro Pol und Phase in jeder Statornutgruppe (2) drei große Statornuten (26), zwei mittlere Statornuten (27) und zwei kleine Statornuten (25) umfassen, wobei die drei großen Statornuten (26) in der Mitte der Statornutgruppe (2) angeordnet sind, die beiden Seiten der drei großen Statornuten (26) jeweils symmetrisch zu einer kleinen Statornut (25) angeordnet sind und zwischen der großen Statornut (26) und der kleinen Statornut (25) jeweils symmetrisch zu einer mittleren Statornut (27) angeordnet sind, die eine kleine Statornut (25) auf einer Seite der drei großen Statornuten (26) und die eine kleine Statornut (25) auf der anderen Seite der drei großen Statornuten (26) symmetrisch in Bezug auf die große Statornut (26) in der mittleren Position angeordnet sind, und die eine mittlere Statornut (27) auf einer Seite der drei großen Statornuten (26) und die eine mittlere Statornut (27) auf der anderen Seite der drei großen Statornuten (26) symmetrisch in Bezug auf die großen Statornut (26) in der mittleren Position angeordnet sind;
(iii) die sieben Statornuten pro Pol und Phase in jeder Statornutgruppe (2) eine große Statornut (26), vier mittlere Statornuten (27) und zwei kleine Statornuten (25) umfassen, wobei die eine große Statornut (26) in der Mitte der Statornutgruppe (2) angeordnet ist, die beiden Seiten der großen Statornut (26) jeweils symmetrisch zu einer kleinen Statornut (25) angeordnet sind, und zwischen der großen Statornut (26) und der kleinen Statornut (25) jeweils symmetrisch zwei mittlere Statornuten (27) angeordnet sind, die eine kleine Statornut (25) auf einer Seite der großen Statornut (26) und die eine kleine Statornut (25) auf der anderen Seite der großen Statornut (26) symmetrisch in Bezug auf der großen Statornut (26) in der mittleren Position angeordnet sind, und die zwei mittleren Statornuten (27) auf einer Seite der großen Statornut (26) und die zwei mittleren Statornuten (27) auf der anderen Seite der großen Statornut (26) symmetrisch in Bezug auf die große Statornut (26) in der mittleren Position angeordnet sind.

13. Statorblech mit ungleichen Nuten zur Verwendung in einem Drehstrom-Asynchronmotor mit niedriger Oberschwingung und ungleicher Wicklung nach Anspruch 9, **dadurch gekennzeichnet, dass** die Anzahl der Statornuten pro Pol und Phase in jeder Statornutgruppe (2) acht ist und die Anzahl und Anordnung der großen Statornuten (26), der mittleren Statornut (27) und der kleinen Statornuten (25) eine oder mehrere der folgenden Formen sind:
(i) die acht Statornuten pro Pol und Phase in jeder Statornutgruppe (2) vier große Statornuten (26), zwei mittlere Statornuten (27) und zwei kleine Statornuten (25) umfassen, wobei die vier großen Statornuten (26) in der Mitte der Statornutgruppe (2) angeordnet sind, die vier großen Statornuten (26) in der Mitte der Statornutgruppe (2) angeordnet sind, die beiden Seiten der vier großen Statornuten (26) jeweils symmetrisch zu einer kleinen Statornut (25) angeordnet sind und zwischen der großen Statornut (26) und der kleinen Statornut (25) jeweils symmetrisch eine mittlere Statornut (27) angeordnet ist, die eine kleine Statornut (25) auf einer Seite der vier großen Statornuten (26) und die eine kleine Statornut (25) auf der anderen Seite der vier großen Statornuten (26) symmetrisch in Bezug auf die Mittellinie der vier großen Statornuten (26) entlang der Umfangsrichtung des Substrats (1) angeordnet sind, und die eine mittlere Statornut (27) auf einer Seite der vier großen Statornuten (26) und die eine mittlere Statornut (27) auf der anderen Seite der vier großen Statornuten (26) symmetrisch in Bezug auf die Mittellinie der vier großen Statornuten (26) entlang der Umfangsrichtung des Substrats (1) angeordnet sind;
(ii) die acht Statornuten pro Pol und Phase in jeder Statornutgruppe (2) zwei große Statornuten (26), vier mittlere Statornuten (27) und zwei kleine Statornuten (25) umfassen, wobei die beiden großen Statornuten (26) in der Mitte der Statornutgruppe (2) angeordnet sind, die beiden Seiten der beiden großen Statornuten (26) jeweils symmetrisch zu einer kleinen Statornut (25) angeordnet sind, und zwischen der großen Statornut (26) und der kleinen Statornut (25) jeweils symmetrisch zwei mittlere Statornuten (27) angeordnet sind, die eine kleine Statornut (25) auf einer Seite der beiden großen Statornuten (26) und die eine kleine Statornut (25) auf der anderen Seite der beiden großen Statornuten (26) symmetrisch in Bezug auf die Mittellinie der beiden großen Statornuten (26) entlang der Umfangsrichtung des Substrats (1) angeordnet sind, und die beiden mittleren Statornuten (27) auf einer Seite der beiden großen Statornuten (26) und die beiden mittleren Statornuten (27) auf der anderen Seite der beiden großen Statornuten (26) symmetrisch in Bezug auf die Mittellinie der beiden großen Statornuten (26) entlang der Umfangsrichtung des Substrats (1) angeordnet sind.

14. Statorblech mit ungleichen Nuten zur Verwendung in einem Drehstrom-Asynchronmotor mit niedriger Oberschwingung und ungleicher Wicklung nach Anspruch 9, **dadurch gekennzeichnet, dass** die Anzahl der Statornuten pro Pol und Phase in jeder Statornutgruppe (2) neun ist und die Anzahl und Anordnung der großen Statornuten (26), der mittleren Statornut (27) und der kleinen Statornuten (25) eine oder mehrere der folgenden Formen sind:
(i) die neun Statornuten pro Pol und Phase in jeder Statornutgruppe (2) eine große Statornut (26), zwei mittlere Statornuten (27) und sechs kleine Statornuten (25) umfassen, wobei die eine große Statornut (26) in der Mitte der Statornutgruppe (2) angeordnet ist, die beiden Seiten dergroßen Statornut (26) jeweils symmetrisch mit drei kleinen Statornuten (25) angeordnet sind und zwischen der großen Statornut (26) und der kleinen Statornut (25) jeweils symmetrisch eine mittlerer Statornut (27) angeordnet ist, die drei kleinen Statornuten (25) auf einer Seite der großen Statornut (26) und die drei kleinen Statornuten (25) auf der anderen Seite der großen Statornut (26) symmetrisch in Bezug auf die großen Statornut (26) in der mittleren Position angeordnet sind, und die eine mittlere Statorsnut (27) auf einer Seite der großen Statornut (26) und die eine mittlere Statornut (27) auf der anderen Seite der großen Statornut (26) symmetrisch in Bezug auf die große Statornut (26) in der mittleren Position angeordnet sind;
(ii) die neun Statornuten pro Pol und Phase in jeder Statornutgruppe (2) drei große Statornuten (26), zwei mittlere Statornuten (27) und vier kleine Statornuten (25) umfassen, wobei die drei großen Statornuten (26) in der Mitte der Statornutgruppe (2) angeordnet sind, die beiden Seiten der drei großen Statornuten (26) jeweils symmetrisch zu zwei kleinen Statornuten (25) angeordnet sind und zwischen der großen Statornut (26) und der kleinen Statornut (25) jeweils symmetrisch eine mittlere Statornut (27) angeordnet ist, die beiden kleinen Statornuten (25) auf einer Seite der drei großen Statornuten (26) und die beiden kleinen Statornuten (25) auf der anderen Seite der drei großen Statornuten (26) symmetrisch in Bezug auf die große Statornut (26) in der mittleren Position angeordnet sind, und die eine mittlere Statornut (27) auf einer Seite der drei großen Statornuten (26) und die eine mittlere Statornut (27) auf der anderen Seite der drei großen Statornuten (26) symmetrisch in Bezug auf die große Statornut (26) in der mittleren Position angeordnet sind;
(iii) die neun Statornuten pro Pol und Phase in jeder Statornutgruppe (2) fünf große Statornuten (26), zwei mittlere Statornuten (27) und zwei kleine Statornuten (25) umfassen, wobei die fünf großen Statornuten (26) in der Mitte der Statornutgruppe (2) angeordnet sind, die beiden Seiten der fünf großen Statornuten (26) jeweils symmetrisch zu einer kleinen Statornut (25) angeordnet sind und zwischen der großen Statornut (26) und der kleinen Statornut (25) jeweils symmetrisch eine mittlerer Statornut (27) angeordnet ist, die eine kleine Statornut (25) auf einer Seite der fünf großen Statornuten (26) und die eine kleine Statornut (25) auf der anderen Seite der fünf großen Statornuten (26) symmetrisch in Bezug auf die große Statornut (26) in der mittleren Position angeordnet sind, und die eine mittlere Statornut (27) auf einer Seite der fünf großen Statornuten (26) und die eine mittlere Statornut (27) auf der anderen Seite der fünf großen Statornuten (26) in Bezug auf die großen Statornut (26) in der mittleren Position symmetrisch angeordnet sind;
(iv) die neun Statornuten pro Pol und Phase in jeder Statornutgruppe (2) eine große Statornut (26), vier mittlere Statornuten (27) und vier kleine Statornuten (25) umfassen, wobei die eine große Statornut (26) in der Mitte der Statornutgruppe (2) angeordnet ist, die beiden Seiten der großen Statornut (26) jeweils symmetrisch zu zwei kleinen Statornuten (25) angeordnet sind, und zwischen der großen Statornut (26) und der kleinen Statornut (25) jeweils symmetrisch zwei mittlere Statornuten (27) angeordnet sind, die beiden kleinen Statornuten (25) auf einer Seite der großen Statornut (26) und die beiden kleinen Statornuten (25) auf der anderen Seite der großen Statornut (26) symmetrisch in Bezug auf der großen Statornut (26) in der mittleren Position angeordnet sind, und die beiden mittleren Statornuten (27) auf einer Seite der großen Statornut (26) und die beiden mittleren Statornuten (27) auf der anderen Seite der großen Statornut (26) symmetrisch in Bezug auf der großen Statornut (26) in der mittleren Position angeordnet sind;
(v) die neun Statornuten pro Pol und Phase in jeder Statornutgruppe (2) drei große Statornuten (26), vier mittlere Statornuten (27) und zwei kleine Statornuten (25) umfassen, wobei die drei großen Statornuten (26) in der Mitte der Statornutgruppe (2) angeordnet sind, die beiden Seiten der drei großen Statornuten (26) jeweils symmetrisch zu einer kleinen Statornut (25) angeordnet sind, und zwischen der großen Statornut (26) und der kleinen Statornut (25) jeweils symmetrisch zwei mittlere Statornuten (27) angeordnet sind, die eine kleine Statornut (25) auf einer Seite der drei großen Statornuten (26) und die eine kleine Statornut (25) auf der anderen Seite der drei großen Statornuten (26) symmetrisch in Bezug auf die große Statornut (26) in der mittleren Position angeordnet sind, und die zwei mittleren Statornuten (27) auf einer Seite der drei großen Statornuten (26) und die zwei mittleren Statornuten (27) auf der anderen Seite der drei großen Statornuten (26) symmetrisch in Bezug auf die große Statornut (26) in der mittleren Position angeordnet sind;
(vi) die neun Statornuten pro Pol und Phase in jeder Statornutgruppe (2) eine große Statornut (26), sechs mittlere Statornuten (27) und zwei kleine Statornuten (25) umfassen, wobei die eine große Statornut (26) in der Mitte der Statornutgruppe (2) angeordnet ist, die beiden Seiten der großen Statornut (26) jeweils symmetrisch zu einer kleinen Statornut (25) angeordnet sind, und zwischen der großen Statornut (26) und der kleinen Statornut (25) jeweils drei mittlere Statornuten (27) symmetrisch angeordnet sind, die eine kleine Statornut (25) auf einer Seite der großen Statornut (26) und die eine kleine Statornut (25) auf der anderen Seite der großen Statornut (26) symmetrisch in Bezug auf die große Statornut (26) in der mittleren Position angeordnet sind, und die drei mittleren Statornuten (27) auf einer Seite der großen Statornut (26) und die drei mittleren Statornuten (27) auf der anderen Seite der großen Statornut (26) symmetrisch in Bezug auf die große Statornut (26) in der mittleren Position angeordnet sind.

15. Statorblech mit ungleichen Nuten zur Verwendung in einem Drehstrom-Asynchronmotor mit niedriger Oberschwingung und ungleicher Wicklung nach einem der Ansprüche 1 bis 14, **dadurch gekennzeichnet, dass** 8-16 Knicknuten (3) gleichmäßig auf der äußeren Ringfläche des Substrats (1) entlang der Umfangsrichtung des Substrats (1) angeordnet sind, um den Knick zu installieren, der untere Boden der Knicknut (3) als eine gerade Linie festgelegt ist, die obere Basis der Schnallennut (3) ist natürlich entlang der Umfangsrichtung des Substrats (1) geöffnet, die Breite der Schnallennut (3) beträgt 14-25 mm, die Höhe der Schnallennut (3) beträgt 3-5 mm, der Winkel zwischen der Hypotenuse und der Basis der Schnallennut (3) beträgt 15°-25°, und eine Bearbeitungsnut (4) ist am Boden einer der Schnallennuten (3) angebracht.

## Revendications

1. La stratification de stator à fentes inégales pour utilisation dans un moteur asynchrone triphasé à faible harmonique et enroulement à tours inégaux, comprenant un substrat en forme d'anneau (1), dans lequel :
au moins six groupes de fentes de stator (2) pour placer des fils de cuivre sont disposés radialement et uniformément sur la surface de l'anneau intérieur du substrat (1) le long de la direction de la circonférence du substrat (1), le nombre de fentes de stator par pôle et par phase dans chaque groupe de fentes de stator (2) est de trois à neuf, comprenant au moins une grande fente de stator (26) et au moins deux petites fentes de stator (25), la surface de la petite fente de stator (25) est de 80 % à 95 % de celle de la grande fente de stator (26) et les angles centraux entre les fentes de stator adjacentes sont égaux ;
la disposition de la grande fente de stator (26) et de la petite fente de stator (25) dans chaque groupe de fentes de stator (2) est la suivante : au moins une grande fente de stator (26) est disposée au milieu du groupe de fentes de stator (2), et les deux côtés de la grande fente de stator (26) sont respectivement disposés symétriquement avec une ou plusieurs petites fentes de stator (25) ;
la grande fente de stator (26) et la petite fente de stator (25) sont des fentes semi fermées en forme de poire composées d'une fente rectangulaire (21), **caractérisée en ce qu'**une première fente trapézoïdale isocèle (22), une deuxième fente trapézoïdale isocèle (23) et une fente en demi-cercle (24), dans laquelle une extrémité de la grande fente de stator (26) et de la petite fente de stator (25) proche de la surface de l'anneau intérieur du substrat (1) est définie comme la fente rectangulaire (21), la largeur de la fente rectangulaire (21) est de 2. 5-4.2mm, la hauteur de la fente rectangulaire (21) est de 0.9-2. 0mm, la seconde fente trapézoïdale isocèle (23) est disposée à l'extrémité de la première fente trapézoïdale isocèle (22) loin du centre du substrat (1), la base supérieure de la première fente trapézoïdale isocèle (22) est colinéaire avec le côté long de la fente rectangulaire (21), la base inférieure de la première fente trapézoïdale isocèle (22) est colinéaire avec la base supérieure de la seconde fente trapézoïdale isocèle (23), la largeur de la base inférieure de la première fente trapézoïdale isocèle (22) est de 5 à 10 mm, l'angle entre l'hypoténuse et la base inférieure de la première fente trapézoïdale isocèle (22) est de 20°-30°, la largeur de la base inférieure de la seconde fente trapézoïdale isocèle (23) est de 8-15mm, et la hauteur de la seconde fente trapézoïdale isocèle (23) est de 12-40mm, la fente en demi-cercle (24) est disposée à la base inférieure de la seconde fente trapézoïdale isocèle (23), et le diamètre de la fente en demi-cercle (24) est égal à la largeur de la base inférieure de la seconde fente trapézoïdale isocèle (23).

2. La Stratification de stator à fentes inégales pour utilisation dans un moteur asynchrone triphasé à faible harmonique et enroulement à tours inégaux selon la revendication 1, **caractérisée en ce que** le nombre de fentes de stator par pôle et par phase dans chaque groupe de fentes de stator (2) est de trois, dont une grande fente de stator (26) et deux petites fentes de stator (25), la première grande fente de stator (26) est disposée au milieu du groupe de fentes de stator (2), et les deux côtés de la grande fente de stator (26) sont respectivement disposés symétriquement avec une petite fente de stator (25), la petite fente de stator (25) d'un côté de la grande fente de stator (26) et la petite fente de stator (25) de l'autre côté de la grande fente de stator (26) sont disposées symétriquement par rapport à la grande fente de stator (26) en position médiane.

3. La stratification de stator à fentes inégales pour utilisation dans un moteur asynchrone triphasé à faible harmonique et à enroulement à tours inégaux selon la revendication 1, **caractérisée en ce que** le nombre de fentes de stator par pôle et par phase dans chaque groupe de fentes de stator (2) est de quatre, dont deux grandes fentes de stator (26) et deux petites fentes de stator (25), les deux grandes fentes de stator (26) sont disposées au milieu du groupe de fentes de stator (2), et les deux côtés des deux grandes fentes de stator (26) sont respectivement disposés symétriquement avec une petite fente de stator (25), la petite fente de stator (25) d'un côté des deux grandes fentes de stator (26) et la petite fente de stator (25) de l'autre côté des deux grandes fentes de stator (26) sont disposées symétriquement par rapport à la ligne centrale des deux grandes fentes de stator (26) le long de la direction de la circonférence du substrat (1).

4. La stratification de stator à fentes inégales pour utilisation dans un moteur asynchrone triphasé à faible harmonique et à enroulement à tours inégaux selon la revendication 1, **caractérisée en ce que** le nombre de fentes de stator par pôle et par phase dans chaque groupe de fentes de stator (2) est de cinq, et le nombre et la disposition des grandes fentes de stator (26) et des petites fentes de stator (25) sont d'une ou de plusieurs des formes suivantes :
(i) les cinq fentes de stator par pôle et par phase dans chaque groupe de fentes de stator (2) comprennent une grande fente de stator (26) et quatre petites fentes de stator (25), la grande fente de stator (26) est disposée au milieu du groupe de fentes de stator (2), et les deux côtés de la grande fente de stator (26) sont respectivement disposés symétriquement avec deux petites fentes de stator (25), les deux petites fentes de stator (25) d'un côté de la grande fente de stator (26) et les deux petites fentes de stator (25) de l'autre côté de la grande fente de stator (26) sont disposées symétriquement par rapport à la grande fente de stator (26) en position médiane ;
(ii) les cinq fentes de stator par pôle et par phase dans chaque groupe de fentes de stator (2) comprennent trois grandes fentes de stator (26) et deux petites fentes de stator (25), les trois grandes fentes de stator (26) sont disposées au milieu du groupe de fentes de stator (2), et les deux côtés des trois grandes fentes de stator (26) sont respectivement symétriques par rapport à une petite fente de stator (25), la petite fente de stator (25) d'un côté des trois grandes fentes de stator (26) et la petite fente de stator (25) de l'autre côté des trois grandes fentes de stator (26) sont disposées symétriquement par rapport à la grande fente de stator (26) en position centrale.

5. La stratification de stator à fentes inégales pour utilisation dans un moteur asynchrone triphasé à faible harmonique et à enroulement à tours inégaux selon la revendication 1, **caractérisée en ce que** le nombre de fentes de stator par pôle et par phase dans chaque groupe de fentes de stator (2) est de six, et que le nombre et la disposition des grandes fentes de stator (26) et des petites fentes de stator (25) sont d'une ou de plusieurs des formes suivantes :
(i) les six fentes de stator par pôle et par phase dans chaque groupe de fentes de stator (2) comprennent deux grandes fentes de stator (26) et quatre petites fentes de stator (25), les deux grandes fentes de stator (26) sont disposées au milieu du groupe de fentes de stator (2), et les deux côtés des deux grandes fentes de stator (26) sont respectivement disposés symétriquement avec deux petites fentes de stator (25), les deux petites fentes de stator (25) d'un côté des deux grandes fentes de stator (26) et les deux petites fentes de stator (25) de l'autre côté des deux grandes fentes de stator (26) sont disposées symétriquement par rapport à la ligne centrale des deux grandes fentes de stator (26) le long de la direction de la circonférence du substrat (1) ;
(ii) les six fentes de stator par pôle et par phase dans chaque groupe de fentes de stator (2) comprennent quatre grandes fentes de stator (26) et deux petites fentes de stator (25), les quatre grandes fentes de stator (26) sont disposées au milieu du groupe de fentes de stator (2), et les deux côtés des quatre grandes fentes de stator (26) sont respectivement symétriques par rapport à une petite fente de stator (25), la petite fente de stator (25) d'un côté des quatre grandes fentes de stator (26) et la petite fente de stator (25) de l'autre côté des quatre grandes fentes de stator (26) sont disposées symétriquement par rapport à la ligne centrale des quatre grandes fentes de stator (26) le long de la direction de la circonférence du substrat (1).

6. La stratification de stator à fentes inégales pour utilisation dans un moteur asynchrone triphasé à faible harmonique et à enroulement à tours inégaux selon la revendication 1, **caractérisée en ce que** le nombre de fentes de stator par pôle et par phase dans chaque groupe de fentes de stator (2) est de sept, et le nombre et la disposition des grandes fentes de stator (26) et des petites fentes de stator (25) sont d'une ou de plusieurs des formes suivantes :
(i) les sept fentes de stator par pôle et par phase dans chaque groupe de fentes de stator (2) comprennent une grande fente de stator (26) et six petites fentes de stator (25), la grande fente de stator (26) est disposée au milieu du groupe de fentes de stator (2), et les deux côtés de la grande fente de stator (26) sont respectivement disposés symétriquement avec trois petites fentes de stator (25), les trois petites fentes de stator (25) d'un côté de la grande fente de stator (26) et les trois petites fentes de stator (25) de l'autre côté de la grande fente de stator (26) sont disposées symétriquement par rapport à la grande fente de stator (26) en position médiane ;
(ii) les sept fentes de stator par pôle et par phase dans chaque groupe de fentes de stator (2) comprennent trois grandes fentes de stator (26) et quatre petites fentes de stator (25), les trois grandes fentes de stator (26) sont disposées au milieu du groupe de fentes de stator (2), et les deux côtés des trois grandes fentes de stator (26) sont respectivement disposés symétriquement par rapport à deux petites fentes de stator (25), les deux petites fentes de stator (25) d'un côté des trois grandes fentes de stator (26) et les deux petites fentes de stator (25) de l'autre côté des trois grandes fentes de stator (26) sont disposées symétriquement par rapport à la grande fente de stator (26) en position médiane ;
(iii) les sept fentes de stator par pôle et par phase dans chaque groupe de fentes de stator (2) comprennent cinq grandes fentes de stator (26) et deux petites fentes de stator (25), les cinq grandes fentes de stator (26) sont disposées au milieu du groupe de fentes de stator (2), et les deux côtés des cinq grandes fentes de stator (26) sont respectivement disposés symétriquement par rapport à une petite fente de stator (25), la petite fente de stator (25) d'un côté des cinq grandes fentes de stator (26) et la petite fente de stator (25) de l'autre côté des cinq grandes fentes de stator (26) sont disposées symétriquement par rapport à la grande fente de stator (26) en position médiane.

7. La stratification de stator à fentes inégales pour utilisation dans un moteur asynchrone triphasé à faible harmonique et à enroulement à tours inégaux selon la revendication 1, **caractérisée en ce que** le nombre de fentes de stator par pôle et par phase dans chaque groupe de fentes de stator (2) est de huit, et que le nombre et la disposition des grandes fentes de stator (26) et des petites fentes de stator (25) sont d'une ou de plusieurs des formes suivantes :
(i) les huit fentes de stator par pôle et par phase dans chaque groupe de fentes de stator (2) comprennent deux grandes fentes de stator (26) et six petites fentes de stator (25), les deux grandes fentes de stator (26) sont disposées au milieu du groupe de fentes de stator (2), et les deux côtés des deux grandes fentes de stator (26) sont respectivement disposés symétriquement avec trois petites fentes de stator (25), les trois petites fentes de stator (25) d'un côté des deux grandes fentes de stator (26) et les trois petites fentes de stator (25) de l'autre côté des deux grandes fentes de stator (26) sont disposées symétriquement par rapport à la ligne centrale des deux grandes fentes de stator (26) le long de la direction de la circonférence du substrat (1) ;
(ii) les huit fentes de stator par pôle et par phase dans chaque groupe de fentes de stator (2) comprennent quatre grandes fentes de stator (26) et quatre petites fentes de stator (25), les quatre grandes fentes de stator (26) sont disposées au milieu du groupe de fentes de stator (2), et les deux côtés des quatre grandes fentes de stator (26) sont respectivement disposés symétriquement avec deux petites fentes de stator (25), les deux petites fentes de stator (25) d'un côté des quatre grandes fentes de stator (26) et les deux petites fentes de stator (25) de l'autre côté des quatre grandes fentes de stator (26) sont disposées symétriquement par rapport à la ligne centrale des quatre grandes fentes de stator (26) le long de la direction de la circonférence du substrat (1) ;
(iii) les huit fentes de stator par pôle et par phase dans chaque groupe de fentes de stator (2) comprennent six grandes fentes de stator (26) et deux petites fentes de stator (25), les six grandes fentes de stator (26) sont disposées au milieu du groupe de fentes de stator (2), et les deux côtés des six grandes fentes de stator (26) sont respectivement symétriques par rapport à une petite fente de stator (25), la petite fente de stator (25) d'un côté des six grandes fentes de stator (26) et la petite fente de stator (25) de l'autre côté des six grandes fentes de stator (26) sont disposées symétriquement par rapport à la ligne centrale des six grandes fentes de stator (26) le long de la direction de la circonférence du substrat (1).

8. La stratification de stator à fentes inégales pour utilisation dans un moteur asynchrone triphasé à faible harmonique et à enroulement à tours inégaux selon la revendication 1, **caractérisée en ce que** le nombre de fentes de stator par pôle et par phase dans chaque groupe de fentes de stator (2) est de neuf, et le nombre et la disposition des grandes fentes de stator (26) et des petites fentes de stator (25) sont d'une ou de plusieurs des formes suivantes :
(i) les neuf fentes de stator par pôle et par phase dans chaque groupe de fentes de stator (2) comprennent une grande fente de stator (26) et huit petites fentes de stator (25), la grande fente de stator (26) est disposée au milieu du groupe de fentes de stator (2), et les deux côtés de la grande fente de stator (26) sont respectivement disposés symétriquement avec quatre petites fentes de stator (25), les quatre petites fentes de stator (25) d'un côté de la grande fente de stator (26) et les quatre petites fentes de stator (25) de l'autre côté de la grande fente de stator (26) sont disposées symétriquement par rapport à la grande fente de stator (26) en position médiane ;
(ii) les neuf fentes de stator par pôle et par phase dans chaque groupe de fentes de stator (2) comprennent trois grandes fentes de stator (26) et six petites fentes de stator (25), les trois grandes fentes de stator (26) sont disposées au milieu du groupe de fentes de stator (2), et les deux côtés des trois grandes fentes de stator (26) sont respectivement disposés symétriquement par rapport à trois petites fentes de stator (25), les trois petites fentes de stator (25) d'un côté des trois grandes fentes de stator (26) et les trois petites fentes de stator (25) de l'autre côté des trois grandes fentes de stator (26) sont disposées symétriquement par rapport à la grande fente de stator (26) en position médiane ;
(iii) les neuf fentes de stator par pôle et par phase dans chaque groupe de fentes de stator (2) comprennent cinq grandes fentes de stator (26) et quatre petites fentes de stator (25), les cinq grandes fentes de stator (26) sont disposées au milieu du groupe de fentes de stator (2), et les deux côtés des cinq grandes fentes de stator (26) sont respectivement disposés symétriquement par rapport à deux petites fentes de stator (25), les deux petites fentes de stator (25) d'un côté des cinq grandes fentes de stator (26) et les deux petites fentes de stator (25) de l'autre côté des cinq grandes fentes de stator (26) sont disposées symétriquement par rapport à la grande fente de stator (26) en position médiane ;
(iv) les neuf fentes de stator par pôle et par phase dans chaque groupe de fentes de stator (2) comprennent sept grandes fentes de stator (26) et deux petites fentes de stator (25), les sept grandes fentes de stator (26) sont disposées au milieu du groupe de fentes de stator (2), et les deux côtés des sept grandes fentes de stator (26) sont respectivement disposés symétriquement par rapport à une petite fente de stator (25), la petite fente de stator (25) d'un côté des sept grandes fentes de stator (26) et la petite fente de stator (25) de l'autre côté des sept grandes fentes de stator (26) sont disposées symétriquement par rapport à la grande fente de stator (26) en position centrale.

9. La stratification de stator à fentes inégales destinée à être utilisée dans un moteur asynchrone triphasé à faible harmonique et à enroulement à tours inégaux, comprenant un substrat en forme d'anneau (1), dans lequel :
au moins six groupes de fentes de stator (2) pour placer le fil de cuivre sont disposés radialement et uniformément sur la surface annulaire intérieure du substrat (1) le long de la direction de la circonférence du substrat (1), le nombre de fentes de stator par pôle et par phase dans chaque groupe de fentes de stator (2) est de cinq à neuf, y compris au moins une grande fente de stator (26), au moins deux fentes de stator moyen (27) et au moins deux fentes de stator petit (25), la surface de la fente de stator petit (25) est 80% - 95% de celle de la fente de stator grand (26), la surface de la fente de stator moyen (27) est comprise entre celle de la fente de stator petit (25) et celle de la fente de stator grand (26), et les angles centraux entre les fentes de stator adjacentes sont égaux ;
la disposition de la grande fente de stator (26), de la fente de stator moyenne (27) et de la petite fente de stator (25) dans chaque groupe de fentes de stator (2) est la suivante : la au moins une grande fente de stator (26) est disposée au milieu du groupe de fentes de stator (2), les deux côtés de la grande fente de stator (26) sont respectivement disposés symétriquement avec une ou plusieurs petites fentes de stator (25), et entre la grande fente de stator (26) et la petite fente de stator (25) sont respectivement disposées symétriquement avec une ou plusieurs fentes de stator médianes (27) ;
la grande fente de stator (26), la fente de stator moyenne (27) et la petite fente de stator (25) sont des fentes semi fermées en forme de poire composées d'une fente rectangulaire (21), **caractérisée en ce qu'**une première fente trapézoïdale isocèle (22), une seconde fente trapézoïdale isocèle (23) et une fente en demi-cercle (24), dans lequel une extrémité de la grande fente de stator (26), de la fente de stator moyenne (27) et de la petite fente de stator (25) proche de la surface de l'anneau intérieur du substrat (1) est définie comme la fente rectangulaire (21), la largeur de la fente rectangulaire (21) est de 2. 5-4.2mm, la hauteur de la fente rectangulaire (21) est de 0.9-2. 0mm, la seconde fente trapézoïdale isocèle (23) est disposée à l'extrémité de la première fente trapézoïdale isocèle (22) loin du centre du substrat (1), la base supérieure de la première fente trapézoïdale isocèle (22) est colinéaire avec le côté long de la fente rectangulaire (21), la base inférieure de la première fente trapézoïdale isocèle (22) est colinéaire avec la base supérieure de la seconde fente trapézoïdale isocèle (23), la largeur de la base inférieure de la première fente trapézoïdale isocèle (22) est de 5 à 10 mm, l'angle entre l'hypoténuse et la base inférieure de la première fente trapézoïdale isocèle (22) est de 20°-30°, la largeur de la base inférieure de la seconde fente trapézoïdale isocèle (23) est de 8-15mm, et la hauteur de la seconde fente trapézoïdale isocèle (23) est de 12-40mm, la fente en demi-cercle (24) est disposée à la base inférieure de la seconde fente trapézoïdale isocèle (23), et le diamètre de la fente en demi-cercle (24) est égal à la largeur de la base inférieure de la seconde fente trapézoïdale isocèle (23).

10. La stratification de stator à fentes inégales pour utilisation dans un moteur asynchrone triphasé à faible harmonique et à enroulement à tours inégaux selon la revendication 9, **caractérisée en ce que** le nombre de fentes de stator par pôle et par phase dans chaque groupe de fentes de stator (2) est de cinq, dont une grande fente de stator (26), deux fentes de stator moyennes (27) et deux petites fentes de stator (25), la grande fente de stator (26) est disposée au milieu du groupe de fentes de stator (2), les deux côtés de la grande fente de stator (26) sont respectivement symétriques par rapport à une petite fente de stator (25), et entre la grande fente de stator (26) et la petite fente de stator (25) sont respectivement disposées de manière symétrique avec une fente de stator centrale (27), la petite fente de stator (25) d'un côté de la grande fente de stator (26) et la petite fente de stator (25) de l'autre côté de la grande fente de stator (26) sont disposées de manière symétrique par rapport à la grande fente de stator (26) dans la position médiane, et la fente médiane de stator (27) d'un côté de la grande fente de stator (26) et la fente médiane de stator (27) de l'autre côté de la grande fente de stator (26) sont disposées symétriquement par rapport à la grande fente de stator (26) en position médiane.

11. La stratification de stator à fentes inégales pour utilisation dans un moteur asynchrone triphasé à faible harmonique et à enroulement à tours inégaux selon la revendication 9, **caractérisée en ce que** le nombre de fentes de stator par pôle et par phase dans chaque groupe de fentes de stator (2) est de six, dont deux grandes fentes de stator (26), deux fentes de stator médianes (27) et deux petites fentes de stator (25), les deux grandes fentes de stator (26) sont disposées au milieu du groupe de fentes de stator (2), les deux côtés des deux grandes fentes de stator (26) sont respectivement symétriques par rapport à une petite fente de stator (25), et entre la grande fente de stator (26) et la petite fente de stator (25) sont respectivement symétriques par rapport à une fente de stator moyenne (27), la petite fente de stator (25) d'un côté des deux grandes fentes de stator (26) et la petite fente de stator (25) de l'autre côté des deux grandes fentes de stator (26) sont symétriques par rapport à la ligne centrale des deux grandes fentes de stator (26) le long de la direction de la circonférence du substrat (1), et la fente médiane de stator (27) d'un côté des deux grandes fentes de stator (26) et la fente médiane de stator (27) de l'autre côté des deux grandes fentes de stator (26) sont disposées symétriquement par rapport à la ligne centrale des deux grandes fentes de stator (26) le long de la direction de la circonférence du substrat (1).

12. La stratification de stator à fentes inégales pour utilisation dans un moteur asynchrone triphasé à faible harmonique et à enroulement à tours inégaux selon la revendication 9, **caractérisée en ce que** le nombre de fentes de stator par pôle et par phase dans chaque groupe de fentes de stator (2) est de sept, et le nombre et la disposition des grandes fentes de stator (26), de la fente de stator intermédiaire (27) et des petites fentes de stator (25) sont d'une ou de plusieurs des formes suivantes :
(i) les sept fentes de stator par pôle et par phase dans chaque groupe de fentes de stator (2) comprennent une grande fente de stator (26), deux fentes de stator médianes (27) et quatre petites fentes de stator (25), la grande fente de stator (26) est disposée au milieu du groupe de fentes de stator (2), les deux côtés de la grande fente de stator (26) sont respectivement symétriquement disposés avec deux petites fentes de stator (25), et entre la grande fente de stator (26) et la petite fente de stator (25) sont respectivement symétriquement disposés avec une fente de stator moyenne (27), les deux petites fentes de stator (25) d'un côté de la grande fente de stator (26) et les deux petites fentes de stator (25) de l'autre côté de la grande fente de stator (26) sont disposées symétriquement par rapport à la grande fente de stator (26) en position médiane, et la fente médiane de stator (27) d'un côté de la grande fente de stator (26) et la fente médiane de stator (27) de l'autre côté de la grande fente de stator (26) sont disposées symétriquement par rapport à la grande fente de stator (26) en position médiane ;
(ii) les sept fentes de stator par pôle et par phase dans chaque groupe de fentes de stator (2) comprennent trois grandes fentes de stator (26), deux fentes de stator moyennes (27) et deux petites fentes de stator (25), les trois grandes fentes de stator (26) étant disposées au milieu du groupe de fentes de stator (2), les deux côtés des trois grandes fentes de stator (26) sont respectivement symétriques par rapport à une petite fente de stator (25), et entre la grande fente de stator (26) et la petite fente de stator (25) sont respectivement symétriques par rapport à une fente de stator moyenne (27), la petite fente de stator (25) d'un côté des trois grandes fentes de stator (26) et la petite fente de stator (25) de l'autre côté des trois grandes fentes de stator (26) sont symétriques par rapport à la grande fente de stator (26) en position médiane, et la fente médiane de stator (27) d'un côté des trois grandes fentes de stator (26) et la fente médiane de stator (27) de l'autre côté des trois grandes fentes de stator (26) sont disposées symétriquement par rapport à la grande fente de stator (26) en position médiane ;
(iii) les sept fentes de stator par pôle et par phase dans chaque groupe de fentes de stator (2) comprennent une grande fente de stator (26), quatre fentes de stator intermédiaires (27) et deux petites fentes de stator (25), la grande fente de stator (26) étant disposée au milieu du groupe de fentes de stator (2), les deux côtés de la grande fente de stator (26) sont respectivement symétriques par rapport à une petite fente de stator (25), et entre la grande fente de stator (26) et la petite fente de stator (25) sont respectivement symétriques par rapport à deux fentes de stator moyennes (27), la petite fente de stator (25) d'un côté de la grande fente de stator (26) et la petite fente de stator (25) de l'autre côté de la grande fente de stator (26) sont disposées symétriquement par rapport à la grande fente de stator (26) en position médiane, et les deux fentes médianes de stator (27) d'un côté de la grande fente de stator (26) et les deux fentes médianes de stator (27) de l'autre côté de la grande fente de stator (26) sont disposées symétriquement par rapport à la grande fente de stator (26) en position médiane.

13. La stratification de stator à fentes inégales pour utilisation dans un moteur asynchrone triphasé à faible harmonique et à enroulement à tours inégaux selon la revendication 9, **caractérisée en ce que** le nombre de fentes de stator par pôle et par phase dans chaque groupe de fentes de stator (2) est de huit, et le nombre et la disposition des grandes fentes de stator (26), de la fente de stator médiane (27) et des petites fentes de stator (25) sont d'une ou de plusieurs des formes suivantes :
(i) les huit fentes de stator par pôle et par phase dans chaque groupe de fentes de stator (2) comprennent quatre grandes fentes de stator (26), deux fentes de stator médianes (27) et deux petites fentes de stator (25), les quatre grandes fentes de stator (26) sont disposées au milieu du groupe de fentes de stator (2), les deux côtés des quatre grandes fentes de stator (26) sont respectivement symétriques par rapport à une petite fente de stator (25), et entre la grande fente de stator (26) et la petite fente de stator (25) sont respectivement symétriques par rapport à une fente de stator moyenne (27), la petite fente de stator (25) d'un côté des quatre grandes fentes de stator (26) et la petite fente de stator (25) de l'autre côté des quatre grandes fentes de stator (26) sont symétriques par rapport à la ligne centrale des quatre grandes fentes de stator (26) le long de la direction de la circonférence du substrat (1), et la fente centrale de stator (27) d'un côté des quatre grandes fentes de stator (26) et la fente centrale de stator (27) de l'autre côté des quatre grandes fentes de stator (26) sont symétriques par rapport à la ligne centrale des quatre grandes fentes de stator (26) le long de la direction de la circonférence du substrat (1) ;
(ii) les huit fentes de stator par pôle et par phase dans chaque groupe de fentes de stator (2) comprennent deux grandes fentes de stator (26), quatre fentes de stator moyennes (27) et deux petites fentes de stator (25), les deux grandes fentes de stator (26) étant disposées au milieu du groupe de fentes de stator (2), les deux côtés des deux grandes fentes de stator (26) sont respectivement symétriques par rapport à une petite fente de stator (25), et entre la grande fente de stator (26) et la petite fente de stator (25) sont respectivement symétriques par rapport à deux fentes de stator moyennes (27), la petite fente de stator (25) d'un côté des deux grandes fentes de stator (26) et la petite fente de stator (25) de l'autre côté des deux grandes fentes de stator (26) sont disposées symétriquement par rapport à la ligne centrale des deux grandes fentes de stator (26) le long de la direction de la circonférence du substrat (1), et les deux fentes médianes de stator (27) d'un côté des deux grandes fentes de stator (26) et les deux fentes médianes de stator (27) de l'autre côté des deux grandes fentes de stator (26) sont disposées symétriquement par rapport à la ligne centrale des deux grandes fentes de stator (26) le long de la direction de la circonférence du substrat (1).

14. La stratification de stator à fentes inégales pour utilisation dans un moteur asynchrone triphasé à faible harmonique et à enroulement à tours inégaux selon la revendication 9, **caractérisée en ce que** le nombre de fentes de stator par pôle et par phase dans chaque groupe de fentes de stator (2) est de neuf, et le nombre et la disposition des grandes fentes de stator (26), de la fente de stator intermédiaire (27) et des petites fentes de stator (25) sont d'une ou de plusieurs des formes suivantes :
(i) les neuf fentes de stator par pôle et par phase dans chaque groupe de fentes de stator (2) comprennent une grande fente de stator (26), deux fentes de stator médianes (27) et six petites fentes de stator (25), la grande fente de stator (26) est disposée au milieu du groupe de fentes de stator (2), les deux côtés de la grande fente de stator (26) sont respectivement symétriquement disposés avec trois petites fentes de stator (25), et entre la grande fente de stator (26) et la petite fente de stator (25) sont respectivement symétriquement disposés avec une fente de stator moyenne (27), les trois petites fentes de stator (25) d'un côté de la grande fente de stator (26) et les trois petites fentes de stator (25) de l'autre côté de la grande fente de stator (26) sont disposées symétriquement par rapport à la grande fente de stator (26) en position médiane, et la fente médiane de stator (27) d'un côté de la grande fente de stator (26) et la fente médiane de stator (27) de l'autre côté de la grande fente de stator (26) sont disposées symétriquement par rapport à la grande fente de stator (26) en position médiane ;
(ii) les neuf fentes de stator par pôle et par phase dans chaque groupe de fentes de stator (2) comprennent trois grandes fentes de stator (26), deux fentes de stator intermédiaires (27) et quatre petites fentes de stator (25), les trois grandes fentes de stator (26) étant disposées au milieu du groupe de fentes de stator (2), les deux côtés des trois grandes fentes de stator (26) sont respectivement symétriques par rapport à deux petites fentes de stator (25), et entre la grande fente de stator (26) et la petite fente de stator (25) est respectivement symétrique par rapport à une fente de stator moyenne (27), les deux petites fentes de stator (25) d'un côté des trois grandes fentes de stator (26) et les deux petites fentes de stator (25) de l'autre côté des trois grandes fentes de stator (26) sont disposées symétriquement par rapport à la grande fente de stator (26) en position médiane, et la fente médiane de stator (27) d'un côté des trois grandes fentes de stator (26) et la fente médiane de stator (27) de l'autre côté des trois grandes fentes de stator (26) sont disposées symétriquement par rapport à la grande fente de stator (26) en position médiane ;
(iii) les neuf fentes de stator par pôle et par phase dans chaque groupe de fentes de stator (2) comprennent cinq grandes fentes de stator (26), deux fentes de stator intermédiaires (27) et deux petites fentes de stator (25), les cinq grandes fentes de stator (26) sont disposées au milieu du groupe de fentes de stator (2), les deux côtés des cinq grandes fentes de stator (26) sont respectivement symétriques par rapport à une petite fente de stator (25), et entre la grande fente de stator (26) et la petite fente de stator (25) sont respectivement symétriques par rapport à une fente de stator moyenne (27), la petite fente de stator (25) d'un côté des cinq grandes fentes de stator (26) et la petite fente de stator (25) de l'autre côté des cinq grandes fentes de stator (26) sont symétriques par rapport à la grande fente de stator (26) en position médiane, et la fente médiane de stator (27) d'un côté des cinq grandes fentes de stator (26) et la fente médiane de stator (27) de l'autre côté des cinq grandes fentes de stator (26) sont disposées symétriquement par rapport à la grande fente de stator (26) en position médiane ;
(iv) les neuf fentes de stator par pôle et par phase dans chaque groupe de fentes de stator (2) comprennent une grande fente de stator (26), quatre fentes de stator moyennes (27) et quatre petites fentes de stator (25), la grande fente de stator (26) étant disposée au milieu du groupe de fentes de stator (2), les deux côtés de la grande fente de stator (26) sont respectivement symétriquement disposés avec deux petites fentes de stator (25), et entre la grande fente de stator (26) et la petite fente de stator (25) sont respectivement symétriquement disposés avec deux fentes de stator moyen (27), les deux petites fentes de stator (25) d'un côté de la grande fente de stator (26) et les deux petites fentes de stator (25) de l'autre côté de la grande fente de stator (26) sont disposées symétriquement par rapport à la grande fente de stator (26) en position médiane, et les deux fentes médianes de stator (27) d'un côté de la grande fente de stator (26) et les deux fentes médianes de stator (27) de l'autre côté de la grande fente de stator (26) sont disposées symétriquement par rapport à la grande fente de stator (26) en position médiane ;
(v) les neuf fentes de stator par pôle et par phase dans chaque groupe de fentes de stator (2) comprennent trois grandes fentes de stator (26), quatre fentes de stator moyennes (27) et deux petites fentes de stator (25), les trois grandes fentes de stator (26) étant disposées au milieu du groupe de fentes de stator (2), les deux côtés des trois grandes fentes de stator (26) sont respectivement symétriques par rapport à une petite fente de stator (25), et entre la grande fente de stator (26) et la petite fente de stator (25) sont respectivement symétriques par rapport à deux fentes de stator moyennes (27), la petite fente de stator (25) d'un côté des trois grandes fentes de stator (26) et la petite fente de stator (25) de l'autre côté des trois grandes fentes de stator (26) sont disposées symétriquement par rapport à la grande fente de stator (26) en position médiane, et les deux fentes médianes de stator (27) d'un côté des trois grandes fentes de stator (26) et les deux fentes médianes de stator (27) de l'autre côté des trois grandes fentes de stator (26) sont disposées symétriquement par rapport à la grande fente de stator (26) en position médiane ;
(vi) les neuf fentes de stator par pôle et par phase dans chaque groupe de fentes de stator (2) comprennent une grande fente de stator (26), six fentes de stator intermédiaires (27) et deux petites fentes de stator (25), la grande fente de stator (26) étant disposée au milieu du groupe de fentes de stator (2), les deux côtés de la grande fente de stator (26) sont respectivement symétriques par rapport à une petite fente de stator (25), et entre la grande fente de stator (26) et la petite fente de stator (25) sont respectivement symétriques par rapport à trois fentes de stator moyen (27), la petite fente de stator (25) d'un côté de la grande fente de stator (26) et la petite fente de stator (25) de l'autre côté de la grande fente de stator (26) sont disposées symétriquement par rapport à la grande fente de stator (26) en position médiane, et les trois fentes médianes de stator (27) d'un côté de la grande fente de stator (26) et les trois fentes médianes de stator (27) de l'autre côté de la grande fente de stator (26) sont disposées symétriquement par rapport à la grande fente de stator (26) en position médiane.

15. La stratification de stator à fentes inégales pour utilisation dans un moteur asynchrone triphasé à faible harmonique et à enroulement à tours inégaux selon l'une quelconque des revendications 1 à 14, **caractérisée en ce que** 8 à 16 rainures de bouclage (3) sont uniformément disposées sur la surface de l'anneau extérieur du substrat (1) le long de la direction de la circonférence du substrat (1) pour installer la boucle, la base inférieure de la rainure de bouclage (3) est définie comme une ligne droite, la base supérieure de la rainure de la boucle (3) est naturellement ouverte dans le sens de la circonférence du substrat (1), la largeur de la rainure de la boucle (3) est de 14 à 25 mm, la hauteur de la rainure de la boucle (3) est de 3 à 5 mm, l'angle entre l'hypoténuse et la base de la rainure de la boucle (3) est de 15 à 25°, et une rainure de traitement (4) est placée au fond de l'une quelconque des rainures de la boucle (3).
